# EUROPEAN PATENT APPLICATION

(11) **EP 4 513 335 A1**
(43) Date of publication of application: **26.02.2025**
(21) Application number: 24185435.5
(22) Date of filing: 28.06.2024
(51) Int. Cl.: G06F 9/50

(54) **HARDWARE GUIDANCE FOR EFFICIENTLY SCHEDULING WORKLOADS TO THE OPTIMAL COMPUTE MODULE**

(30) Priority: 19.08.2023 IN 202341055646; 30.09.2023 US 202318375492
(71) Applicant: INTEL Corporation, Santa Clara, CA 95054 (US)
(72) Inventor: GUNTHER, Stephen H., Beaverton, OR, 97007 (US); GUPTA, Praveen Kumar, Hillsboro, OR, 97124 (US); KUMAR P, Mahesh, 560103 Bangalore (IN); GUPTA, Monica, Hillsboro, OR, 97124 (US); FENGER, Russell, Beaverton, OR, 97007 (US); GRANIELLO, Benjamin, Gilbert, AZ, 85234 (US)
(74) Representative: Samson & Partner Patentanwälte mbB

(57) **Abstract**

Techniques for providing hardware provided guidance for efficiently scheduling workloads to an optimal compute module are described. In some examples, hardware includes a first plurality of physical processor cores of a first type to implement a plurality of logical processor cores of the first type; a second plurality of physical processor cores of a second type, wherein each core of the second type is to implement a plurality of logical processor cores of the second type; a power management unit to monitor telemetry data on the first plurality of processor cores and second plurality of processor cores and to update hardware feedback telemetry data; and thread runtime telemetry circuitry to provide a hint using the hardware feedback telemetry data to consolidate tasks on one of core types.

## Description

### BACKGROUND

With the advent of hybrid processors running on shrink wrap operating systems, there is a need for the operating system to understand the capabilities of the different processor cores in the system. On Intel platforms, Intel Thread Director technology provides this function, providing a means for the operating system to use the optimal core for a given task, without requiring the operating system to understand the underlying architecture.

Products with a large number of compute IPs may encapsulate those IPs in modules, with all IPs in a module sharing a common connection to a fabric and the rest of the SOC. Because the power cost of that shared logic may be largely independent of the number of active IPs in that module, there is often a power and performance tradeoff associated with how workloads that require the use of many of those compute IPs are scheduled across those modules. For example, some types of workloads might benefit when all work is scheduled on a single module, while other types of workloads might benefit from having the work scheduled across multiple modules.

In some products, it may be desirable to design and integrate compute modules that have very different power and performance capabilities. For example, a product might include modules that have very high performance capability, but maybe at the cost of lower energy efficiency. Other modules might be targeted at having higher energy efficiency capability, but with a tradeoff of providing lower performance capability. In such a design, this "low power island" module might provide great energy efficiency for work that can be contained on that module, but only for work that can be fully contained on that module.

In a general purpose system, the software scheduling the work generally doesn't understand, or what to understand, these lower level implementation details - the software would like to be able to use a common scheduling approach without needing to concern itself with these product specific details.

### BRIEF DESCRIPTION OF DRAWINGS

Various examples in accordance with the present disclosure will be described with reference to the drawings, in which:
FIG. 1 illustrates a computer system including a processor core according to some examples.
FIG. 2 illustrates thread runtime telemetry circuitry according to examples of the disclosure.
FIG. 3 illustrates an example format of a control register to enable thread runtime telemetry according to some examples.
FIG. 4 illustrates a computer system including a first plurality of physical processor cores of a first type and a second plurality of physical processor cores of a second type, where each core of the first type is to implement a plurality of logical processor cores according to some examples.
FIGS. 5A-5B illustrate an example format for hardware feedback telemetry data (e.g., per logical processor core) according to some examples.
FIG. 6 illustrates a hardware feedback data structure for hardware feedback telemetry data storing an energy efficiency capability value and a performance capability value for each logical processor core of a computer system according to some examples.
FIG. 7 is a flow diagram illustrating operations of a method of performing dynamic simultaneous multi-threading (SMT) scheduling (e.g., including SMT core isolation) according to some examples.
FIG. 8 is a flow diagram illustrating operations of another method of performing dynamic simultaneous multi-threading (SMT) scheduling according to some examples.
FIG. 9 illustrates examples of a processing apparatus.
FIG. 10 illustrates examples of a block diagram of a portion of a system.
FIG. 11 illustrates examples of a system.
FIG. 12 illustrates examples of task movement.
FIG. 13 illustrates examples of a method.
FIG. 14 illustrates examples of interactions between actors in the potential updating of telemetry data.
FIG. 15 illustrates examples of interactions between actors in the potential updating of telemetry data.
FIG. 16 illustrates an example computing system.
FIG. 17 illustrates a block diagram of an example processor and/or System on a Chip (SoC) that may have one or more cores and an integrated memory controller.
FIG. 18 is a block diagram illustrating a computing system 1800 configured to implement one or more aspects of the examples described herein.
FIG. 19A illustrates examples of a parallel processor.
FIG. 19B illustrates examples of a block diagram of a partition unit.
FIG. 19C illustrates examples of a block diagram of a processing cluster within a parallel processing unit.
FIG. 19D illustrates examples of a graphics multiprocessor in which the graphics multiprocessor couples with the pipeline manager of the processing cluster.
FIGS. 20A-20C illustrate additional graphics multiprocessors, according to examples.
FIG. 21 shows a parallel compute system according to some examples.
FIGS. 22A-22B illustrate a hybrid logical/physical view of a disaggregated parallel processor, according to examples described herein.
FIG. 23(A) is a block diagram illustrating both an example in-order pipeline and an example register renaming, out-of-order issue/execution pipeline according to examples.
FIG. 23(B) is a block diagram illustrating both an example in-order architecture core and an example register renaming, out-of-order issue/execution architecture core to be included in a processor according to examples.
FIG. 24 illustrates examples of execution unit(s) circuitry, such as execution unit(s) circuitry.
FIG. 25 is a block diagram of a register architecture according to some examples.
FIGS. 26A-26B illustrate thread execution logic including an array of processing elements employed in a graphics processor core according to examples described herein.
FIG. 27 illustrates an additional execution unit, according to an example.
FIG. 28 is a block diagram of another example of a graphics processor.
FIG. 29 is a block diagram illustrating an IP core development system that may be used to manufacture an integrated circuit to perform operations according to some examples.

### DETAILED DESCRIPTION

The present disclosure relates to methods, apparatus, systems, and non-transitory computer-readable storage media for biasing.

Some systems provide an operating system guidance on the performance and energy efficiency capability of each of the cores in the system. This information is used by the operating system in determining where to schedule a software thread that is ready to run. But it doesn't currently have the ability guide the operating system to schedule a class of work only on a specific module(s). Existing solutions may guide the OS to spread work across multiple modules, which may be lower performance and/or less energy efficient than containing that work on one or more specific modules.

Examples detailed herein add a capability to monitor (over time) the behavior of all work running on the compute IPs on the system, determine the compute capability required, and provide a hint to the operating system to consolidate all work on specific modules when that work runs better when contained on those specific modules.

In addition to the adding the telemetry and logic required to make these decisions, some examples create a new hint to be communicated to the OS to consolidate the work currently in the system onto a subset of the available compute modules.

Examples extend the capabilities of providing the operating system with guidance on the optimal scheduling of the entire current set of active threads, rather than making suboptimal decisions at the individual thread level.

As an example, consolidating the work that fits energy efficiently on the low power island on a product is expected to provide several 100mw lower power than would be achieved with existing scheduling hints and OS scheduler behavior. This substantially increases the energy efficiency of key classes of workloads.

In some examples, a power management unit (Punit/PCODE) coordinates IP states to achieve lowest power state for the processor and exiting lower power states (e.g., after low power and/or thermal issues are relaxed). Additionally, the SoC power management unit decides when each of throttling actions are to be engaged. In some examples, PCODE waits for certain time between the action (wait time/hysteresis can be unique for each action) and/or PCODE can choose to observe the system power/temperature before measure impact of last action before engaging the next action. Additionally, PCODE may engage many actions in parallel.

A (e.g., hardware) processor (e.g., having one or more cores) may execute instructions (e.g., a thread of instructions) to operate on data, for example, to perform arithmetic, logic, or other functions. For example, software may request an operation and a hardware processor (e.g., a core or cores thereof) may perform the operation in response to the request. Software may request execution of a (e.g., software) thread. An operating system (OS) may include a scheduler (e.g., "O.S. scheduler") to schedule execution of (e.g., software) threads on a hardware processor, e.g., to schedule execution of (e.g., software) threads on one or more logical processors (e.g., one or more logical processor cores) of the hardware processor. Each logical processor may be referred to as a respective central processing unit (CPU).

In certain examples, a hardware processor implements multi-threading (e.g., multithreading), e.g., executing multiple threads simultaneously on one physical processor core. In certain examples, multi-threading is temporal multi-threading (e.g., super-threading), for example, where only one thread of instructions can execute in any given pipeline stage at a time. In certain examples, multi-threading is simultaneous multi-threading (SMT) (e.g., Intel^{®} Hyper-Threading), for example, where instructions from more than one thread can be executed in any given pipeline stage at a time. In certain examples, SMT allows two (or more) concurrent threads to run on a single physical processor core, e.g., the single physical processor core being exposed to software (e.g., an operating system) as a first logical processor core to execute a first thread and a second logical processor core to execute a second thread.

In certain examples, SMT improves multi-threaded (MT) performance by virtualizing a physical processor core (e.g., an SMT physical processor core) into a plurality of logical processors (e.g., logical processor cores). In certain examples, all logical processors (e.g., logical processors cores) of a hardware processor are exposed to an operating system (executing on the hardware processor) as individual logical processors (e.g., logical processor cores). In certain examples, this abstraction allows the operating system to schedule software threads across all logical processors (e.g., logical processor cores) available, thereby maximizing throughput and multi-threaded (MT) performance. However, in certain examples there is an issue with the underlying SMT physical processor core's resources (e.g., fetch circuit, decode circuit, execution circuit, etc.) are shared among the logical processors, and thus performance of each individual active logical processor (e.g., logical processor core) is significantly lower than the performance of the physical SMT core when another "sibling" logical thread(s) is active on the same physical SMT core (e.g., where there are a plurality of logical processor cores being active on the same physical SMT core). This leads to poor performance and responsiveness on certain workloads, e.g., lightly threaded workloads initiated by user, when concurrent background threads start competing for processor (e.g., central processing unit (CPU)) time on the same SMT physical processor core. Further, certain processors (e.g., as returned by a core type request by the OS) do not differentiate between a logical core and physical (e.g., SMT) core.

In certain examples, an application (e.g., software) that has a user start it and/or interact with it is referred to as a foreground application, e.g., and an application that runs independently of a user is referred to as a background application. In certain examples, foreground versus background is a priority level assigned to programs running (e.g., not "stopped") in a multitasking environment, e.g., where the foreground (FG) contains the application(s) the user is working on (for example, an application that is to receive input(s) from a user and/or provide output to the user, e.g., via a graphical user interface (GUI)), and the background (BG) contains the application(s) that are run behind the system (e.g., without user interaction).

Examples herein are directed to methods and circuitry to allow a thread of (e.g., foreground) application to use a physical SMT core in isolation (e.g., disabling all but the single logical processor core of the physical SMT core being used by the thread), e.g., but if the (e.g., foreground) application is only using a certain threshold of (e.g., 2) cores, then allow another (e.g., background) (e.g., MT) application to use the rest of the free (e.g., unused) physical SMT core(s) for its usage, e.g., maximizing both foreground and background performance.

In certain examples, an asymmetric platform (e.g., processor) utilizes different types of cores, e.g., (i) a first type of processor core (e.g., a lower power, lower maximum frequency, and/or more energy efficient core) (e.g., an efficient core ("E-core")) (e.g., "little" core or "small" core) and (ii) and a second, higher performance type of processor core (e.g., a higher power and/or higher frequency core) (e.g., a performance core ("P-core")) (e.g., "big" core). In certain examples, one of the types of cores utilizes SMT (e.g., each of its physical processor cores implements a plurality of logical processor cores), for example, and the other type of core does not use SMT (e.g., each of its physical processor cores implements only a single logical processor core). In certain examples, an efficient core ("E-core") runs at a (maximum) lower frequency, and thus execute instructions with lower performance compared to a performance core ("P-core").

In certain examples, this issue with the underlying SMT physical processor core's resources being shared among the logical processors causing the performance of each individual active logical processor (e.g., logical processor core) to be significantly lower than the performance of the physical SMT core when another "sibling" logical thread(s) is active on the same physical SMT core is even more prevalent on hybrid platforms (e.g., hybrid processors) that include a first set of cores that do not support SMT and a second set of cores that support SMT. For example, in orderto maximize the performance for foreground applications (e.g., foreground processes) on a hybrid platform (e.g., hybrid processor), certain OSes attempt to restrict background tasks to non-SMT cores (e.g., E-cores) via a corresponding (e.g., "small only") scheduling policy. However, such a scheduling policy causes a significant performance degradation for user-initiated multi-threaded workloads (e.g., compiler, render, etc.) running as "background". Hence there is a need for a dynamic solution that delivers core isolation for lightly threaded foreground tasks while not compromising performance on user-initiated MT background tasks when no critical foreground task is active on the system.

Examples herein are directed to methods and circuitry to maximize SMT performance on hybrid system (e.g., processor) platforms by: (i) providing user-initiated (e.g., lightly threaded) critical compute intensive tasks in the foreground the necessary SMT core isolation (e.g., disabling all but a single logical processor core of a physical SMT core that is to be used) on SMT core(s) (e.g., certain P-cores) when it runs concurrently in a multi-threaded background (e.g., "noisy") environment, and/or (ii) allowing user-initiated critical multi-threaded background tasks (e.g., compilation, render, etc.) to run on SMT core(s) (e.g., certain P-cores) when desired, e.g., without being restricted by a static (e.g., "small only") scheduling configuration for background tasks. In certain examples, the scheduling configuration is selected with an operating system, e.g., an operating system's scheduler.

One software-based solution to address this issue includes static OS core parking policies that attempts to provide core isolation by parking logical threads based on thread concurrency and utilization and static scheduling policies while restricting background tasks only to core(s) that do not support SMT (e.g., certain E-cores). However, such static OS parking policies fail to deliver necessary core isolation for critical threads when they run concurrently in a multi-threaded background environment, e.g., high concurrency and overall utilization (for example, average CPU utilization, e.g., "C0"). Even in absence of critical tasks in foreground, configuring static OS scheduling policy for background tasks to "small only" significantly degrades performance of user-initiated MT tasks (e.g., compilation, render, etc.) that require high performance. Certain examples herein allow an OS to implement SMT isolation support, e.g., while running concurrent scenarios of mixed quality of service (QoS) (e.g., both foreground and background applications).

Certain examples herein detect instances when core isolation is to be used based on concurrency (e.g., of threads running on the processor) and/or utilization of the user-initiated (e.g., in contrast to system-initiated) critical foreground tasks running on the system and the nature of the system (e.g., system-on-a-chip (SoC)) workload running on the system (e.g., sustained SoC workload due to high multi-threaded background activity). When lightly threaded compute intensive critical tasks are detected to run in a noisy sustained background environment, certain examples herein isolate the SMT core's resources to dedicate them for the critical task scheduled on the active logical processor of the SMT core by force parking sibling logical processor(s) that share the SMT core's resources, e.g., which temporarily restricts compute resources for the multi-threaded background tasks running on the system to the subset of remaining available cores. When compute requirements on the critical task change due to low utilization and/or highly concurrency, certain examples herein do not apply the core isolation via SMT sibling parking, e.g., and a less restrictive (e.g., small or idle) scheduling policy is used by the OS. In one example, a "small or idle" scheduling policy causes the scheduling of a thread to attempt to schedule a task (e.g., thread) to an idle efficient core (e.g., E-core) (e.g., small core) (e.g., non-SMT core) and if none are available (e.g., no efficient cores are idle), then to attempt to schedule the task to an idle performance core (e.g., P-core) (e.g., big core) (e.g., SMT core). In another example, a scheduling policy causes the scheduling of a thread to attempt to schedule a task (e.g., thread) to an idle non-SMT physical core and if none are available (e.g., no non-SMT cores are idle), then to attempt to schedule the task to an idle SMT physical core, for example, and if none of those are available, to attempt to schedule the task to an idle logical core of an SMT core.

In certain examples, a processor generates "capability" values to differentiate logical processors (e.g., CPUs) with different (e.g., current) computing capability (e.g., computing throughput). In certain examples, a processor generates capability values that are normalized in a (e.g., 256, 512, 1024, etc.) range. In certain examples, a processor is able to estimate how busy and/or energy efficient a logical processor (e.g., CPU) is (e.g., on a per class basis) via the capability values, e.g., and an OS scheduler is to utilize the capability values when evaluating performance versus energy trade-offs for scheduling threads.

In certain examples, the performance (Perf) capability value of a logical processor (e.g., CPU) represents the amount of work it can absorb when running at its highest frequency, e.g., compared to the most capable logical processor (e.g., CPU) of the system. In certain examples, the performance (Perf) capability value for a single logical processor (e.g., CPU) is a value (e.g., an 8-bit value indicating values of 0 to 255) that specifies the relative performance level of the logical processor, e.g., where higher values indicate higher performance and/or the lowest performance level of 0 indicates a recommendation to the OS to not schedule any threads on it for performance reasons.

In certain examples, the energy efficiency (EE) capability value of a logical processor (e.g., CPU) represents its energy efficiency (e.g., in performing processing). In certain examples, the energy efficiency (EE) capability value of a single logical processor (e.g., CPU) is a value (e.g., an 8-bit value indicating values of 0 to 255) that specifies the relative energy efficiency level of the logical processor, e.g., where higher values indicate higher energy efficiency and/or the lowest energy efficiency capability of 0 indicates a recommendation to the OS to not schedule any software threads on it for efficiency reasons. In certain examples, an energy efficiency capability of the maximum value (e.g., 255) indicates which logical processors have the highest relative energy efficiency capability. In certain examples, the maximum value (e.g., 255) is an explicit recommendation for the OS to consolidate work on those logical processors for energy efficiency reasons.

In certain examples, the functionality discussed herein (e.g., the core isolation via the parking of one or more SMT sibling logical core) is implemented as a hardware-based solution, e.g., using thread runtime telemetry (e.g., at nanosecond granularity) circuitry (e.g., Intel^{®} Thread Director circuitry, e.g., microcontroller) to dynamically park an SMT core's logical core sibling(s) (e.g., when concurrent scenarios are executed). In certain examples, a processor (e.g., via non-transitory machine-readable medium that stores power management code (e.g., p-code)) determines, using per energy performance preference (EPP) group utilization and quality of service (QoS), if there is limited threaded high QoS and/or low EPP activity (e.g., foreground threads) and multi-threaded low QoS and/or high EPP activity (e.g., background threads). In certain examples, if so, then the processor (e.g., via non-transitory machine-readable medium that stores power management code (e.g., p-code)) will populate a data structure that stores telemetry data (e.g., per logical processor core) to cause the dynamic parking of an SMT core's logical core sibling(s). In certain examples, such a data structure stores the data of thread runtime telemetry circuitry, e.g., the data of (i) Hardware Guide Scheduler (HGS) (or HGS+) circuitry or (ii) Thread Director circuitry. In certain examples, the processor is to cause a write of a (e.g., capability) value (e.g., zero or about zero) to the entry or entries of the sibling logical processor core(s) of a logical processor core of an SMT physical processor core to hint to the OS (e.g., to the OS scheduler) to avoid using those sibling logical processor core(s), e.g., to avoid scheduling a thread on those sibling logical processor core(s).

In certain examples, the thread runtime telemetry circuitry (e.g., (i) Hardware Guide Scheduler (HGS) (or HGS+) circuitry or (ii) Thread Director circuitry) (e.g., via its corresponding data structure) communicates numeric performance and numeric power efficiency capabilities of each logical core in a certain (e.g., 0 to 255) (e.g., 0 to 511) (e.g., 0 to 1023) range to the OS in real-time. In certain examples, when either the performance or energy capabilities efficiency of a logical processor core (e.g., CPU) is zero, the hardware dynamically adapts to the current instruction mix and recommends not scheduling any tasks on such logical core.

In certain examples, the functionality discussed herein (e.g., the core isolation via the parking of one or more SMT sibling logical cores) is implemented as a non-transitory machine-readable medium that stores system code, e.g., system code that, when executed, dynamically parks an SMT core's logical core sibling(s). In one example, the non-transitory machine-readable medium stores a system software driver (e.g., Intel^{®} Dynamic Tuning Technology (DTT) software driver), for example, a system software driver that, when executed, dynamically optimizes the system for performance, battery life, and thermals.

Examples herein thus deliver unique hybrid processor (e.g., utilizing SMT cores and non-SMT cores) differentiation by delivering significant performance gains by better utilization of cores that have SMT (e.g., hyper-threading) enabled. Examples herein utilize core isolation via the parking of one or more SMT sibling logical cores to deliver significant responsiveness and performance gains during concurrent usages involving lightly threaded tasks (e.g., application launch, page load, speedometer (e.g., that tests a browser's web app responsiveness by timing simulated user interactions), etc.) running with multi-threaded background tasks (e.g., compilation and/or render in background). Examples here are directed to a less restrictive scheduling for processors (e.g., platforms) that allows user-initiated multi-threaded background tasks (e.g., compiler and/or renderer) to take advantage of SMT processor cores when desired.

Certain (e.g., default) OS scheduling policies on hybrid platforms (e.g., utilizing SMT cores and non-SMT cores) do not provide flexibility to customers. In certain examples, scheduling background thread(s) on a less powerful non-SMT physical processor core (e.g., efficient core (E-core)) (e.g., small core) only is too restrictive because the (e.g., multi-threaded) background work initiated by a user (e.g., compile and/or render) cannot take advantage of a more powerful SMT physical processor core (e.g., performance core (P-core)) (e.g., big core). In certain examples, scheduling background thread(s) on a less powerful non-SMT physical processor core (e.g., efficient core (E-core)) (e.g., small core) or an idle SMT physical processor core (e.g., performance core (P-core)) (e.g., big core) impacts foreground (FG) performance during concurrent usages (e.g., due to sharing of SMT core with critical threads from lack of core isolation). The above shortcomings are overcome with dynamic SMT scheduling disclosed herein, e.g., that provides core isolation via forced core parking of logical SMT sibling processors when desired (e.g., when necessary) while allowing a less restrictive (e.g., "small or idle") scheduling policy for user-initiated background tasks (e.g., compiler/render, etc.) running on the system to take advantage of SMT physical processor cores (e.g., performance cores (P-cores)) (e.g., big cores). Being able to dynamically achieve SMT isolation at run time allows an OS (e.g., OS scheduler) to use a less restrictive scheduling policy (e.g., "small or idle") for user-initiated background tasks without concerns on impact to foreground responsiveness.

Certain examples herein do not totally disable SMT (e.g., for an entire processor), e.g., do not disable SMT either through a hardware initialization manager (e.g., Basic Input/Output System (BIOS) firmware or Unified Extensible Firmware Interface (UEFI) firmware) or by having the OS only schedule work on one of the threads.

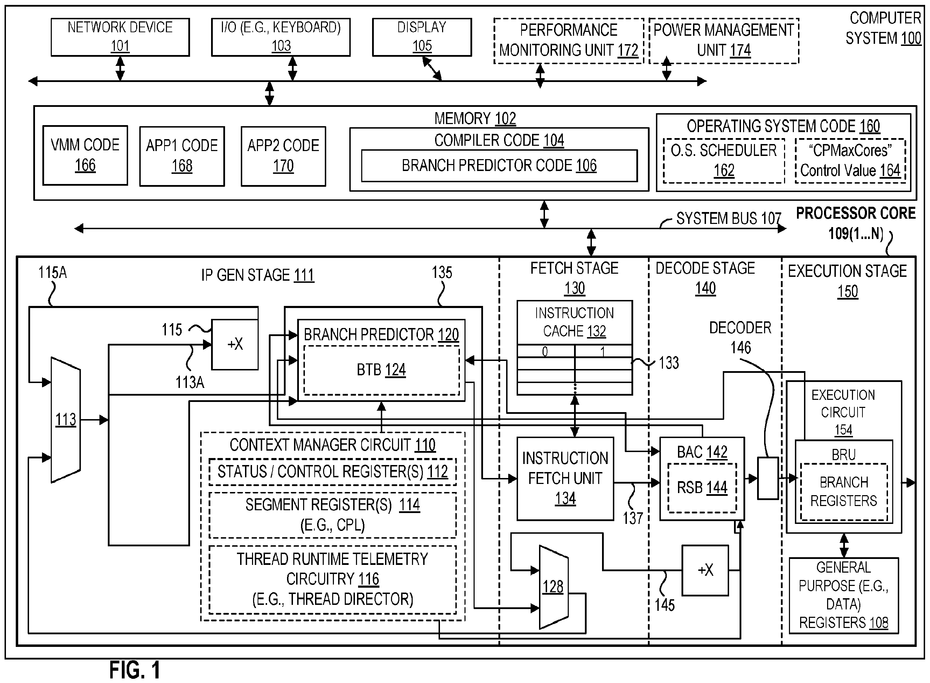

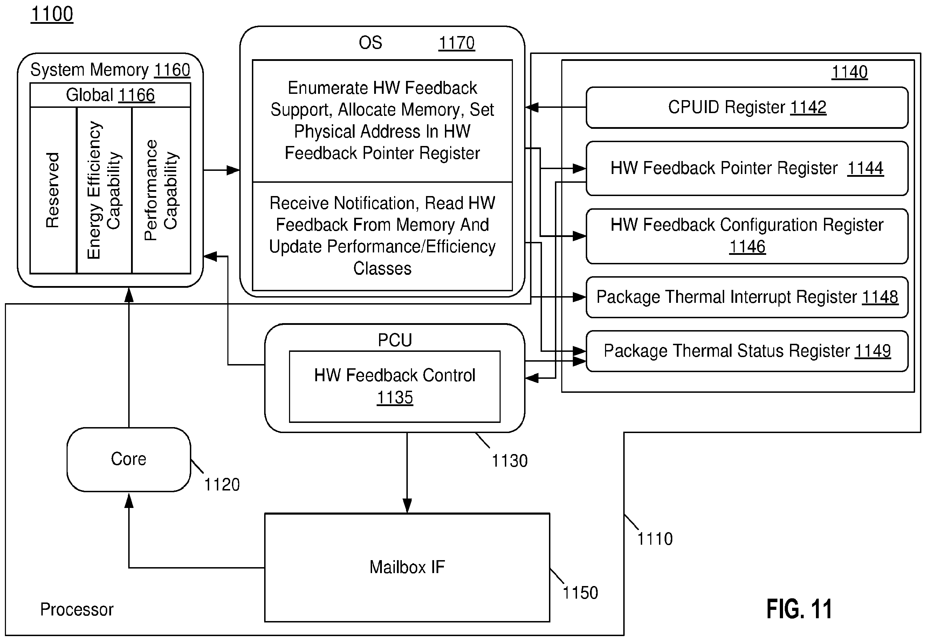

FIG. 1 illustrates a computer system including a processor core according to some examples. Processor core 109 includes multiple components (e.g., microarchitectural prediction and caching mechanisms) that may be shared by multiple contexts (e.g., virtualized as a plurality of logical processors implemented on a single SMT core). For example, branch target buffer (BTB) 124, instruction cache 132, and/or return stack buffer (RSB) 144 may be shared by multiple contexts. Certain examples include a context manager circuit 110 to maintain multiple unique states associated with a plurality of contexts simultaneously, and switch active contexts among those tracked by the context manager circuit. In certain examples, processor core 109 is an instance of processor core 1190 in FIG. 11B.

Depicted computer system 100 includes a branch predictor 120 and a branch address calculator 142 (BAC) in a pipelined processor core 109(1)-109(N) according to examples of the disclosure. Referring to FIG. 1, a pipelined processor core (e.g., 109(1)) includes an instruction pointer generation (IPtr Gen) stage 111, a fetch stage 130, a decode stage 140, and an execution stage 150. In one example, computer system 100 includes multiple cores 109(1-N), where N is any positive integer. In another example, computer system 100 includes a single core.

In certain examples, each processor core 109(1-N) instance supports multi-threading (e.g., executing two or more parallel sets of operations or threads on a first and second logical core), and may do so in a variety of ways including time sliced multi-threading, simultaneous multi-threading (e.g., where a single physical core provides a logical core for each of the threads that physical core is simultaneously multi-threading), or a combination thereof (e.g., time sliced fetching and decoding and simultaneous multi-threading thereafter). In the depicted example, each single processor core 109(1) to 109(N) includes an instance of branch predictor 120. Branch predictor 120 may include a branch target buffer (BTB) 124.

In certain examples, branch target buffer 124 stores (e.g., in a branch predictor array) the predicted target instruction corresponding to each of a plurality of branch instructions (e.g., branch instructions of a section of code that has been executed multiple times). In the depicted example, a branch address calculator (BAC) 142 is included which accesses (e.g., includes) a return stack buffer 144 (RSB). In certain examples, return stack buffer 144 is to store (e.g., in a stack data structure of last data in is the first data out (LIFO)) the return addresses of any CALL instructions (e.g., that push their return address on the stack).

Branch address calculator (BAC) 142 is used to calculate addresses for certain types of branch instructions and/or to verify branch predictions made by a branch predictor (e.g., BTB). In certain examples, the branch address calculator performs branch target and/or next sequential linear address computations. In certain examples, the branch address calculator performs static predictions on branches based on the address calculations.

In certain examples, the branch address calculator 142 contains a return stack buffer 144 to keep track of the return addresses of the CALL instructions. In one example, the branch address calculator attempts to correct any improper prediction made by the branch predictor 120 to reduce branch misprediction penalties. As one example, the branch address calculator verifies branch prediction for those branches whose target can be determined solely from the branch instruction and instruction pointer.

In certain examples, the branch address calculator 142 maintains the return stack buffer 144 utilized as a branch prediction mechanism for determining the target address of return instructions, e.g., where the return stack buffer operates by monitoring all "call subroutine" and "return from subroutine" branch instructions. In one example, when the branch address calculator detects a "call subroutine" branch instruction, the branch address calculator pushes the address of the next instruction onto the return stack buffer, e.g., with a top of stack pointer marking the top of the return stack buffer. By pushing the address immediately following each "call subroutine" instruction onto the return stack buffer, the return stack buffer contains a stack of return addresses in this example. When the branch address calculator later detects a "return from subroutine" branch instruction, the branch address calculator pops the top return address off of the return stack buffer, e.g., to verify the return address predicted by the branch predictor 120. In one example, for a direct branch type, the branch address calculator is to (e.g., always) predict taken for a conditional branch, for example, and if the branch predictor does not predict taken for the direct branch, the branch address calculator overrides the branch predictor's missed prediction or improper prediction.

In certain examples, core 109 includes circuitry to validate branch predictions made by the branch predictor 120. Each branch predictor 120 entry (e.g., in BTB 124) may further include a valid field and a bundle address (BA) field which are used to increase the accuracy and validate branch predictions performed by the branch predictor 120, as is discussed in more detail below. In one example, the valid field and the BA field each consist of one bit one-bit fields. In other examples, however, the size of the valid and BA fields may vary. In one example, a fetched instruction is sent (e.g., by BAC 142 from line 137) to the decoder 146 to be decoded, and the decoded instruction is sent to the execution circuit (e.g., unit) 154 to be executed.

Depicted computer system 100 includes a network device 101, input/output (I/O) circuit 103 (e.g., keyboard), display 105, and a system bus (e.g., interconnect) 107.

In one example, the branch instructions stored in the branch predictor 120 are pre-selected by a compiler as branch instructions that will be taken. In certain examples, the compiler code 104, as shown stored in the memory 102 of FIG. 1, includes a sequence of code that, when executed, translates source code of a program written in a high-level language into executable machine code. In one example, the compiler code 104 further includes additional branch predictor code 106 that predicts a target instruction for branch instructions (for example, branch instructions that are likely to be taken (e.g., pre-selected branch instructions)). The branch predictor 120 (e.g., BTB 124 thereof) is thereafter updated with a target instruction for a branch instruction. In one example, software manages a hardware BTB, e.g., with the software specifying the prediction mode or with the prediction mode defined implicitly by the mode of the instruction that writes the BTB also setting a mode bit in the entry.

Memory 102 may include operating system (OS) code 160, virtual machine monitor (VMM) code 162, first application (e.g., program) code 168, second application (e.g., program) code 170, or any combination thereof.

In certain examples, OS code 160 is to implement an OS scheduler 162, e.g., utilizing thread runtime telemetry circuitry 116 (e.g., (i) Hardware Guide Scheduler (HGS) (or HGS+) circuitry or (ii) Thread Director circuitry) of processor core 109 to schedule one or more threads for processing in core 109 (e.g., logical core of a plurality of logical cores implemented by core 109). In certain examples, the OS scheduler 162 is to implement one or more scheduling modes (e.g., selects from a plurality of scheduling modes). In certain examples, a scheduling mode causes the scheduling of thread(s) with a dynamic SMT scheduling disclosed herein, for example, to provide SMT core isolation via forced core parking of logical SMT sibling processors when desired (e.g., when necessary), e.g., while allowing a less restrictive (e.g., "small or idle") scheduling policy for user-initiated background tasks (e.g., compiler/render, etc.) running on the system to take advantage of SMT physical processor cores (e.g., performance cores (P-cores)) (e.g., big cores). In certain examples, an OS 160 includes a control value 164, e.g., to set a number of logical processors that can be in an un-parked (or idle) state at any given time. In certain examples, control value 164 (e.g., "CPMaxCores") is set (e.g., by a user) to specify the maximum percentage of logical processors (e.g., in terms of logical processors within each Non-Uniform Memory Access (NUMA) node, e.g., as discussed below) that can be in the un-parked state at any given time. In one example (e.g., in a NUMA node) with sixteen logical processors, configuring the value of this setting to 50% ensures that no more than eight logical processors are ever in the un-parked state at the same time. In certain examples, the value of this "CPMaxCores") setting will automatically be rounded up to a minimum number of cores value (e.g., "CPMinCores") that specifies the minimum percentage of logical processors (e.g., in terms of all logical processors that are enabled on the system within each NUMA node) that can be placed in the un-parked state at any given time. In one example (e.g., in a NUMA node) with sixteen logical processors, configuring the value of this "CPMinCores" setting to 25% ensures that at least four logical processors are always in the un-parked state. In certain examples, the Core Parking functionality is disabled if the value of this setting is 100%.

In certain examples, non-uniform memory access (NUMA) is a computer system architecture that is used with multiprocessor designs in which some regions of memory have greater access latencies, e.g., due to how the system memory and physical processors (e.g., processor cores) are interconnected. In certain examples, some memory regions are connected directly to one or more physical processors, with all physical processors connected to each other through various types of interconnection fabric. In certain examples, for large multi-processor (e.g., multi-core) systems, this arrangement results in less contention for memory and increased system performance. In certain examples, a NUMA architecture divides memory and processors into groups, called NUMA nodes. In certain examples, from the perspective of any single processor in the system, memory that is in the same NUMA node as that processor is referred to as local, and memory that is contained in another NUMA node is referred to as remote (e.g., where a processor (e.g., core) can access local memory faster).

In certain examples virtual machine monitor (VMM) code 166 is to implement one or more virtual machines (VMs) as an emulation of a computer system. In certain examples, VMs are based on a specific computer architecture and provide the functionality of an underlying physical computer system. Their implementations may involve specialized hardware, firmware, software, or a combination. In certain examples, Virtual Machine Monitor (VMM) (also known as a hypervisor) is a software program that, when executed, enables the creation, management, and governance of VM instances and manages the operation of a virtualized environment on top of a physical host machine. A VMM is the primary software behind virtualization environments and implementations in certain examples. When installed over a host machine (e.g., processor) in certain examples, a VMM facilitates the creation of VMs, e.g., each with separate operating systems (OS) and applications. The VMM may manage the backend operation of these VMs by allocating the necessary computing, memory, storage and other input/output (I/O) resources, such as, but not limited to, an input/output memory management unit (IOMMU). The VMM may provide a centralized interface for managing the entire operation, status and availability of VMs that are installed over a single host machine or spread across different and interconnected hosts.

As discussed below, depicted core (e.g., branch predictor 120 thereof) includes access to one or more registers. In certain examples, core include one or more general purpose register(s) 108 and/or one more status/control registers 112.

In certain examples, each entry for the branch predictor 120 (e.g., in BTB 124 thereof) includes a tag field and a target field. In one example, the tag field of each entry in the BTB stores at least a portion of an instruction pointer (e.g., memory address) identifying a branch instruction. In one example, the tag field of each entry in the BTB stores an instruction pointer (e.g., memory address) identifying a branch instruction in code. In one example, the target field stores at least a portion of the instruction pointer for the target of the branch instruction identified in the tag field of the same entry. Moreover, in other example, the entries for the branch predictor 120 (e.g., in BTB 124 thereof) includes one or more other fields. In certain examples, an entry does not include a separate field to assist in the prediction of whether the branch instruction is taken, e.g., if a branch instruction is present (e.g., in the BTB), it is considered to be taken.

As shown in FIG. 1, the IPtr Gen mux 113 of IPtr generation stage 111 receives an instruction pointer from line 115A. The instruction pointer provided via line 115A is generated by the incrementer circuit 115, which receives a copy of the most recent instruction pointer from the path 113A. The incrementer circuit 115 may increment the present instruction pointer by a predetermined amount, to obtain the next sequential instruction from a program sequence presently being executed by the core.

In one example, upon receipt of the IPtr from IPtr Gen mux 113, the branch predictor 120 compares a portion of the IPtr with the tag field of each entry in the branch predictor 120 (e.g., BTB 124). If no match is found between the IPtr and the tag fields of the branch predictor 120, the IPtr Gen mux will proceed to select the next sequential IPtr as the next instruction to be fetched in this example. Conversely, if a match is detected, the branch predictor 120 reads the valid field of the branch predictor entry which matches with the IPtr. If the valid field is not set (e.g., has a logical value of 0) the branch predictor 120 considers the respective entry to be "invalid" and will disregard the match between the IPtr and the tag of the respective entry in this example, e.g., and the branch target of the respective entry will not be forwarded to the IPtr Gen Mux. On the other hand, if the valid field of the matching entry is set (e.g., has a logical value of 1), the branch predictor 120 proceeds to perform a logical comparison between a predetermined portion of the instruction pointer (IPtr) and the branch address (BA) field of the matching branch predictor entry in this example. If an "allowable condition" is present, the branch target of the matching entry will be forwarded to the IPtr Gen mux, and otherwise, the branch predictor 120 disregards the match between the IPtr and the tag of the branch predictor entry. In some example, the entry indicator is formed from not only the current branch IPtr, but also at least a portion of the global history.

More specifically, in one example, the BA field indicates where the respective branch instruction is stored within a line of cache memory 132. In certain examples, a processor is able to initiate the execution of multiple instructions per clock cycle, wherein the instructions are not interdependent and do not use the same execution resources.

For example, each line of the instruction cache 132 shown in FIG. 1 includes multiple instructions (e.g., six instructions). Moreover, in response to a fetch operation by the fetch unit 134, the instruction cache 132 responds (e.g., in the case of a "hit") by providing a full line of cache to the fetch unit 134 in this example. The instructions within a line of cache may be grouped as separate "bundles." For example, as shown in FIG. 1, the first three instructions in a cache line 133 may be addressed as bundle 0, and the second three instructions may be address as bundle 1. Each of the instructions within a bundle are independent of each other (e.g., can be simultaneously issued for execution). The BA field provided in the branch predictor 120 entries is used to identify the bundle address of the branch instruction which corresponds to the respective entry in certain examples. For example, in one example, the BA identifies whetherthe branch instruction is stored in the first or second bundle of a particular cache line.

In one example, the branch predictor 120 performs a logical comparison between the BA field of a matching entry and a predetermined portion of the IPtr to determine if an "allowable condition" is present. For example, in one example, the fifth bit position of the IPtr (e.g. IPtr[4]) is compared with the BA field of a matching (e.g., BTB) entry. In one example, an allowable condition is present when IPtr [4] is not greater than the BA. Such an allowable condition helps prevent the apparent unnecessary prediction of a branch instruction, which may not be executed. That is, when less than all of the IPtr is considered when doing a comparison against the tags of the branch predictor 120, it is possible to have a match with a tag, which may not be a true match. Nevertheless, a match between the IPtr and a tag of the branch predictor indicates a particular line of cache, which includes a branch instruction corresponding to the respective branch predictor entry, may about to be executed. Specifically, if the bundle address of the IPtr is not greater than the BA field of the matching branch predictor entry, then the branch instruction in the respective cache line is soon to be executed. Hence, a performance benefit can be achieved by proceeding to fetch the target of the branch instruction in certain examples.

As discussed above, if an "allowable condition" is present, the branch target of the matching entry will be forwarded to the IPtr Gen mux in this example. Otherwise, the branch predictor will disregard the match between the IPtr and the tag. In one example, the branch target forwarded from the branch predictor is initially sent to a Branch Prediction (BP) resteer mux 128, before it is sent to the IPtr Gen mux. The BP resteer mux 128, as shown in FIG. 1, may also receive instruction pointers from other branch prediction devices. In one example, the input lines received by the BP resteer mux will be prioritized to determine which input line will be allowed to pass through the BP resteer mux onto the IPtr Gen mux.

In addition to forwarding a branch target to the BP resteer mux, upon detecting a match between the IPtr and a tag of the branch predictor, the BA of the matching branch predictor entry is forwarded to the Branch Address Calculator (BAC) 142. The BAC 142 is shown in FIG. 1 to be located in the decode stage 140, but may be located in other stage(s). The BAC of may also receive a cache line from the fetch unit 134 via line 137.

The IPtr selected by the IPtr Gen mux is also forwarded to the fetch unit 134, via data line 135 in this example. Once the IPtr is received by the fetch unit 134, the cache line corresponding to the IPtr is fetched from the instruction cache 132. The cache line received from the instruction cache is forwarded to the BAC, via data line 137.

Upon receipt of the BA in this example, the BAC will read the BA to determine where the pre-selected branch instruction (e.g., identified in the matching branch predictor entry) is located in the next cache line to be received by the BAC (e.g., the first or second bundle of the cache line). In one example, it is predetermined where the branch instruction is located within a bundle of a cache line (e.g., in a bundle of three instructions, the branch instruction will be stored as the second instruction).

In alternative examples, the BA includes additional bits to more specifically identify the address of the branch instruction within a cache line. Therefore, the branch instruction would not be limited to a specific instruction position within a bundle.

After the BAC determines the address of the pre-selected branch instruction within the cache line, and has received the respective cache line from the fetch unit 134, the BAC will decode the respective instruction to verify the IPtr truly corresponds to a branch instruction. If the instruction addressed by BA in the received cache line is a branch instruction, no correction for the branch prediction is necessary. Conversely, if the respective instruction in the cache line is not a branch instruction (i.e., the IPtr does not correspond to a branch instruction), the BAC will send a message to the branch predictor to invalidate the respective branch predictor entry, to prevent similar mispredictions on the same branch predictor entry. Thereafter, the invalidated branch predictor entry will be overwritten by a new branch predictor entry.

In addition, in one example, the BAC will increment the IPtr by a predetermined amount and forward the incremented IPtr to the BP resteer mux 128, via data line 145, e.g., the data line 145 coming from the BAC will take priority over the data line from the branch predictor. As a result, the incremented IPtr will be forwarded to the IPtr Gen mux and passed to the fetch unit in order to correct the branch misprediction by fetching the instructions that sequentially follow the IPtr.

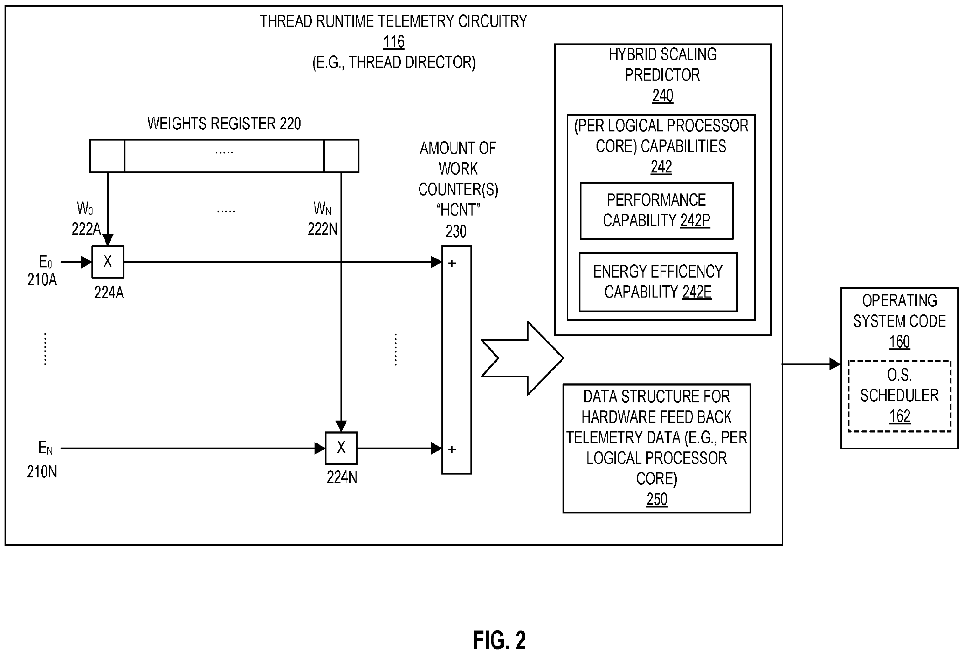

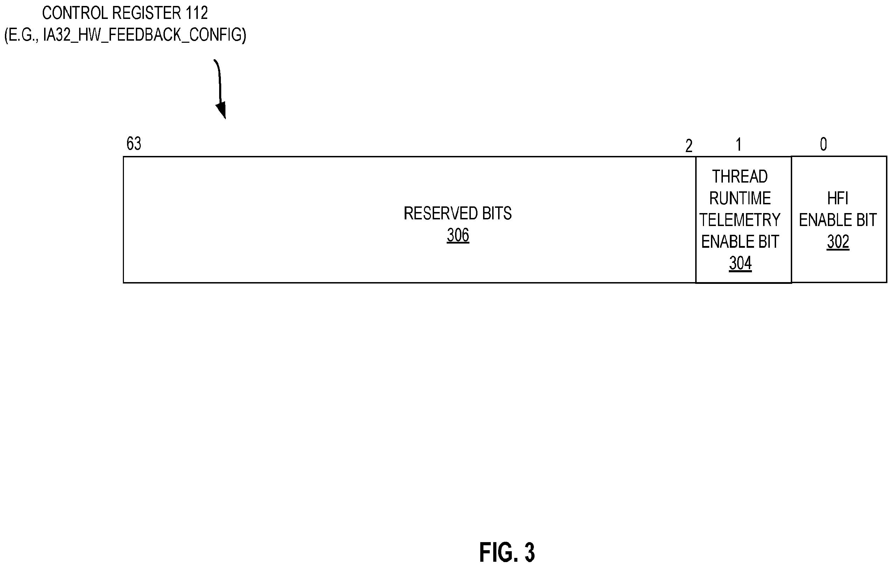

In certain examples, the context manager circuit 110 allows one or more of the above discussed shared components to be utilized by multiple contexts, e.g., while alleviating information being leaked across contexts by directly or indirectly observing the information stored. Computing system 100 (e.g., core 109) may include a control register (e.g., model specific register(s)) 112 (e.g., as discussed below in reference to FIG. 3)), a segment register 114 (e.g., indicating the current privilege level), a thread runtime telemetry circuitry 116 (e.g., as discussed below in reference to FIGS. 2-6), or any combination thereof. Segment register 114 may store a value indicating a current privilege level of software operating on a logical core, e.g., separately for each logical core. In one example, current privilege level is stored in a current privilege level (CPL) field of a code segment selector register of segment register 114. In certain examples, processor core 109 requires a certain level of privilege to perform certain actions, for example, actions requested by a particular logical core (e.g., actions requested by software running on that particular logical core).

Each thread may have a context. In certain examples, contexts are identified by one or more of the following properties: 1) a hardware thread identifier such as a value that identifies one of multiple logical processors (e.g., logical cores) implemented on the same physical core through techniques such as simultaneous multi-threading (SMT); 2) a privilege level such as implemented by rings; 3) page table base address or code segment configuration such as implemented in a control register (e.g., CR3) or code segment (CS) register; 4) address space identifiers (ASIDs) such as implemented by Process Context ID (PCID) or Virtual Process ID (VPID) that semantically differentiate the virtual-to-physical mappings in use by the CPU; 5) key registers that contain cryptographically sealed assets (e.g., tokens) used for determination of privilege of the executing software; and/or 6) ephemeral - a context change such as a random reset of context.

Over any non-trivial period of time, many threads (e.g., contexts thereof) may be active within a physical core. In certain examples, system software time-slices between applications and system software functions, potentially allowing many contexts access to microarchitectural prediction and/or caching mechanisms.

An instance of a thread runtime telemetry circuitry 116 (e.g., (i) Hardware Guide Scheduler (HGS) (or HGS+) circuitry or (ii) Thread Director circuitry) may be in each core 109(1-N) of computer system 100 (e.g., for each logical processor implemented by a core). A single instance of a thread runtime telemetry circuitry 116 may be anywhere in computer system 100, e.g., a single instance of thread runtime telemetry circuitry used for all cores 109(1-N) present.

In one example, status/control registers 112 include status register(s) to indicate a status of the processor core and/or control register(s) to control functionality of the processor core. In one example, one or more (e.g., control) registers are (e.g., only) written to at the request of the OS running on the processor, e.g., where the OS operates in privileged (e.g., system) mode, but not for code running in non-privileged (e.g., user) mode. In one example, a control register can only be written to by software running in supervisor mode, and not by software running in user mode. In certain examples, control register 112 includes a field to enable the thread runtime telemetry circuitry 116, e.g., as shown in FIG. 3.

In certain examples, decoder 146 decodes an instruction, and that decoded instruction is executed by the execution circuit 154, for example, to perform operations according to the opcode of the instruction.

In certain examples, decoder 146 decodes an instruction, and that decoded instruction is executed by the execution circuit 154, for example, to reset one or more capabilities (or one more software thread runtime property histories), e.g., of thread runtime telemetry circuitry 116.

Computer system 100 may include performance monitoring circuitry 172, e.g., including any number of performance counters therein to count, monitor, and/or or log events, activity, and/or other measure related to performance. In various examples, performance counters may be programmed by software running on a core to log performance monitoring information. For example, any of performance counters may be programmed to increment for each occurrence of a selected event, or to increment for each clock cycle during a selected event. The events may include any of a variety of events related to execution of program code on a core, such as branch mispredictions, cache hits, cache misses, translation lookaside buffer hits, translation lookaside buffer misses, etc. Therefore, performance counters may be used in efforts to tune or profile program code to improve or optimize performance. In certain examples, thread runtime telemetry circuitry 116 is part of performance monitoring circuitry 172. In certain examples, thread runtime telemetry circuitry 116 is separate from performance monitoring circuitry 172. Computer system 100 may include a power management unit 174 to monitor power usage, etc.

In certain examples, thread runtime telemetry circuitry 116 (e.g., (i) Hardware Guide Scheduler (HGS) (or HGS+) circuitry or (ii) Thread Director circuitry) is to generate "capability" values to differentiate logical processors (e.g., CPUs) of each physical processor core 109 with different (e.g., current) computing capability (e.g., computing throughput). In certain examples, the thread runtime telemetry circuitry 116 generates capability values that are normalized in a (e.g., 256, 512, 1024, etc.) range. In certain examples, the thread runtime telemetry circuitry 116 is able to estimate how busy and/or energy efficient a logical processor (e.g., CPU) is (e.g., on a per class basis) via the capability values, e.g., and an OS scheduler 162 is to utilize the capability values when evaluating performance versus energy trade-offs for scheduling threads.

In certain examples, the performance (Perf) capability value of a logical processor (e.g., CPU) represents the amount of work it can absorb when running at its highest frequency, e.g., compared to the most capable logical processor (e.g., CPU) of the system 100. In certain examples, the performance (Perf) capability value for a single logical processor (e.g., CPU) of the system 100 is a value (e.g., an 8-bit value indicating values of 0 to 255) that specifies the relative performance level of the logical processor, e.g., where higher values indicate higher performance and/or the lowest performance level of 0 indicates a recommendation to the OS to not schedule any threads on it for performance reasons.

In certain examples, the energy efficiency (EE) capability value of a logical processor (e.g., CPU) of the system 100 represents its energy efficiency (e.g., in performing processing). In certain examples, the energy efficiency (EE) capability value of a single logical processor (e.g., CPU) is a value (e.g., an 8-bit value indicating values of 0 to 255) that specifies the relative energy efficiency level of the logical processor, e.g., where higher values indicate higher energy efficiency and/or the lowest energy efficiency capability of 0 indicates a recommendation to the OS to not schedule any software threads on it for efficiency reasons. In certain examples, an energy efficiency capability of the maximum value (e.g., 255) indicates which logical processors have the highest relative energy efficiency capability. In certain examples, the maximum value (e.g., 255) is an explicit recommendation for the OS to consolidate work on those logical processors for energy efficiency reasons.

In certain examples, the functionality discussed herein (e.g., the core isolation via the parking of one or more SMT sibling logical core) is implemented by using thread runtime telemetry circuitry 116 (e.g., Intel^{®} Thread Director circuitry, e.g., microcontroller) to dynamically park an SMT core's logical core sibling(s) (e.g., when concurrent scenarios are executed). In certain examples, a processor (e.g., via non-transitory machine-readable medium that stores power management code (e.g., p-code)) determines, using per energy performance preference (EPP) group utilization and quality of service (QoS), if there is limited threaded high QoS and/or low EPP activity (e.g., foreground threads) and multi-threaded low QoS and/or high EPP activity (e.g., background threads). In certain examples, if so, then the processor (e.g., via non-transitory machine-readable medium that stores power management code (e.g., p-code)) will populate a data structure that stores telemetry data (e.g., per logical processor core) of the thread runtime telemetry circuitry 116 to cause the dynamic parking of an SMT core's logical core sibling(s). In certain examples, such a data structure stores data of (i) Hardware Guide Scheduler (HGS) (or HGS+) circuitry or (ii) Thread Director circuitry. In certain examples, the thread runtime telemetry circuitry 116 is to cause a write of a (e.g., capability) value (e.g., zero or about zero) to the entry or entries of the sibling logical processor core(s) of a logical processor core of an SMT physical processor core to hint to the OS 160 (e.g., to the OS scheduler 162) to avoid using those sibling logical processor core(s), e.g., to avoid scheduling a thread on those sibling logical processor core(s).

In certain examples, the thread runtime telemetry circuitry 116 (e.g., (i) Hardware Guide Scheduler (HGS) (or HGS+) circuitry or (ii) Thread Director circuitry) (e.g., via its corresponding data structure) communicates numeric performance and numeric power efficiency capabilities of each logical core in a certain (e.g., 0 to 255) (e.g., 0 to 511) (e.g., 0 to 1023) range to the OS in real-time. In certain examples, when either the performance or energy capabilities efficiency of a logical processor core (e.g., CPU) is zero, the thread runtime telemetry circuitry 116 adapts to the current instruction mix and recommends not scheduling any tasks on such logical core.

In certain examples, thread runtime telemetry circuitry 116 predicts capability values based on the dynamic characteristics of a system (e.g., eliminating a need to run a workload on each core to measure its amount of work), for example, by providing ISA-level counters (e.g., number of load instructions) that may be shared among various cores, and lowering the hardware implementation costs of performance monitoring by providing a single counter based on multiple performance monitoring events.

Each core 109 of computer system 100 may be the same (e.g., symmetric cores) or a proper subset of one or more of the cores may be different than the other cores (e.g., asymmetric cores). In one example, a set of asymmetric cores includes a first type of core (e.g., a lower power core) and a second, higher performance type of core (e.g., a higher power core). In certain examples, an asymmetric processor is a hybrid processor that includes one or more less powerful non-SMT physical processor cores (e.g., efficient cores (E-cores)) (e.g., small cores) and one or more SMT physical processor cores (e.g., performance cores (P-cores)) (e.g., big cores).

In certain examples, a computer system includes multiple cores that all execute a same instruction set architecture (ISA). In certain examples, a computer system includes multiple cores, each having an instruction set architecture (ISA) according to which it executes instructions issued or provided to it and/or the system by software. In this specification, the use of the term "instruction" may generally refer to this type of instruction (which may also be called a macro-instruction or an ISA-level instruction), as opposed to: (1) a micro-instruction or micro-operation that may be provided to execution and/or scheduling hardware as a result of the decoding (e.g., by a hardware instruction-decoder) of a macro-instruction, and/or (2) a command, procedure, routine, subroutine, or other software construct, the execution and/or performance of which involves the execution of multiple ISA-level instructions.

In some such systems, the system may be heterogeneous because it includes cores that have different ISAs. A system may include a first core with hardware, hardwiring, microcode, control logic, and/or other micro-architecture designed to execute particular instructions according to a particular ISA (or extensions to or other subset of an ISA), and the system may also include a second core without such micro-architecture. In other words, the first core may be capable of executing those particular instructions without any translation, emulation, or other conversion of the instructions (except the decoding of macro-instructions into micro-instructions and/or micro-operations), whereas the second core is not. In that case, that particular ISA (or extensions to or subset of an ISA) may be referred to as supported (or natively supported) by the first core and unsupported by the second core, and/or the system may be referred to as having a heterogeneous ISA.

In other such systems, the system may be heterogeneous because it includes cores having the same ISA but differing in terms of performance, power consumption, and/or some other processing metric or capability. The differences may be provided by the size, speed, and/or microarchitecture of the core and/or its features. In a heterogeneous system, one or more cores may be referred to as "big" because they are capable of providing, they may be used to provide, and/or their use may provide and/or result in a greater level of performance (e.g., greater instructions per cycle (IPtrC)), power consumption (e.g., less energy efficient), and/or some other metric than one or more other "small" or "little" cores in the system.

In these and/or other heterogeneous systems, it may be possible for a task to be performed by different types of cores. Furthermore, it may be possible for a scheduler (e.g., a hardware scheduler and/or a software scheduler 162 of an operating system 160 executing on the processor) to schedule or dispatch tasks to different cores and/or migrate tasks between/among different cores (generally, a "task scheduler"). Therefore, efforts to optimize, balance, or otherwise affect throughput, wait time, response time, latency, fairness, quality of service, performance, power consumption, and/or some other measure on a heterogeneous system may include task scheduling decisions.

For example, if a particular task is mostly stalled due to long latency memory accesses, it may be more efficient to schedule it on a "small" core (e.g., E-core) and save power of an otherwise bigger core (e.g., P-core). On the other hand, heavy tasks may be scheduled on a big core (e.g., P-core) to complete the compute sooner, e.g., and let the system go into sleep/idle sooner. Due to the diversity of workloads a system (e.g., a client) can perform, the dynamic characteristics of a workload, and conditions of the system itself, it might not be straightforward for a pure software solution to make such decisions. Therefore, the use of examples herein (e.g., of a thread runtime telemetry circuitry) may be desired to provide information upon which such decisions may be based, in part or in full. Furthermore, the use of these examples may be desired in efforts to optimize and/or tune applications based on the information that may be provided.

A processor may include a thread runtime telemetry circuitry 116 that is shared by multiple contexts (and/or cores), e.g., as discussed further below in reference to FIGS. 2-6. A processor may contain other shared structures dealing with state including, for example, prediction structures, caching structures, a physical register file (renamed state), and buffered state (a store buffer). Prediction structures, such as branch predictors or prefetchers, may store state about past execution behavior that is used to predict future behavior. A processor may use these predictions to guide speculation execution, achieving performance that would not be possible otherwise. Caching structures, such as caches or TLBs, may keep local copies of shared state so as to make accesses by the processor (e.g., very) fast.

FIG. 2 illustrates thread runtime telemetry circuitry 116 according to examples of the disclosure. Thread runtime telemetry circuitry 116 (and/or hybrid scaling predictor 240) may be implemented in logic gates and/or any other type of circuitry, all or parts of which may be included in a discrete component (e.g., microcontroller) and/or integrated into the circuitry of a processing device or any other apparatus in a computer or other information processing system, for example, implemented in a core (such as core 109 in FIG. 1) and/or a system agent in a heterogeneous SoC.

In certain examples, thread runtime telemetry circuitry 116 generates one or more software thread runtime property histories (e.g., including the weight values and/or HCNT counter values discussed herein). In FIG. 2, each of any number of unweighted event counts (shown as E0 210A to EN 210N) represents an unweighted event count or any other output of a performance counter (generally, each an "unweighted event count"), such as any performance counters in performance monitoring circuitry 172 and/or thread runtime telemetry circuitry 116 of FIG. 1. In various examples, E0 210A to EN 210N may represent a set of any number of unweighted event counts including any number of subsets of unweighted event counts from different (e.g., logical) cores. For example, the unweighted event counts may be from performance counters all in one (e.g., logical) core, from one or more performance counters in a first (e.g., logical) core plus one or more performance counters in a second (e.g., logical) core, from one or more performance counters in a first (e.g., logical) core plus one or more performance counters in a second (e.g., logical) core plus one or more performance counters in a third (e.g., logical) core, and so on. Furthermore, any one of more of the event counts (e.g., E0 210A to EN 210N) may represent an output of (e.g., feedback from) an active runtime (e.g., work) counter, such as work counter 230 (as described below), as in an example in which a hierarchical arrangement of performance and work counters is implemented (note that in such an example, an event count may be referred to as an unweighted event count, even though it may have been generated by a work counter based on weighted event counts).

In FIG. 2, weights register 220 represents a programmable or configurable register or other storage location (or combination of storage locations), to store any number of weight values (shown as w0 222A to wN 222N), each weight value corresponding to one of the unweighted event counts and to be used by a corresponding weighting unit (shown as weighting units 224A to 224N) to weight the corresponding unweighted event count and generate a weighted event count. The weight values may be a tuned set of values. For example, software or firmware may assign a weight value of 1 to E0 and a weight value of 2 to EN, in which case weighting unit 224A may weight (e.g., scale or multiply) E0 by a factor of 1 and weighting unit 224N may weight (e.g., scale or multiply) EN by a factor of 2. In various examples, any weight values (including 0), range of weight values, and/or weighting approach (e.g., multiplying, dividing, adding, etc.) may be used. In various examples, implementations of a weights register and/or weighting units may limit the choice of weight values to one of a number of possible weight values.

In FIG. 2, weighted event counts (shown as the outputs of weighting units 224A to 224N) are received for processing by a work counter (shown as heterogenous (e.g., hybrid) counter (HCNT) 230, but may be used for homogenous or heterogenous processors/systems). In an example, the processing of weighted event counts may include summing the weighted event counts to generate a measure of an amount of work (generally, a "measured work amount"). Various examples may provide for this measured work amount to be based on a variety of performance measurements or other parameters, each scaled or manipulated in a variety of ways, and to be used for a variety of purposes. In an example, a work counter may be used to provide a dynamic profile of the current workload.

For example, HCNT 230 may be used to generate a weighted sum of various classes of performance monitoring events that can be dynamically estimated by all cores in a system (e.g., SoC). HCNT 230 may be used to predict a thread runtime telemetry circuitry (e.g., HGS or Thread Director) class, e.g., HCNT 230 may be used as a source for hybrid scaling predictor 240 and/or for any software having access to HCNT 230. The events may be sub-classes of an ISA (e.g., AVX floating-point, AVX2 integer), special instructions (e.g., repeat string), or categories of bottlenecks (e.g., front-end bound from top-down analysis). The weights may be chosen to reflect a type of execution code (e.g., memory stalls or branching code) and/or a performance ratio (e.g., 2 for an instruction class that executes twice as fast on a big core and 1 for all other instruction classes), a scalar of amount of work (e.g., 2 for fused-multiply instructions), etc.

Certain examples provide for any of a variety of events to be counted and/or summed, including events related to arithmetic floating-point (e.g., 128-bit) vector instructions, arithmetic integer (e.g., 256-bit) vector instructions, arithmetic integer vector neural network instructions, load instructions, store instructions, repeat strings, top-down micro-architectural analysis (TMA) level 1 metrics (e.g., front-end bound, back-end bound, bad speculation, retiring), and/or any performance monitoring event counted by any counter.

In addition to a work counter according to an example of the disclosure, FIG. 2 illustrates a representation of usages of a work counter according to examples of the disclosure, including use by a hybrid scaling predictor 240 and/or by any software (e.g., OS code 160) having access to the work counter. In an example, hybrid scaling predictor 240 (e.g., implemented in hardware or firmware) provides information (for example, direct or indirect information, e.g., by enabling range of indexes based on the counter values) to an OS 160 or other system software, and/or may be used to predict performance scaling (e.g., between big cores (e.g., P-cores) and little cores (e.g., E-cores)), e.g., by providing a hint based on the history to the hardware (e.g., via writing to hardware feedback data structure 250 that is read by the OS). In some examples, the hardware feedback data structure 250 is written to by power management unit 174.

In certain examples, hybrid scaling predictor 240 is to generate one or more capability values 242 (e.g., per logical processor core). In certain examples, the capability values 242 include a performance capability 242P (e.g., per logical processor core) and/or an energy efficiency capability 242E (e.g., per logical processor core).

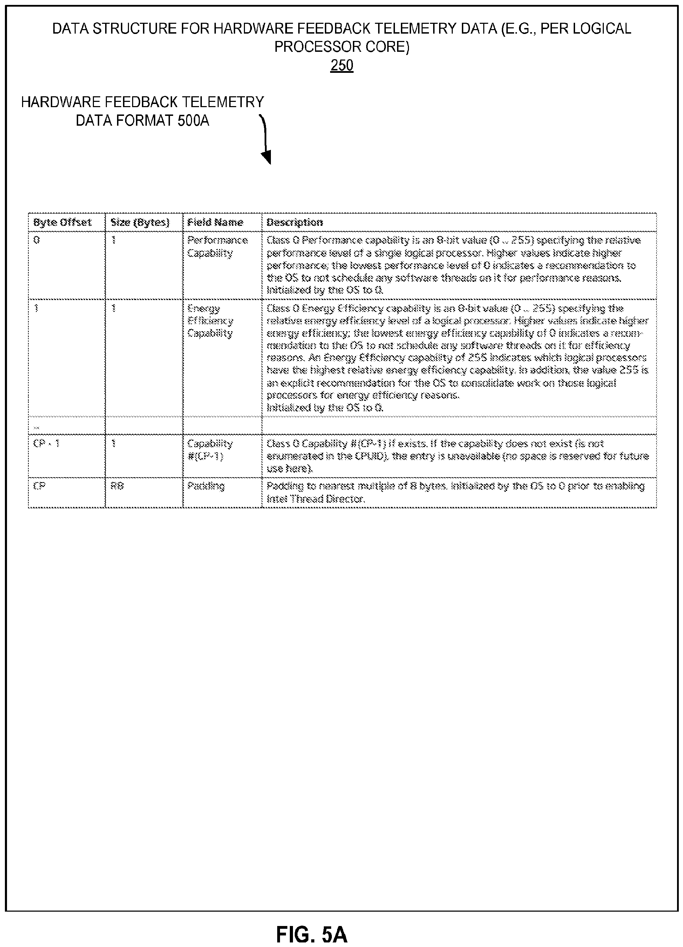

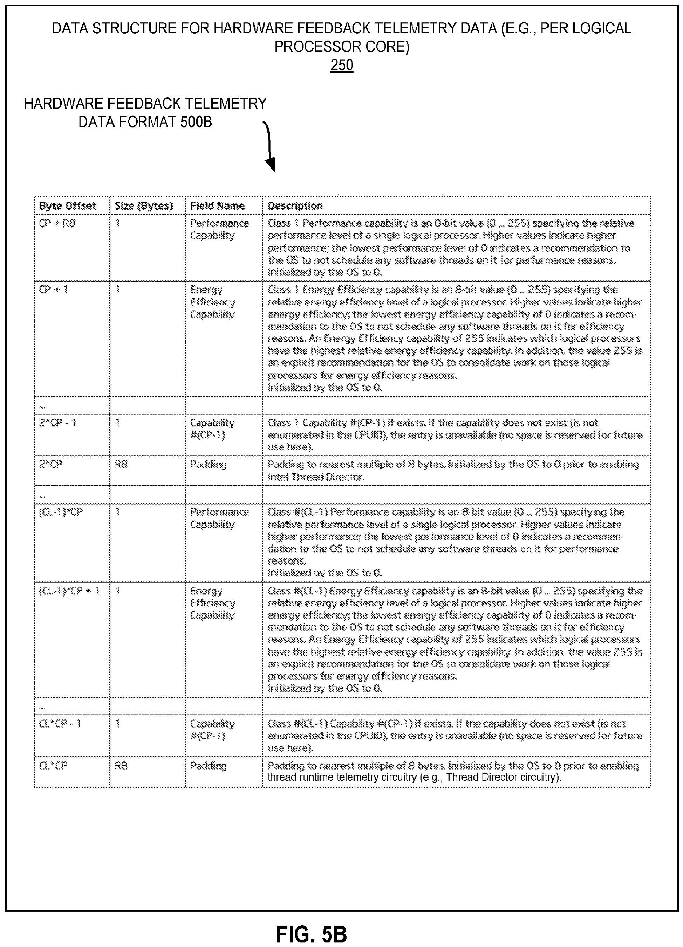

In certain examples, the data generated by thread runtime telemetry circuitry 116 is stored in hardware feedback hardware feedback data structure 250, e.g., with one or more sets of entries for each logical processor core. In certain examples, the data structure is (e.g., a table) according to the example format in FIGS. 5A-5B. In certain examples, the hardware feedback data structure 250 (e.g., accessible by OS code 160 or at least OS scheduler 162 thereof) is stored in storage of the thread runtime telemetry circuitry 116 (e.g., within thread runtime telemetry circuitry 116 or separate from the thread runtime telemetry circuitry 116, e.g., in system memory 102 of the system 100). In certain examples, the data in this hardware feedback data structure 250 is modifiable (e.g., by thread runtime telemetry circuitry 116 and/or power management unit 174) to implement core isolation via forced core parking of logical SMT sibling processors when desired.

In an example, a work counter may be used to provide hints (e.g., capability values) (e.g., written into hardware feedback data structure 250) to an operating system running on a heterogeneous (e.g., or homogenous) SoC or system, where the hints may provide for task scheduling that may improve performance and/or quality of service. For example, a homogeneous system including one or more instances of the same core for use in optimal multicore thread scheduling. For example, a heterogeneous client system including one or more big cores (e.g., P-cores) and one more little cores (e.g., E-cores) may be used to run an artificial intelligence (Al) application (e.g., a machine learning model) including a particular class of instructions that may speed up processing of the type of instructions typically used in the AI application, e.g., particularly or only if executed on a big core (e.g., P-core). The use of a work counter programmed to monitor execution of this class of instruction may provide hints to an OS 160 to guide the OS scheduler 162 to schedule threads including these instructions on big cores (e.g., P-cores) instead of little cores (e.g., E-cores), thereby improving performance and/or quality of service.

In certain examples, the weight values in register 220 are programmable to provide for tuning of the weights (e.g., in a lab) based on actual results. In examples, one or more weights of zero may be used to disconnect a particular event or class of events. In examples, one of more weights of zero may be used for isolating various components that feed into a work counter. Examples herein may support an option for hardware and/or software (e.g., an OS) to enable/disable a work counter for any of a variety of reasons, for example, to avoid power leakage when the work counter is not in use.

In one example, scheduler 162 of operating system code 160 in FIG. 1 uses thread runtime telemetry circuitry 116 (and/or hybrid scaling predictor 240) to select the best core (e.g., type) (or other component) to be used to execute a thread for a software thread, e.g., a software thread of first application code (e.g., first application code 168 in FIG. 1) or second application code (e.g., second application code 170 in FIG. 1). In certain examples, scheduler 162 of operating system code 160 in FIG. 1 uses the capability values 242 (e.g., a performance capability 242P per logical processor core) and/or an energy efficiency capability 242E per logical processor core) (e.g., stored in hardware feedback data structure 250) are used to implement dynamic SMT scheduling disclosed herein, for example, to provide core isolation via forced core parking of logical SMT sibling processors when desired (e.g., when necessary), e.g., while allowing a less restrictive (e.g., "small or idle") scheduling policy for user-initiated background tasks (e.g., compiler/render, etc.) running on the system to take advantage of SMT physical processor cores (e.g., performance cores (P-cores)) (e.g., big cores).

In certain examples, software thread runtime property histories (e.g., including the weight values and/or HCNT counter values discussed herein) of thread runtime telemetry circuitry 116 may be useful for a first software thread but not for a following second software thread. In other examples, it may be desirable to clear (e.g., to set to zero) certain software thread runtime property histories (e.g., capability values), e.g., to provide core isolation via forced core parking of logical SMT sibling processors when desired.

Thus, certain examples herein provide an instruction (and method) to clear the software thread runtime property histories, for example, to clear the capability values of a certain logical processor (e.g., and not other logical processor(s)), e.g., to provide core isolation via forced core parking of logical SMT sibling processors. For example, clearing the HCNT counter current value (e.g., and thus the impact of this value of the full prediction flow). For example, clearing the current values of the counters E0 ... En and/or HCNT 230 in FIG. 2.

In one example, the instruction mnemonic is "HRESET" but for other examples, it can be another mnemonic. The usage opcode of HRESET can include an immediate operand, other types of operands, or zero explicit operands (e.g., defined without use of any operand). In one example, the hardware (e.g., processor core) ignores any immediate operand value (e.g., without causing an exception (e.g., fault)) and/or any request specific setting. It should be understood that other examples may utilize an immediate operand value (e.g., such that is reserved for other uses). In another example where the instruction includes an immediate operand, it is possible to define that this immediate operand will include only zero (e.g., or cause an exception (e.g., fault) otherwise when executing the instruction). Other operand values may not be supported, and an incorrect setting can generate an exception like Invalid Opcode (e.g., UnDefined Opcode or General Protection Fault).

In one example, an instruction is to ignore an explicit (e.g., immediate) operand, while its implicit operand (e.g., not explicitly specified in a field of the instruction) may be a general purpose register (e.g., EAX register) (e.g., of general purpose registers 108 in FIG. 1) (e.g., to enable 32 options of bit mask configuration). Other Another option is to define the instruction without an explicit immediate operand and in this case a valid use may be indicated by the opcode (e.g., corresponding to the mnemonic of HRESET), for example, while its implicit operand (e.g., not explicitly specified in a field of the instruction) may be a general purpose register (e.g., EAX register) (e.g., of general purpose registers 108 in FIG. 1). In certain examples, the implicit operand is a single register (e.g., EAX) or a concatenation of a plurality of registers (e.g., EAX:EDX is to concatenate the contents of register EAX followed by the contents of register EDX (e.g., to enable 64 options of bit mask configuration)).

In certain examples, an instruction utilizes a new opcode (e.g., not a legacy opcode of a legacy instruction), for example, such that hardware that does not support this instruction will not be able to execute it (e.g., and the exception undefined instruction will be happened in happen in a case like this). In certain examples, use of this instruction may include that software (e.g., an OS) is to check if the hardware supports execution of this instruction before scheduling execution of the instruction. In one example, the software is to check if the hardware supports execution of the instruction be executing a check (e.g., having a mnemonic of CPUID) instruction feature bit setting.

In certain examples, execution of the instruction is only allowed for a certain privilege level (for example, supervisor level (e.g., ring 0) and/or user level (e.g., ring 3)). In an example where the instruction is limited only to be used by supervisor level (e.g., an OS) (e.g., in ring 0 only), request for execution of the instruction for user level (e.g., a user application) generates an exception, e.g., a general-protection exception.

Certain examples herein define an instruction where the OS is able to select the components of the processor to be cleared (e.g., to (e.g., only) clear one or more logical processor's histories) (e.g., to (e.g., only) clear one or more of software thread runtime property histories). In one example, the instruction includes a control parameter to enable software (e.g., the OS) to control in runtime the exact history reset supported (e.g., in a much faster method over writing into an MSR). In certain examples, the control of the instruction is done by the instruction's parameters (e.g., a data register that enables 32-bit control options and/or a set of data registers that enables 64-bit control options). In certain examples, an instruction also defines OS control (e.g., opt-in) on the support capabilities of the instruction. In certain examples, an instruction takes an implicit operand (e.g., EAX) or an explicit operand.

In an example where the instruction is supported in user mode (e.g., ring 3), the OS may have the ability to control and opt-in what capabilities (e.g., of a plurality of capabilities) that the instruction include and/or what type of history this instruction can reset and in which way. In order to support this, in certain examples an OS assist (e.g., an OS system call of an application programming interface (API)) can be requested, and used to enable the instruction for user level code, indicate which reset (e.g., HRESET) support capabilities were enabled by the OS (e.g., and supported by the hardware), and/or used to control any reset (e.g., HRESET) instruction parameters (e.g., in supervisor level).

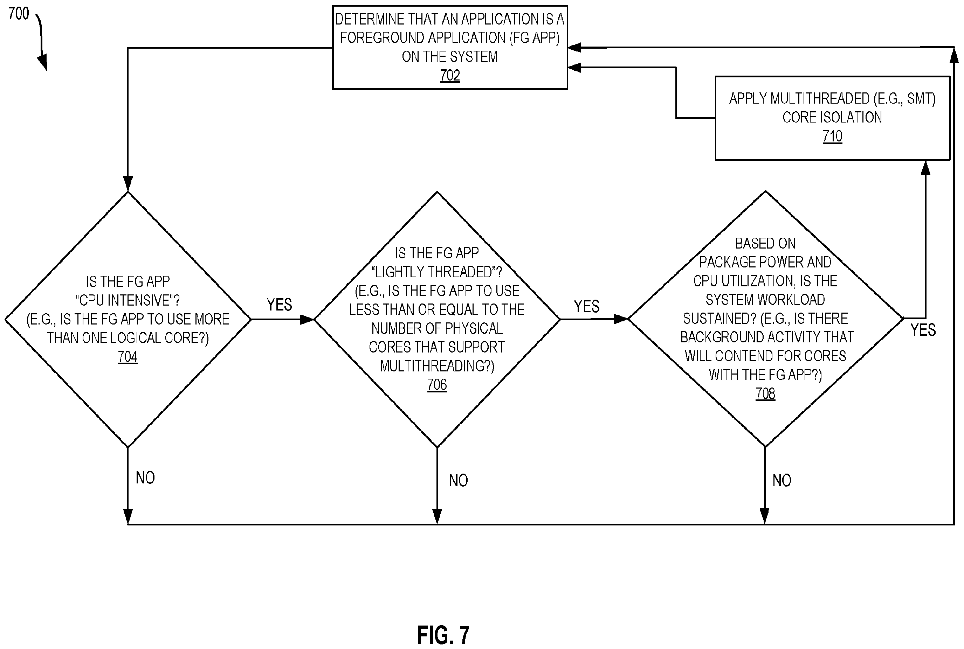

In one example, an OS sets this instruction as part of an OS scheduler runtime support, for example, to clear the capability values of a certain logical processor (e.g., and not other logical processor(s)) to provide core isolation via forced core parking of logical SMT sibling processors (e.g., as shown in FIG. 7). In certain examples, the instruction is defined with a new opcode so the software (e.g., OS) is to first check if the hardware supports this instruction and what are the capabilities of it before this instruction is able to be used. Thus, in one example, a different code path is defined by the software to support this instruction. For example, with the checking if the hardware supports the instruction performed by reading (e.g., CPUID) feature bit(s) to determine if the hardware supports this instruction. In one example, the software is to use this instruction only if the hardware supports it as indicated by its enumeration method.

In one example of a processor, execution is done in a speculative way. In order to avoid speculative history reset, it is possible that while the (e.g., HRESET) instruction is executed for a history reset (e.g., while all the checks to reset the history have happened, but before the history reset itself has happened), it will take an action as a pre serialized pre-serialized action instruction, e.g., where all prior (in program order) instructions have completed locally before the history reset is done. In one example, HRESET is used to avoid a history leak, e.g., in a core that executes instructions out of program order. Another possible support option is to enable pre-serialization instruction to support only on a subset of the history reset types that can be affected from the processor speculative execution method. In yet other another option, the instruction is supported as a serialized. It is also possible to define the support as a serialized instruction only for specific HRESET capabilities and only when these HRESET capabilities are enabled to be in use. For example, options to select a pre-serialized instruction support method or a serialized instruction support method for a proper subset of history reset types may be used to limit any negative performance side effect of the pre-serialized or the serialized instruction support, e.g., where all prior (e.g., in program order) instructions have completed locally before the history reset is performed.

In one example, a reset (e.g., HRESET) instruction includes a control register (e.g., that the OS uses) in order to enable the different support features. In one example, as a default, all of the support features be disabled. In one example, the OS is to enable a subset or all of the support features. In one example, only the lower (e.g., 32) proper subset of bits are allocated for HRESET usage.

In certain examples, thread runtime telemetry circuitry 116 is enabled by a control register 112. An example format of this register is show in FIG. 3.

FIG. 3 illustrates an example format of a control register 112 to enable thread runtime telemetry according to some examples. Format of control register 112 (e.g., IA32_HW_FEEDBACK_CONFIG) for a logical processor core may include bit indices [63:2] 306 as reserved, bit index one (bit position two) 304 to turn on thread runtime telemetry (e.g., the corresponding functionality of thread runtime telemetry circuitry 116), and/or bit index zero (bit position one) 302 to turn on hardware feedback interface (HFI). In certain examples, both bits 0 and 1 must be set for thread runtime telemetry circuitry 116 (e.g., Thread Director circuitry) to be enabled. In certain examples, the (e.g., extra) "class" columns in the run time telemetry (e.g., Thread Director) hardware feedback data structure 250 (e.g., table) are updated by hardware immediately following setting those two bits. In one example, the control register 112 (e.g., bits 0302 and/or 1304) thereof is only set (or reset) for a request made in supervisor mode. In some examples, the hardware feedback data structure 250 can be written to by a power management unit 174.

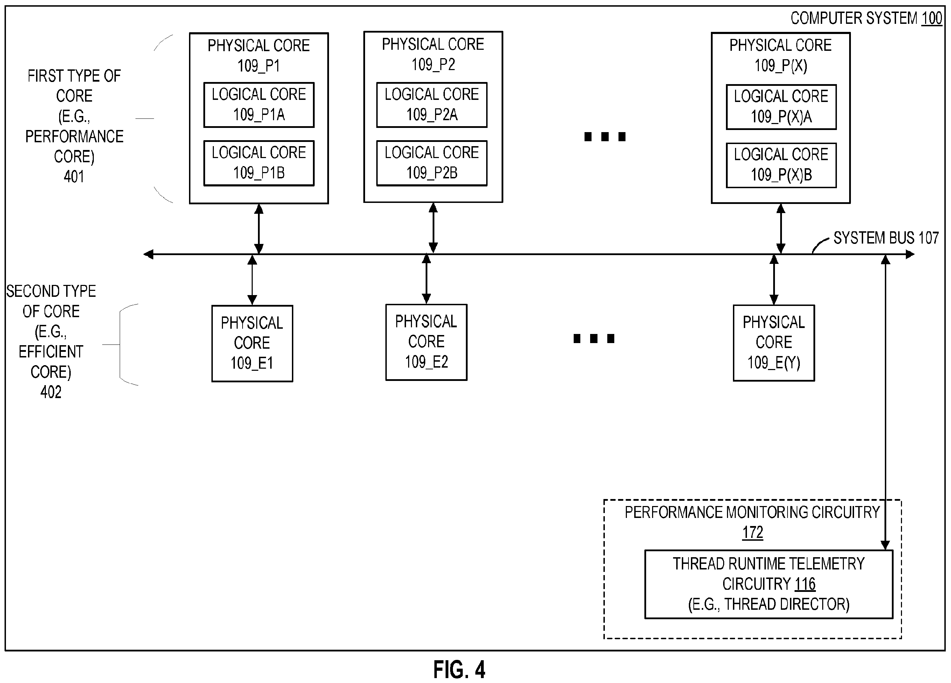

FIG. 4 illustrates a computer system 100 including a first plurality of physical processor cores of a first type 401 and a second plurality of physical processor cores of a second type 402, where each core of the first type is to implement a plurality of logical processor cores according to some examples. In certain examples, the first type of core 401 is a SMT physical processor core (e.g., performance core (P-core)) (e.g., big core). In certain examples, the second type of core 402 is a less powerful non-SMT physical processor core (e.g., efficient core (E-core)) (e.g., small core).

In certain examples, a computer system 100 includes a plurality of SMT types of physical cores of the first physical core type 401, e.g., "X" number of physical cores 401 where X is an integer greater than one. In certain examples, each SMT type of first physical core 401 implements a plurality of logical cores, e.g., an operating system (and application) views each logical core as if it is its own discrete core even where two logical cores are implemented by the same physical core. In FIG. 4, (e.g., performance) physical core 109P-1 implements logical core 109P-1A and logical core 109P-1B, (e.g., performance) physical core 109P-2 implements logical core 109P-2A and logical core 109P-2B, (e.g., performance) physical core 109P(X) implements logical core 109P(X)A and logical core 109P(X)B, etc.

In certain examples, a computer system 100 includes a plurality of non-SMT types (or in other examples, SMT types) of physical cores of the second physical core type 402, e.g., "Y" number of physical cores 402 where Y is an integer greater than one (e.g., where X and Y are equal in some examples and not equal in other examples). In certain examples, each non-SMT type of second physical core 402 implements only a single logical core. In FIG. 4, (e.g., energy efficiency) physical core 109E-1 implements a single logical core, (e.g., energy efficiency) physical core 109E-2 implements a single logical core, physical core 109E(Y) implements a single logical core, etc. In one example, computer system 100 includes six SMT physical processor cores of the first type 401 (e.g., 12 logical processor cores) and eight non-SMT physical processor cores of the second type 402, so 14 (6+8) physical processor cores but 20 (12+8) logical processor cores total for such a computer system 100.

In certain examples, thread runtime telemetry circuitry 116 (e.g., Thread Director circuitry) is to generate runtime telemetry data for the computer system 100 in FIG. 4, e.g., including one or more capability values generated for each logical core. In certain examples, performance monitoring circuitry 172 is to generate performance data for the computer system 100 in FIG. 4, e.g., not including one or more capability values for each logical core.

FIGS. 5A-5B illustrate an example format 500A-500B for hardware feedback telemetry data (e.g., per logical processor core) according to some examples. In certain examples, hardware feedback telemetry data according to format 500A-500B is generated by thread runtime telemetry circuitry 116 (e.g., Thread Director circuitry). In certain examples, hardware feedback telemetry data is stored in run time telemetry (e.g., Thread Director) hardware feedback data structure 250 (e.g., table). In certain examples, upper case CL is a class and upper case CP is a capability defined for the processor. In certain examples, a first capability is a performance capability, and a second capability is an energy efficiency capability. In certain examples, the various classes (CL) indicate (e.g., performance) differences between the cores (e.g., different core functionality), e.g., classes where certain cores (e.g., P-cores) offer higher performance than other cores (e.g., E-cores). For example, where a first class (e.g., class 1) indicates support for an ISA extension such as, but not limited to, vector extensions (e.g., AVX) (e.g., AVX2-FP32), matrix extensions (e.g., AMX), etc., and Class 2 indicates higher Vector Neural Network Instructions (VNNI) (e.g., AVX512 VNNI) performance differences. Certain examples include a class to track waits (e.g., UMWAIT/TPAUSE/PAUSE, etc.) to prevent Performance-cores (e.g., P-cores) from sitting idle while real work goes to the Efficient-cores (e.g., E-cores). Classes may also be used to indicate support for one or more accelerators or sub-types of accelerators (e.g., matrix accelerators, in-memory compute accelerators, etc.).

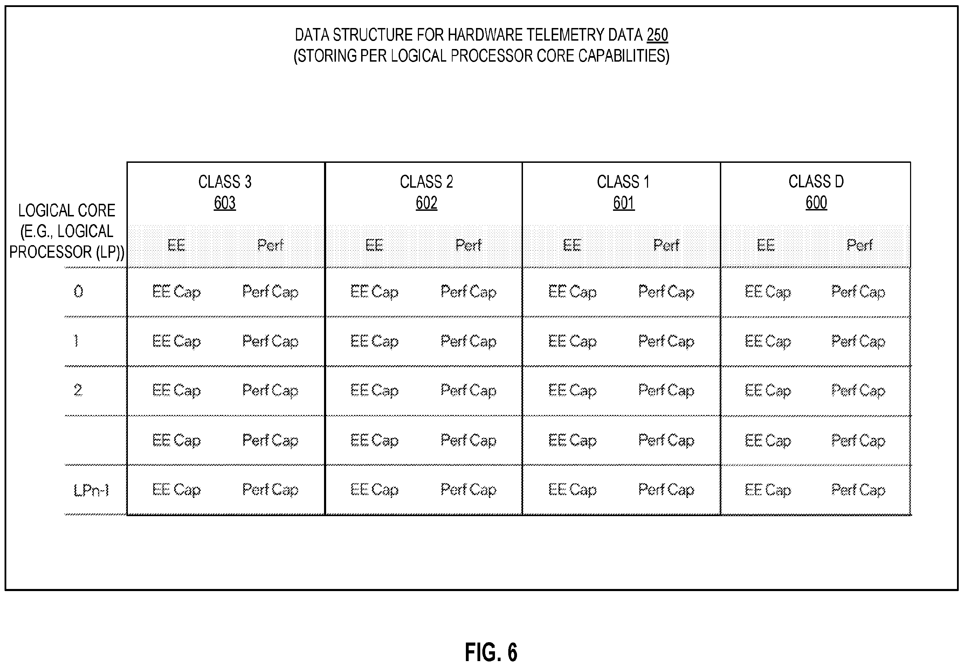

FIG. 6 illustrates a hardware feedback data structure 250 for hardware feedback telemetry data storing an energy efficiency capability value and a performance capability value for each logical processor core of a computer system according to some examples. In certain examples, thread runtime telemetry circuitry 116 (e.g., Thread Director circuitry) is to populate hardware feedback data structure 250 in FIG. 6 during runtime of a processor including logical processor cores to LPn-1 (e.g., this would be LP 0 to 19 for the 20 logical processor core example computer system 100 that includes six SMT physical processor cores of the first type 401 (e.g., 12 logical processor cores) and eight non-SMT physical processor cores of the second type 402. In certain examples, thread runtime telemetry circuitry 116 (e.g., hybrid scaling predictor 240 thereof) is to generate a performance capability (Perf Cap) 242P (e.g., per logical processor core) and/or an energy efficiency capability (EE Cap) 242E (e.g., per logical processor core), and populate hardware feedback data structure 250 in FIG. 6 (e.g., in runtime). In certain examples, this predicted capability is for a current time. In certain examples, the predicted performance capability (Perf Cap) and/or predicted energy efficiency capability (EE Cap) is generated (and populated in hardware feedback data structure 250) for each logical processor core and/or for each class (e.g., class D 600, Class 1 601, Class 2 602, Class 3 603, etc.).

In certain examples, an operating system (e.g., OS scheduler) is to choose between using the predicted performance capability (Perf Cap) and/or predicted energy efficiency capability (EE Cap) to schedule a thread on a particular logical processor (LP) (e.g., LP core), e.g., depending on parameters such as power policy, battery slider, etc.

In certain examples, an Operating System can determine the index for a Logical Processor Entry within the hardware feedback data structure 250 (e.g., Thread Director table) by executing a CPU Identification (CPUID) instruction on that logical processor, e.g., with a corresponding ID value returned to CPUID.06H.0H:EDX[31:16] of that logical processor.

### Checking/Triggering of SMT Core Isolation

Certain examples herein implement the dynamic SMT scheduling disclosed herein, for example, to provide core isolation via forced core parking of logical SMT sibling processors when desired (e.g., when necessary), e.g., while allowing a less restrictive (e.g., "small or idle") scheduling policy for user-initiated background tasks (e.g., compiler/render, etc.) running on the system to take advantage of SMT physical processor cores (e.g., performance cores (P-cores)) (e.g., big cores). For example, to avoid totally disabling simultaneous multi-threading (SMT) and/or only processing background tasks on less powerful (e.g., non-SMT) physical processor cores (e.g., E-cores) and/or because certain applications spawn threads based on logical core count and not just physical core count (e.g., the OS scheduler does not have the physical core count).

In certain examples, a determination on when to deliver core isolation is dependent on (i) utilization and thread concurrency of foreground tasks (e.g., threads for a foreground application, e.g., application 1 code 168 in FIG. 1) and (ii) overall workload characteristic based on package power and system-wise processor core utilization (e.g., e.g., with an Advanced Configuration and Power Interface (ACPI) standard's "C0" working state utilization percentage being referred to as "C0%").

FIG. 7 is a flow diagram illustrating operations 700 of a method of performing dynamic simultaneous multi-threading (SMT) scheduling (e.g., including SMT core isolation) according to some examples. Some or all of the operations 700 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory. One example is, using EPP information, the machine (e.g., processor) can determine which code is high priority/QoS and which one is low priority/QoS, and if those tasks were to be scheduled on an SMT sibling of a same physical core, then provide isolation to higher priority/QoS code.

The operations 700 include, at block 702, determining if an application (e.g., an application that requested the operating system to execute a thread on a processing system) is a foreground application. In certain examples, this determining at block 702 includes checking if the application has a class of service (CLOS) (e.g., stored in a CLOS register of a processor) (e.g., in IA32_PQR_ASSOC MSR (e.g., 0xC8F)) that is below a threshold, for example, where a CLOS value below this threshold (e.g., CLOS=0) means it is a foreground application (e.g., has a high quality of service (high QoS)), e.g., and a CLOS value above this threshold means it is not a foreground application (e.g., it is a background application). In certain examples, this determining at block 702 includes checking if the application has an energy performance preference (EPP) value (e.g., stored in a hardware-controlled performance states (HWP) register (e.g., 0198H)) that is below a threshold, for example, where an EPP value below this threshold means it is a foreground application, e.g., and an EPP value above this threshold means it is not a foreground application (e.g., it is a background application). In certain examples, if the application (e.g., an application that requested the operating system to execute a thread on a processing system) is not a foreground application, the operations 700 cease (e.g., until another application requests the operating system to execute a thread on a processing system) and if it is a foreground (FG) application, the operations 700 proceed to block 704.

The operations 700 further include, at block 704, determining if the foreground application is CPU intensive, e.g., does the foreground application use more than a threshold number of (e.g., a single) logical processor core(s), and if no, proceeding back to block 702, and if yes, proceeding to block 706. In certain examples, this determining at block 704 includes checking if the average CPU utilization for that application (e.g., the application's C0) (e.g., as tracked by performance monitoring circuit 172) is greater than a threshold number of logical processor core(s), e.g., greater than a 100% of a logical processor core.

The operations 700 further include, at block 706, determining if the foreground application is lightly threaded, e.g., is the foreground application to use less than or equal to the number of physical cores that support multi-threading (e.g., SMT P-cores), and if no, proceeding back to block 702, and if yes, proceeding to block 708. In another example, instead of proceeding to block 708, the operations proceed to block 710 for core isolation, e.g., where block 708 is optional or not included. In certain examples, this determining at block 706 includes checking if the concurrency (e.g., number of threads that are to concurrently execute by the application) of the foreground application is less than the SMT core count (e.g., the SMT core count determined from a status register, e.g., MSR 0x35).

The operations 700 further include, at block 708, determining, based on package power and/or CPU utilization (e.g., system-wide C0%), is the system workload sustained, e.g., is there background activity (e.g., background application(s)) that will contend for cores with the foreground application, and if no, proceeding back to block 702, and if yes, proceeding to block 710.

The operations 700 further include, at block 710, applying SMT core isolation.

In certain examples, the SMT core isolation at block 710 includes disabling each SMT physical core's (e.g., of all SMT physical cores of a system) logical cores except for one in each physical core, e.g., the rest of those logical cores of a single physical core being referred to as that one (not-disabled) logical core's "siblings". Using FIG. 4 as an example, in certain examples this would disable (e.g., not allow the use of) logical core 109_P1B, logical core 109_P2B, through logical core 109_P(X)B.

In certain examples, the SMT core isolation at block 710 includes disabling the sibling logical cores only for those SMT physical core's that are to be used by the foreground application (e.g., not all disabling the sibling logical cores for all the SMT physical cores of a system). Using FIG. 4 as an example, in certain examples the foreground application is to only use logical core 109_P1A of physical core 109_P1, and thus the operations at block 710 would include disabling (e.g., not allow the use of) logical core 109_P1B, but without disabling logical core 109_P2B through logical core 109_P(X)B. Using FIG. 4 as another example, in certain examples the foreground application is to only use logical core 109_P1A of physical core 109_P1 and logical core 109_P2A of physical core 109_P2, and thus the operations at block 710 would include disabling (e.g., not allow the use of) logical core 109_P1B and logical core 109_P2B, but without disabling logical core 109_P(X)B.

In certain examples, SMT core isolation (e.g., at block 710) is trigged for a request (e.g., a request to schedule a thread for an application), by checking:
If X% < foreground application's utilization < Y%
where X and Y represents foreground utilization thresholds between which SMT sibling logical cores can be parked during sustained workload. In certain examples, if foreground application's usage falls within this range, the foreground application's work does not spill over to SMT sibling logical cores, e.g., such that the SMT siblings may be parked to improve performance. In certain examples, this check also includes checking if "C0" (e.g., where C0 is the active time of that core/CPU) and package power-based system (e.g., SoC) workload detection on the platform is sustained, e.g., indicating sustained background activity that could impact the foreground application's responsiveness.

Referring again to the example of a computer system 100 that includes six SMT physical processor cores of the first type 401 (e.g., 12 logical processor cores) and eight non-SMT physical processor cores of the second type 402, so 14 (6+8) physical processor cores but 20 (12+8) logical processor cores total for such a computer system 100, a trigger for SMT Core Isolation is checking if foreground application utilization (e.g., C0%) is between 100% usage of 1 thread to 100% usage of 14 threads with thread concurrency < 14 and sustained background activity, and if that check passed, then take appropriate action to park SMT siblings to improve foreground performance during concurrent workloads.

In certain examples, a trigger for SMT Core Isolation is checking if 100% of 1 thread < Foreground App utilization < 100% of (total # of physical cores, e.g., via MSR 0x35), and checking for sustained background activity, and if that check passed, then take appropriate action to park SMT siblings to improve foreground performance during concurrent workloads.

### SMT Core Isolation

In certain examples, upon determining to trigger SMT core isolation, SMT core isolation (e.g., disabling all but one logical core on a set of one or more SMT physical cores) is achieved by configuring platform specific trigger(s) and action(s). In certain examples, upon determining to trigger SMT core isolation, SMT core isolation (e.g., disabling all but one logical core on an SMT physical core) is achieved by updating a run time core parking configuration on the platform (e.g., computer system).

In certain examples, SMT core isolation is achieved by updating run time processor power management configuration settings (e.g., of an OS) to implement SMT core parking. In certain examples, such forced core parking of sibling logical processor cores of SMT physical processor cores is be achieved by limiting a number of logical processors (e.g., CPUs) available for scheduling, for example, by setting a corresponding value into a control value 164 of OS 160 (e.g., "CPMaxCores" value) (e.g., a processor power management (PPM) control value), e.g., a control value which denotes maximum % of unparked processors on the platform. In certain examples, this includes setting the control value 164 (e.g., CPMaxCores) = (# of Physical cores/ Total # of Threads) * 100.

Referring again to the example of a computer system 100 that includes six SMT physical processor cores of the first type 401 (e.g., 12 logical processor cores) and eight non-SMT physical processor cores of the second type 402, so 14 (6+8) physical processor cores but 20 (12+8) logical processor cores total for such a computer system 100, setting the control value 164 (e.g., CPMaxCores) to 70% = (14/20) * 100 will prevent the OS 160 (e.g., OS scheduler 162) from scheduling on the remaining 30% (i.e., 6) SMT siblings.

In certain examples, SMT core isolation (e.g., core parking) is implemented in via hardware, for example, thread runtime telemetry circuitry 116 (e.g., (i) Hardware Guide Scheduler (HGS) (or HGS+) circuitry or (ii) Thread Director circuitry). In certain examples, SMT core isolation (e.g., core parking) is implemented with hardware guided scheduling with a per-logical thread entry. In certain examples, the hardware is used to cause a hint (or other value) to be readable by the OS to avoid (e.g., not use) the SMT sibling cores (e.g., even though they were actually available to perform that work). In certain examples, the processor (e.g., via non-transitory machine-readable medium that stores power management code (e.g., p-code)) is to cause the thread runtime telemetry circuitry 116 (e.g., (i) Hardware Guide Scheduler (HGS) (or HGS+) circuitry or (ii) Thread Director circuitry) to implement SMT core isolation (e.g., core parking), e.g., by modifying values in hardware feedback data structure 250. Referring to FIG. 6, in certain examples if a SMT physical core implements logical processor (LP) (e.g., logical processor core) 0 and logical processor (LP) (e.g., logical processor core) 1, and it is desired to disable logical processor (LP) (e.g., logical processor core) 1 (and not disable LP 0), a corresponding write (e.g., of zero) is performed to the predicted performance capability (Perf Cap) and/or predicted energy efficiency capability (EE Cap) (e.g., in all classes or a subset of applicable classes) for the LP 1 row (the second row in the table in FIG. 6). In certain examples, an indication to use LP 0 may also be written to hardware feedback data structure 250 to fully enable (e.g., encourage) use of LP0, e.g., a corresponding write (e.g., of maximum value, e.g., 255) being performed to the predicted performance capability (Perf Cap) and/or predicted energy efficiency capability (EE Cap) (e.g., in all classes or a subset of applicable classes) for the LP 0 row (the first row in the table in FIG. 6).

The above discusses examples where a hardware feedback data structure 250 is used for telemetry data (e.g., capability values), however it should be understood that the telemetry data (e.g., capability values) may be sourced otherwise (e.g., directly from hybrid scaling predictor 240), e.g. and the telemetry data therefrom may be modified according to this disclosure to implement SMT core isolation (e.g., core parking).

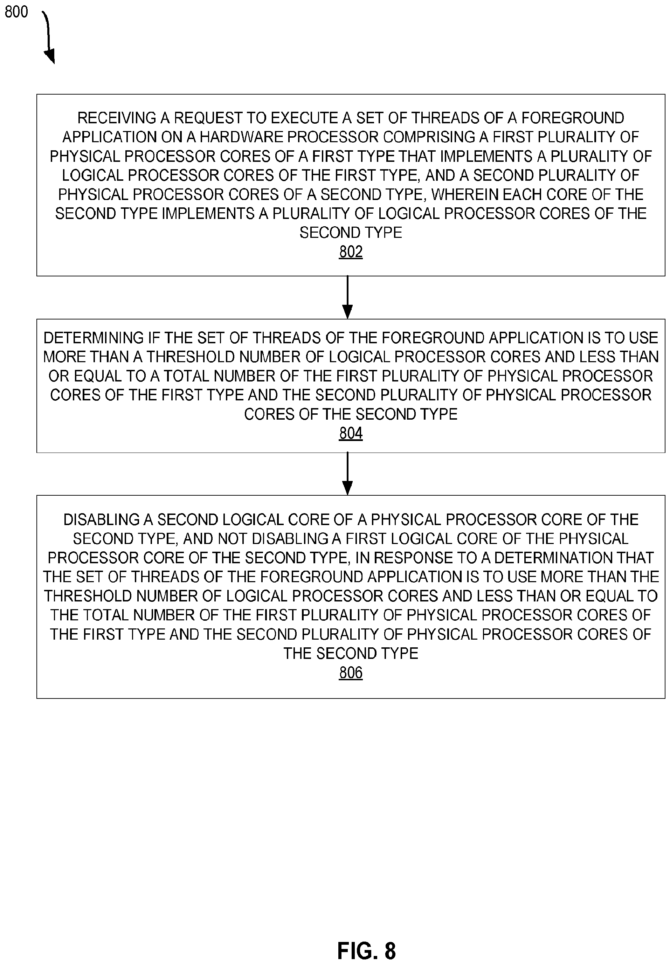

FIG. 8 is a flow diagram illustrating operations 800 of another method of performing dynamic simultaneous multi-threading (SMT) scheduling according to some examples. Some or all of the operations 800 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory.

The operations 800 include, at block 802, receiving a request to execute a set of threads of a foreground application on a hardware processor comprising a first plurality of physical processor cores of a first type that implements a plurality of logical processor cores of the first type, and a second plurality of physical processor cores of a second type, wherein each core of the second type implements a plurality of logical processor cores of the second type. The operations 800 further include, at block 804, determining if the set of threads of the foreground application is to use more than a threshold number of logical processor cores and less than or equal to a total number of the first plurality of physical processor cores of the first type and the second plurality of physical processor cores of the second type. The operations 800 further include, at block 806, disabling a second logical core of a physical processor core of the second type, and not disabling a first logical core of the physical processor core of the second type, in response to a determination that the set of threads of the foreground application is to use more than the threshold number of logical processor cores and less than or equal to the total number of the first plurality of physical processor cores of the first type and the second plurality of physical processor cores of the second type.

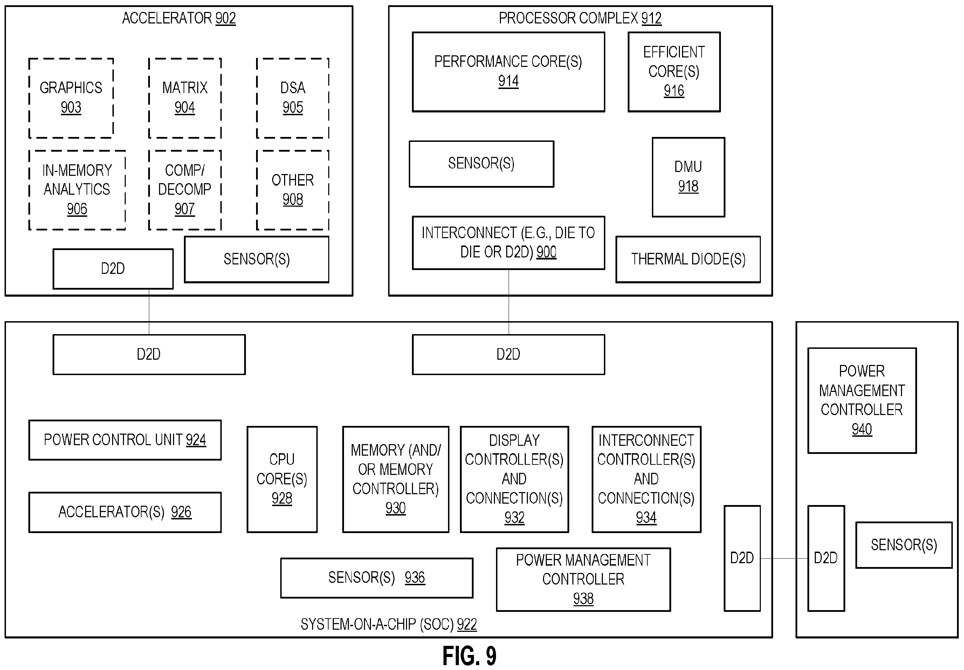

FIG. 9 illustrates examples of a processing apparatus. The processing apparatus includes at least one or more of a system-on-a-chip (SOC) 922, a processor complex 912, one or more accelerators 902, a power management controller 938 and/or 940, etc. In some examples, the above aspects are connected with die-to-die (D2D) interconnects 900. In some examples, some the SOC 922 includes additional components such as more cores, accelerators, etc. Note that the "boxes" for one or more accelerators 902, processor complex 912, and SOC 922, etc. could be redrawn. For example, one or more of the accelerators may be a part of the SOC 922 or processor complex 912, etc. (see, e.g., accelerator(s) 926).

The one or more accelerators 902 may include one or more of one or more graphical processing units (GPUs) 903, one or more matrix processing units 904, one or more data stream accelerators 905 (e.g., for storage networking, and or data-intensive workloads such as copying and transforming data), one or more in-memory analytics accelerators 906 (e.g., to perform compression and decompression along with analytics), one or more data encryption and compression accelerators 907, and/or other accelerators 908 that may include, but are not limited to vision, machine learning model specific hardware (e.g., an accelerator for a Transformer-based model), field programmable gate arrays (FPGAs), etc.

The processor complex 912 may include one or more performance cores 914 and one or more efficient cores 916. In some examples, the one or more performance cores 914 and one or more efficient cores 916 share an instruction set architecture. In some examples, the one or more performance cores 914 and one or more efficient cores 916 have differing instruction set architectures (although there may be some overlap). A DMU 918 (e.g., data management unit) runs "dcode" firmware and/or software may also be included.

The SoC 922 includes at least one or more of a power control unit 924 (PCU or punit) that runs pcode, one or more accelerators 926, one or more CPU cores 928 (e.g., efficient cores), a memory controller and/or memory 930, one or more display controllers and connections 932 (e.g., a display driver, ports, etc.), and/or one more interconnect controllers and/or connections.

In some examples, a power management controller (e.g., power management controller (PMC) 938 or 940) controls the supply of power to components such as the processor cores, accelerators, etc. A PMC may have access to one or more storage devices to store information relating to operations of logic. The PMC may be coupled to a voltage regulator (VR) and/or other components of system (such as the cores). For example, the PMC may be coupled to receive information (e.g., in the form of one or more bits or signals) to indicate status of one or more sensors 936 (where the sensor(s) (e.g., thermal diodes) may be proximate to components of system (or other computing systems discussed herein), such as the cores interconnections, etc., to sense variations in temperature, operating frequency, operating voltage, power consumption, inter-core communication activity, etc.) and/or information from one or more power monitoring logics (e.g., which may indicate the operational status of various components of system such as operating temperature, operating frequency, operating voltage, operating status (e.g., active or inactive), power consumption (instantly or over a period of time), etc.). A PMC may instruct a VR, power source, and/or individual components of system to modify their operations. In an embodiment, variations may be sensed in such a way to account for leakage versus active power. For example, a PMC may indicate to the VR and/or power source to adjust their output. In some embodiments, a PMC may request the cores, etc. to modify their operating frequency, power consumption, etc. Note that the processor complex, accelerators, etc. may include a PMC.

In some examples, at least a subset of the processor complex 912, SOC 922, and the one or more accelerators 902 share a unified memory (e.g., a shared virtual memory).

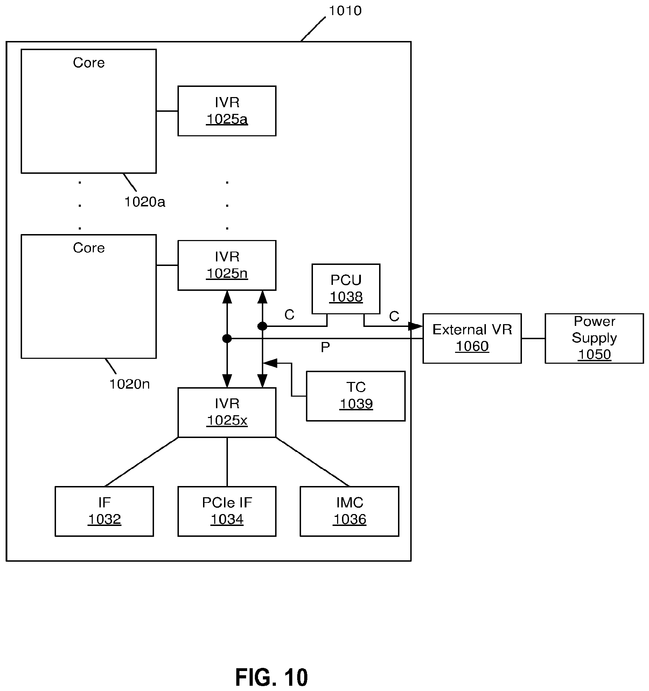

FIG. 10 illustrates examples of a block diagram of a portion of a system. As shown in FIG. 10, system 1000 may include various components, including a processor 1010 which as shown is a multicore processor. Processor 1010 may be coupled to a power supply 1050 via an external voltage regulator 1060, which may perform a first voltage conversion to provide a primary regulated voltage to processor 1010.

As seen, processor 1010 may be a single die processor including multiple cores 1020ₐ - 1020ₙ. In addition, each core may be associated with an integrated voltage regulator (IVR) 1025ₐ - 1025ₙ which receives the primary regulated voltage and generates an operating voltage to be provided to one or more agents of the processor associated with the IVR. Accordingly, an IVR implementation may be provided to allow for fine-grained control of voltage and thus power and performance of each individual core. As such, each core can operate at an independent voltage and frequency, enabling great flexibility and affording wide opportunities for balancing power consumption with performance. In some embodiments, the use of multiple IVRs enables the grouping of components into separate power planes, such that power is regulated and supplied by the IVR to only those components in the group. During power management, a given power plane of one IVR may be powered down or off when the processor is placed into a certain low power state, while another power plane of another IVR remains active, or fully powered.

Still referring to FIG. 10, additional components may be present within the processor including an input/output interface 1032, another interface 1034, and an integrated memory controller 1036. As seen, each of these components may be powered by another integrated voltage regulator 1025ₓ. In one embodiment, interface 1032 may be enable operation for an Intel^{®} Quick Path Interconnect (QPI) interconnect, which provides for point-to-point (PtP) links in a cache coherent protocol that includes multiple layers including a physical layer, a link layer and a protocol layer. In turn, interface 1034 may communicate via a Peripheral Component Interconnect Express (PCIe^{™}) protocol.

Also shown is a power control unit (PCU) 1038, which may include hardware, software and/or firmware to perform power management operations with regard to processor 1010. As seen, PCU 1038 provides control information to external voltage regulator 1060 via a digital interface to cause the voltage regulator to generate the appropriate regulated voltage. PCU 1038 also provides control information to IVRs 1025 via another digital interface to control the operating voltage generated (or to cause a corresponding IVR to be disabled in a low power mode). In various embodiments, PCU 1038 may include a variety of power management logic units to perform hardware-based power management. Such power management may be wholly processor controlled (e.g., by various processor hardware, and which may be triggered by workload and/or power, thermal or other processor constraints) and/or the power management may be performed responsive to external sources (such as a platform or management power management source or system software).

In embodiments herein, PCU 1038 may be configured to control domains within processor 1010 to operate at one of multiple different operating points. More specifically, PCU 1038 may determine operating points for the different domains. In addition, understand that a fast mechanism, e.g., external to PCU 1038, may be involved in performing throttle operations in response to a platform event. Thus as illustrated further in FIG. 10, a throttling circuit 1039 (which in some cases may be a distributed hardware circuit) may further be in communication with IVRs 1025 (and/or cores 1020 themselves). In this way, throttling circuit 1039 may, based at least in part on translation information received from PCU 1038, translate a processor throttling power level to corresponding throttling levels for individual domains (such as cores 1020 or so forth), as described further herein.

While not shown for ease of illustration, understand that additional components may be present within processor 1010 such as uncore (outside of a core) logic, and other components such as internal memories, e.g., one or more levels of a cache memory hierarchy and so forth. Furthermore, while shown in the implementation of FIG. 10 with an integrated voltage regulator, embodiments are not so limited.

Processors described herein may leverage power management techniques that may be independent of and complementary to an operating system (OS)-based power management (OSPM) mechanism. According to one example OSPM technique, a processor can operate at various performance states or levels, so-called P-states, namely from P0 to PN. In general, the P1 performance state may correspond to the highest guaranteed performance state that can be requested by an OS. In addition to this P1 state, the OS can further request a higher performance state, namely a P0 state. This P0 state may thus be an opportunistic or turbo mode state in which, when power and/or thermal budget is available, processor hardware can configure the processor or at least portions thereof to operate at a higher than guaranteed frequency. In many implementations a processor can include multiple so-called bin frequencies above the P1 guaranteed maximum frequency, exceeding to a maximum peak frequency of the particular processor, as fused or otherwise written into the processor during manufacture. In addition, according to one OSPM mechanism, a processor can operate at various power states or levels. With regard to power states, an OSPM mechanism may specify different power consumption states, generally referred to as C-states, C0, C1 to Cn states. When a core is active, it runs at a C0 state, and when the core is idle it may be placed in a core low power state, also called a core non-zero C-state (e.g., C1-C6 states), with each C-state being at a lower power consumption level (such that C6 is a deeper low power state than C1, and so forth).

Understand that many different types of power management techniques may be used individually or in combination in different embodiments. As representative examples, a power controller may control the processor to be power managed by some form of dynamic voltage frequency scaling (DVFS) in which an operating voltage and/or operating frequency of one or more cores or other processor logic may be dynamically controlled to reduce power consumption in certain situations. In an example, DVFS may be performed using Enhanced Intel SpeedStep^{™} technology available from Intel Corporation, Santa Clara, CA, to provide optimal performance at a lowest power consumption level. In another example, DVFS may be performed using Intel TurboBoost^{™} technology to enable one or more cores or other compute engines to operate at a higher than guaranteed operating frequency based on conditions (e.g., workload and availability).

FIG. 11 illustrates examples of a system. As illustrated in FIG. 11, system 1100 includes a processor 1110 which may be, in an embodiment, a heterogeneous multicore processor that couples to a system memory 1160 implemented as a DRAM, in one embodiment. As further illustrated, an OS 1170 executes on processor 1110. Processor 1110 includes at least a single core 1120 shown for representative purposes. Core 1120 couples to a PCU 1130 via a mailbox interface 1150 which, in an embodiment may be implemented as a microcode mailbox interface. Of course other interfaces to enable communication between core 1120 and PCU 1130 are possible.

As further illustrated, processor 1110 also includes a set of registers 1140. Registers 1140 may include a variety of MSRs, status registers, configuration registers and so forth. In the particular embodiment shown in FIG. 11, such registers include a CPUID register 1142. Of interest, CPUID register 1142 may include a hardware feedback field which when set indicates that the processor is capable of providing dynamic hardware feedback information to an OS. A hardware feedback pointer MSR 1144 may include a hardware feedback pointer field to store a pointer, written by the OS, to point to the location in memory in which the hardware feedback information structure is to be stored. A hardware feedback configuration MSR 1146 may store a hardware feedback configuration enable field which, when set, indicates that the processor is to perform hardware feedback processing as described herein. A package thermal interrupt register 1148 may include a hardware feedback notification enable indicator to enable triggering of an interrupt in response to an update to the hardware feedback information. And finally, a package thermal status register 1149 may include a hardware feedback notification log indicator, which may be set when updated hardware feedback information is written by PCU 1130, and may be reset by the OS when it reads the updated information.

Still with reference to FIG. 11, PCU 1130 includes a hardware feedback control 1135 (e.g., as a part of PCODE) which may compute hardware feedback information and trigger a writing of this information to memory 1160. More specifically, this information may be communicated via mailbox interface 1150 to core 1120. In turn, microcode of core 1120 may receive this hardware feedback information and write it to system memory 1160 and thereafter send an acknowledgement to PCU 1130 of the writing of this information.

Note that in other embodiments, a direct interface may be provided to enable PCU 1130 to directly write this hardware feedback information to system memory 1160. In embodiments, prior to actually being written to memory, the hardware feedback information may be temporarily cached as writeback information, e.g., in a last level cache of the processor. As such, OS 1170 may access the hardware feedback information either from the LLC if present therein or from memory 1160. Understand while shown at this high level in the embodiment of FIG. 11, many variations and alternatives are possible.

In some examples, a system contains multiple tiers of hybrid cores (e.g., as shown in FIG. 9). In some examples, there are variances in what power cores and/or efficiency cores are present (e.g., a power core of a first type and a power core of a second type, etc.). In some cases, the cores on the SoC die (a low power domain) are expected to be more efficient than the compute die (e.g., processor complex 912) efficiency cores only when the workload "fits" entirely on the SOC cores (CPU core(s) 928), such that the compute die can remain powered down for long stretches of time. It is expected that some common workloads like video playback will get a platform level battery life improvement from running exclusively on the SOC cores 928.

In some examples, a hint in the telemetry data format 500A and/or 500B is defined as a request that an OS consolidate all energy efficiency oriented tasks on the cores for which the energy efficiency capability = 255.

In some examples, a hint in the telemetry data format 500A and/or 500B is defined as a request that an OS consolidate performance oriented tasks on the cores for which the performance capability = 255.

In some examples, the telemetry data format 500A and/or 500B includes other capabilities per class such as power, latency (e.g., memory bandwidth), compute type (e.g., accelerator, accelerator type such as matrix, etc.). In some examples, the value of that field indicates an operating system should perform an action (such as use a lower power core with a value, use a higher power core, avoid a core with low memory bandwidth, use a core with high memory bandwidth, use an accelerator of a particular type, etc.).

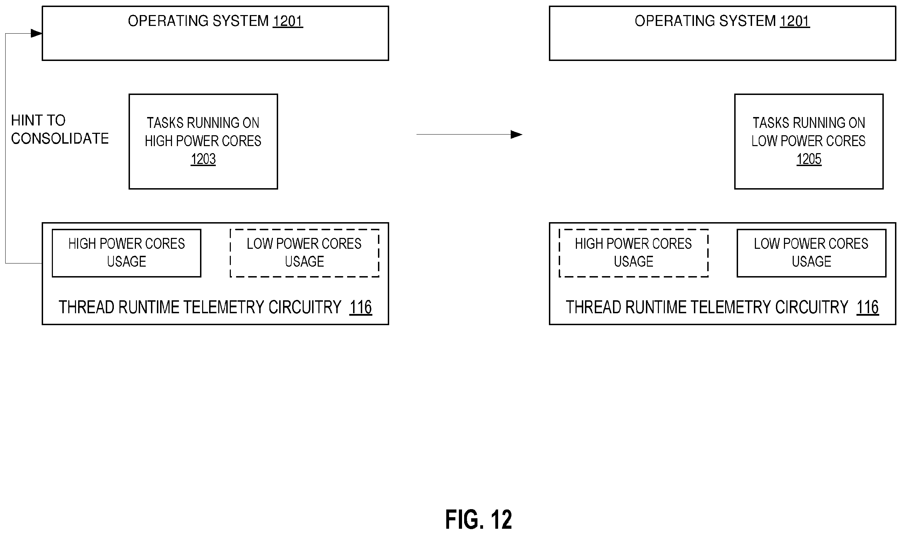

FIG. 12 illustrates examples of task movement. On the left hand side, tasks are shown as running on high power cores 1203. The thread runtime telemetry circuitry is updated 116 (in some examples, by PCODE) to provide a hint to an OS 1201 to consolidate the tasks to low power cores.

On the right hand side, tasks are shown as being migrated by the OS 1201 to low power cores 1205. Note that this is an example and tasks could go from lower power to higher power, from a general purpose core to an accelerator, from an accelerator to an performance core, etc.

In some examples there will be a limit on the use of the SOC cores 928 to scenarios where all work fits on those SOC cores 928, so that the compute die can be powered off. In some examples, an exception to this behavior is for scenarios where the SOC cores 928 are used for highly multithreaded scenarios where there are more threads than can be run on the available cores on the compute die.

In some examples, a naturally calculated performance and energy efficiency capabilities may bias the OS use toward the compute die cores.

In some examples, PCODE monitors activity on the compute die cores over time to detect operating windows where all work will fit on the SOC cores.

In some examples, when PCODE determines that all work on the system will fit on the SOC die cores, and that the workload is expected to be stable, the next telemetry data (of the thread runtime telemetry circuitry 116) update will be populated with special hints (detailed above) requesting that the OS consolidate all energy efficiency oriented work to run exclusively on the SOC cores. For example, in some instances the special HFI replaces the energy efficiency capability of the SOC cores with the value 255 for class 0 and class 3 workloads. All other table values will be calculated as defined elsewhere in this document.

In some examples, it is expected that class 1 and class 2 work will be more efficient when run on the compute die cores. Hence, the EE=255 hint will only be applied for class 0 and 3 workloads in some examples.

In some examples, when PCODE firmware determines that the work no longer "fits" on the SOC cores, the next telemetry data table update will be populated with the normally calculated values for the SOC cores. The work no longer fits when the operating frequency or voltage of the SOC cores is pushed above pre-determined thresholds.

For both the "fit" and "does not fit" cases, in some examples, a hysteresis time window may be applied to create inertia to minimize change in the hints to the operating system.

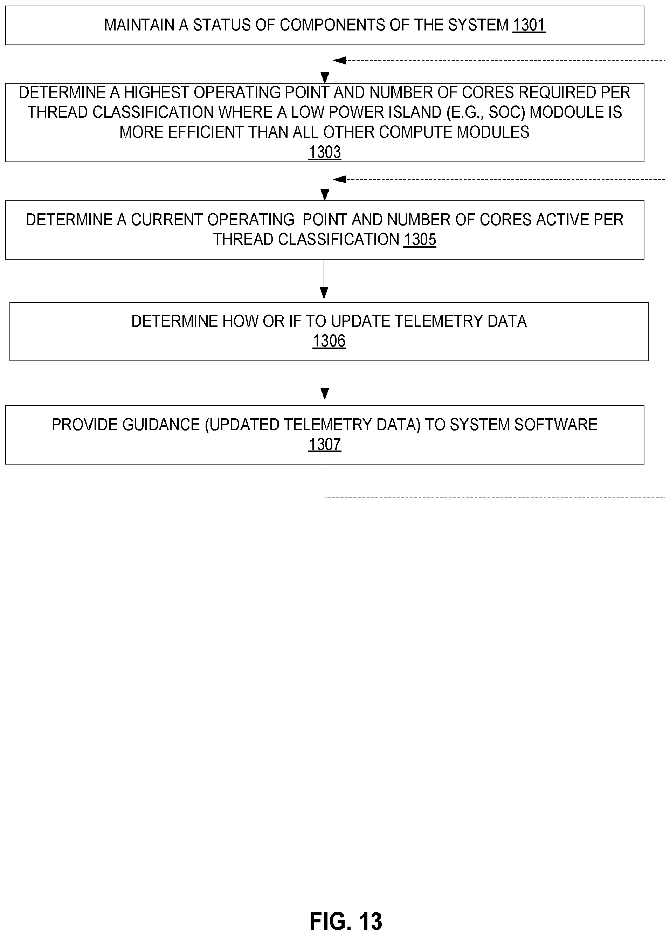

FIG. 13 illustrates examples of a method. In some examples, PCODE and/or DCODE performs these acts. In some examples, the thread runtime telemetry circuitry provides the telemetry feedback structure 250. In some examples, PCOD and/or DCODE updates the telemetry feedback structure 250 using the thread runtime telemetry circuitry. A status of components of the system at 1301. For example, core usage, average VCC for a system agent (VCCsa), C state (e.g., ACPI state such as a processor C6 state), core and/or core die parking status, a voltage minimum, etc.

The highest operating point and number of cores (e.g., core concurrency) required per thread classification (e.g., the classes discussed earlier with respect to the telemetry feedback data structure 250) where a low power island (e.g., SOC) module is more efficient than all other compute modules is determined at 1303. The highest operating point and cores may be considered hardware telemetry data. Other hardware telemetry data may include system operating characteristics such as one or more of temperature (system and/or component), core power, input/output power, power state, etc.

The classification may be considered thread runtime telemetry data. Other thread runtime telemetry data may include, but is not limited to per class latency, per class power, ISA support, memory and/or cache topology, etc.

A current operating point and number of cores active per thread classification is determined at 1305 based on SoC and compute telemetry.

A determination of if the hardware feedback telemetry data is to be updated is made at 1306. For example, if work currently running on the high power highland should be moved to the low power island and a hint generated. In some examples, the telemetry data maintained by thread runtime telemetry circuitry 116 is updated. This determination may be made on one or more factors such as workload type (bursty, sustained, inference, etc.), core availability, system power, system temperature, latency, concurrency, etc. The determination may also be based on a desired outcome (e.g,. speed, energy efficiency, etc.).

In some examples, the workload type and/or characteristics is/are considered. In some examples, if the workload type is inference, then a determination of if the workload is bursty or sustained or not is made. For example, if the workload is bursty or a sustained workload, then a hint should not be provided system software to consolidate the work on specific set of cores for energy efficiency. In those examples, both EE and performance are set to 00. In some examples, the class of cores is considered when determining when to generate a hint. For example, class 0 or class 3 cores can be set, but for class 1 and 2 the performance and EE information comes from the thread runtime telemetry circuitry.

If the workload type is not inference, bursty, or sustained, in some examples, the biasing (providing of a hint) is provided. In some examples, when a total core count of a particular type (e.g., efficiency cores) for the system can be met with just the cores in the SoC, then the hint is provided.

In some examples, the determination requires an amount of time to pass before a hint is updated.

In some examples, thermal information is used in the determination. For example, if a thermal level of the system and/or a particular compute element is too high, a consolidation hint may be used to move a thread.

In some examples, latency information is used in the determination. For example, if a latency value allows for a consolidation without adverse impact, a consolidation hint may be used to move a thread.

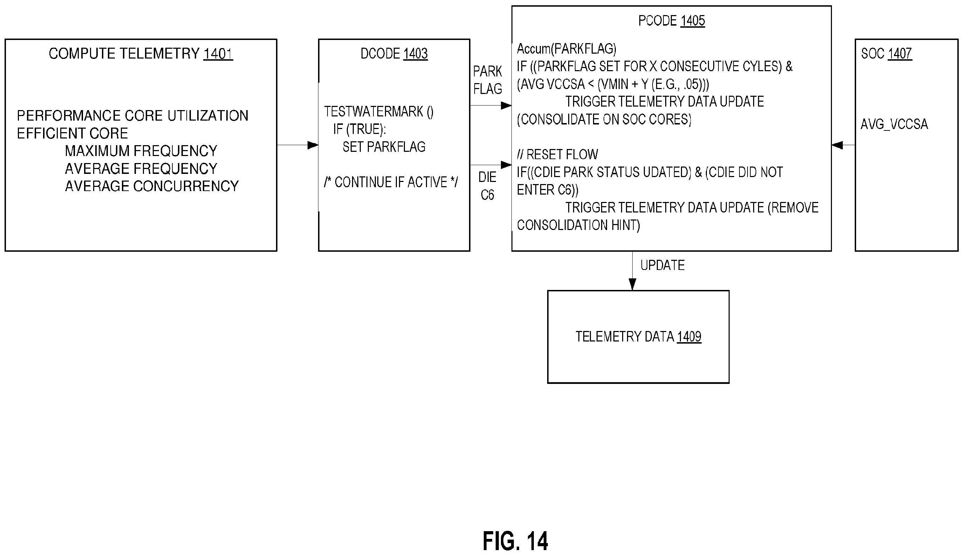

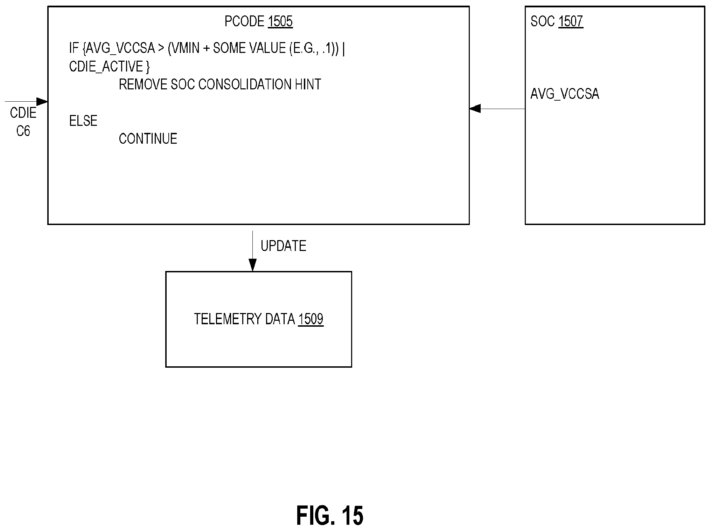

FIGS. 14 and 15 illustrate examples of determining when to update telemetry data.

FIG. 14 illustrates examples of interactions between actors in the potential updating of telemetry data. As shown, compute telemetry 1401 is provided to DCODE 1403 which determines if a core should be parked based on the compute telemetry 1401. The DCODE 1403 also determines an ACPI state of the processor complex. Note that "watermark" in the figure may include one or more of: performance core utilization, efficiency core max frequency, efficiency core avg frequency, average efficiency core concurrency, system agent VMin, and average VCCsa.

PCODE 1405 determines if a park indication (park flag) has been set for a set number of cycles and if the average VCCSA (provided by the SOC 1407) is less than some minimum voltage. If that is true, then the hardware feedback telemetry data 1409 is updated to indicate a consolidation on the SOC cores (e.g., setting efficiency to be 255). If not, then depending on the processor complexes C state a consolidation hint may be removed. Note that a steady state of not changing hardware feedback telemetry data 1409 may also occur.

Examples of pseudocode for FIG. 14 for compute (processor complex 912) migration are shown below.

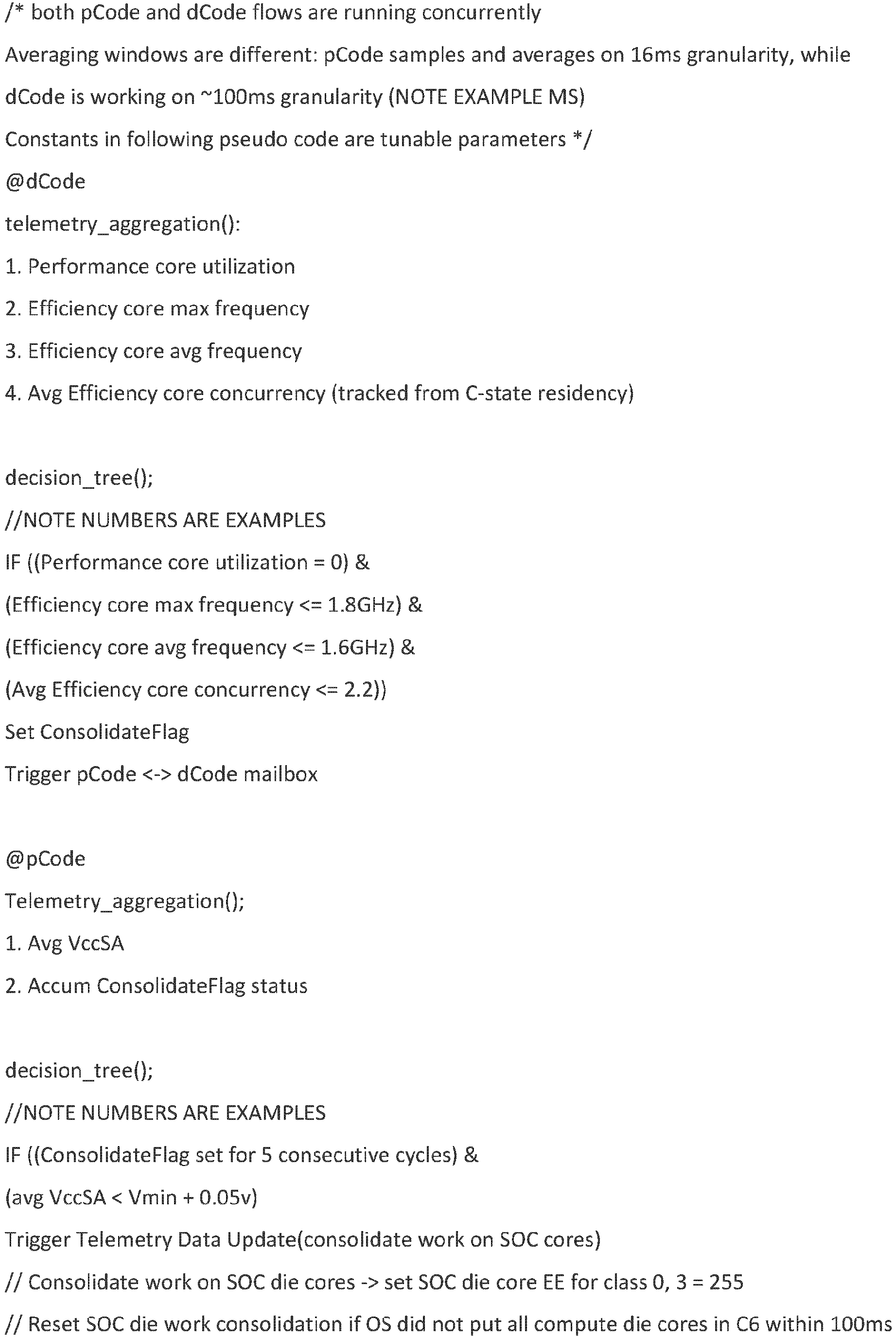

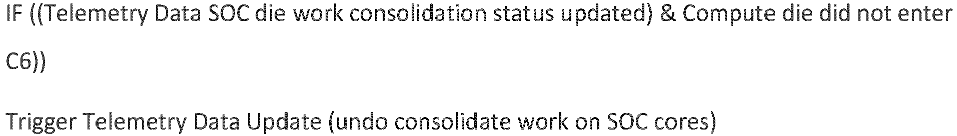

FIG. 15 illustrates examples of interactions between actors in the potential updating of telemetry data. As shown, PCODE 1505 determines if the average VCCSA (provided by the SOC 1507) is less than some minimum voltage or if the compute die (processor complex) is active. If so, then the then the hardware feedback telemetry data 1509 is updated to remove an indication of a consolidation on the SOC cores (e.g., setting efficiency to be something other than 255). Note that a steady state of not changing hardware feedback telemetry data 1509 may also occur.

Examples of pseudocode for FIG. 15 for compute (processor complex 912) migration are shown below.

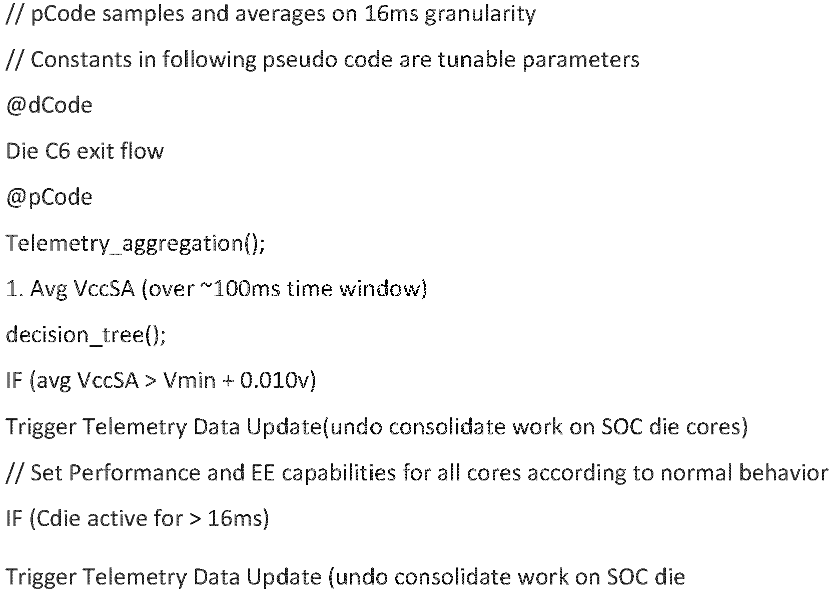

The (updated) telemetry data is provided to an system software (e.g., OS, VMM, hypervisor, etc.) at 1307. In some examples, a hint provided by the updated telemetry data is a request that an OS consolidate all energy efficiency oriented tasks on the cores for which the energy efficiency capability = 255. In some examples, a hint provided by the updated telemetry data us a request than an OS consolidate performance oriented tasks on the cores for which the performance capability = 255.

In some examples, a consolidation hint is reset based on telemetry data such as power states, voltage levels, thermal considerations (e.g., there is no longer a thermal issue), etc. at 1307. For example, if the system software did not put the required processing devices in a reduced power state. In some examples, if the compute die has been active for a determined period of time, a consolidation hint is removed. In some examples, if the average VCCsa of the Soc is greater than a determined value, a consolidation hint is removed.

Some examples utilize instruction formats described herein. Some examples are implemented in one or more computer architectures, cores, accelerators, etc. Some examples are generated or are IP cores. Some examples utilize emulation and/or translation.

### Example Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

### Example Systems

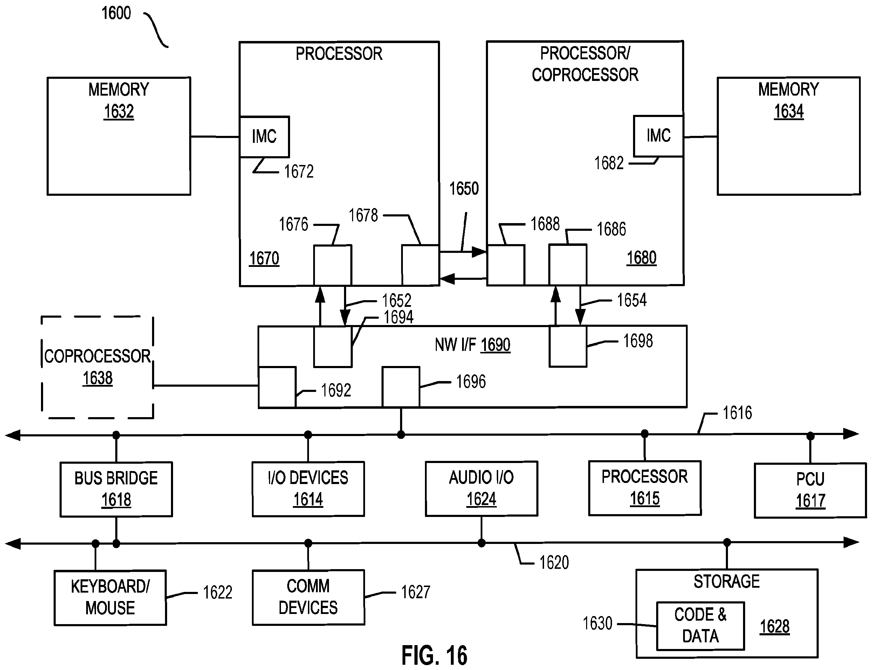

FIG. 16 illustrates an example computing system. Multiprocessor system 1600 is an interfaced system and includes a plurality of processors or cores including a first processor 1670 and a second processor 1680 coupled via an interface 1650 such as a point-to-point (P-P) interconnect, a fabric, and/or bus. In some examples, the first processor 1670 and the second processor 1680 are homogeneous. In some examples, first processor 1670 and the second processor 1680 are heterogenous. Though the example system 1600 is shown to have two processors, the system may have three or more processors, or may be a single processor system. In some examples, the computing system is a system on a chip (SoC).

Processors 1670 and 1680 are shown including integrated memory controller (IMC) circuitry 1672 and 1682, respectively. Processor 1670 also includes interface circuits 1676 and 1678; similarly, second processor 1680 includes interface circuits 1686 and 1688. Processors 1670, 1680 may exchange information via the interface 1650 using interface circuits 1678, 1688. IMCs 1672 and 1682 couple the processors 1670, 1680 to respective memories, namely a memory 1632 and a memory 1634, which may be portions of main memory locally attached to the respective processors.

Processors 1670, 1680 may each exchange information with a network interface (NW I/F) 1690 via individual interfaces 1652, 1654 using interface circuits 1676, 1694, 1686, 1698. The network interface 1690 (e.g., one or more of an interconnect, bus, and/or fabric, and in some examples is a chipset) may optionally exchange information with a coprocessor 1638 via an interface circuit 1692. In some examples, the coprocessor 1638 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 1670, 1680 or outside of both processors, yet connected with the processors via an interface such as P-P interconnect, such that either or both processors' local cache information may be stored in the shared cache if a processor is placed into a low power mode.

Network interface 1690 may be coupled to a first interface 1616 via interface circuit 1696. In some examples, first interface 1616 may be an interface such as a Peripheral Component Interconnect (PCI) interconnect, a PCI Express interconnect or another I/O interconnect. In some examples, first interface 1616 is coupled to a power control unit (PCU) 1617, which may include circuitry, software, and/or firmware to perform power management operations with regard to the processors 1670, 1680 and/or co-processor 1638. PCU 1617 provides control information to a voltage regulator (not shown) to cause the voltage regulator to generate the appropriate regulated voltage. PCU 1617 also provides control information to control the operating voltage generated. In various examples, PCU 1617 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1617 is illustrated as being present as logic separate from the processor 1670 and/or processor 1680. In other cases, PCU 1617 may execute on a given one or more of cores (not shown) of processor 1670 or 1680. In some cases, PCU 1617 may be implemented as a microcontroller (dedicated or general-purpose) or other control logic configured to execute its own dedicated power management code, sometimes referred to as P-code. In yet other examples, power management operations to be performed by PCU 1617 may be implemented externally to a processor, such as by way of a separate power management integrated circuit (PMIC) or another component external to the processor. In yet other examples, power management operations to be performed by PCU 1617 may be implemented within BIOS or other system software.

Various I/O devices 1614 may be coupled to first interface 1616, along with a bus bridge 1618 which couples first interface 1616 to a second interface 1620. In some examples, one or more additional processor(s) 1615, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 1616. In some examples, second interface 1620 may be a low pin count (LPC) interface. Various devices may be coupled to second interface 1620 including, for example, a keyboard and/or mouse 1622, communication devices 1627 and storage circuitry 1628. Storage circuitry 1628 may be one or more non-transitory machine-readable storage media as described below, such as a disk drive or other mass storage device which may include instructions/code and data 1630 and may implement the storage 'ISAB03 in some examples. Further, an audio I/O 1624 may be coupled to second interface 1620. Note that other architectures than the point-to-point architecture described above are possible. For example, instead of the point-to-point architecture, a system such as multiprocessor system 1600 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

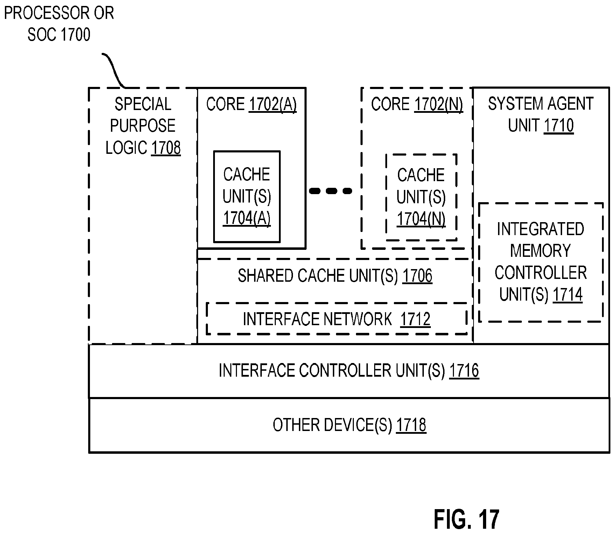

FIG. 17 illustrates a block diagram of an example processor and/or SoC 1700 that may have one or more cores and an integrated memory controller. The solid lined boxes illustrate a processor 1700 with a single core 1702(A), system agent unit circuitry 1710, and a set of one or more interface controller unit(s) circuitry 1716, while the optional addition of the dashed lined boxes illustrates an alternative processor 1700 with multiple cores 1702(A)-(N), a set of one or more integrated memory controller unit(s) circuitry 1714 in the system agent unit circuitry 1710, and special purpose logic 1708, as well as a set of one or more interface controller units circuitry 1716. Note that the processor 1700 may be one of the processors 1670 or 1680, or co-processor 1638 or 1615 of FIG. 16.

Thus, different implementations of the processor 1700 may include: 1) a CPU with the special purpose logic 1708 being integrated graphics and/or scientific (throughput) logic (which may include one or more cores, not shown), and the cores 1702(A)-(N) being one or more general purpose cores (e.g., general purpose in-order cores, general purpose out-of-order cores, or a combination of the two); 2) a coprocessor with the cores 1702(A)-(N) being a large number of special purpose cores intended primarily for graphics and/or scientific (throughput); and 3) a coprocessor with the cores 1702(A)-(N) being a large number of general purpose in-order cores. Thus, the processor 1700 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 1700 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1704(A)-(N) within the cores 1702(A)-(N), a set of one or more shared cache unit(s) circuitry 1706, and external memory (not shown) coupled to the set of integrated memory controller unit(s) circuitry 1714. The set of one or more shared cache unit(s) circuitry 1706 may include one or more mid-level caches, such as level 2 (L2), level 3 (L3), level 4 (L4), or other levels of cache, such as a last level cache (LLC), and/or combinations thereof. While in some examples interface network circuitry 1712 (e.g., a ring interconnect) interfaces the special purpose logic 1708 (e.g., integrated graphics logic), the set of shared cache unit(s) circuitry 1706, and the system agent unit circuitry 1710, alternative examples use any number of well-known techniques for interfacing such units. In some examples, coherency is maintained between one or more of the shared cache unit(s) circuitry 1706 and cores 1702(A)-(N). In some examples, interface controller units circuitry 1716 couple the cores 1702 to one or more other devices 1718 such as one or more I/O devices, storage, one or more communication devices (e.g., wireless networking, wired networking, etc.), etc.

In some examples, one or more of the cores 1702(A)-(N) are capable of multi-threading. The system agent unit circuitry 1710 includes those components coordinating and operating cores 1702(A)-(N). The system agent unit circuitry 1710 may include, for example, power control unit (PCU) circuitry and/or display unit circuitry (not shown). The PCU may be or may include logic and components needed for regulating the power state of the cores 1702(A)-(N) and/or the special purpose logic 1708 (e.g., integrated graphics logic). The display unit circuitry is for driving one or more externally connected displays.

The cores 1702(A)-(N) may be homogenous in terms of instruction set architecture (ISA). Alternatively, the cores 1702(A)-(N) may be heterogeneous in terms of ISA; that is, a subset of the cores 1702(A)-(N) may be capable of executing an ISA, while other cores may be capable of executing only a subset of that ISA or another ISA.

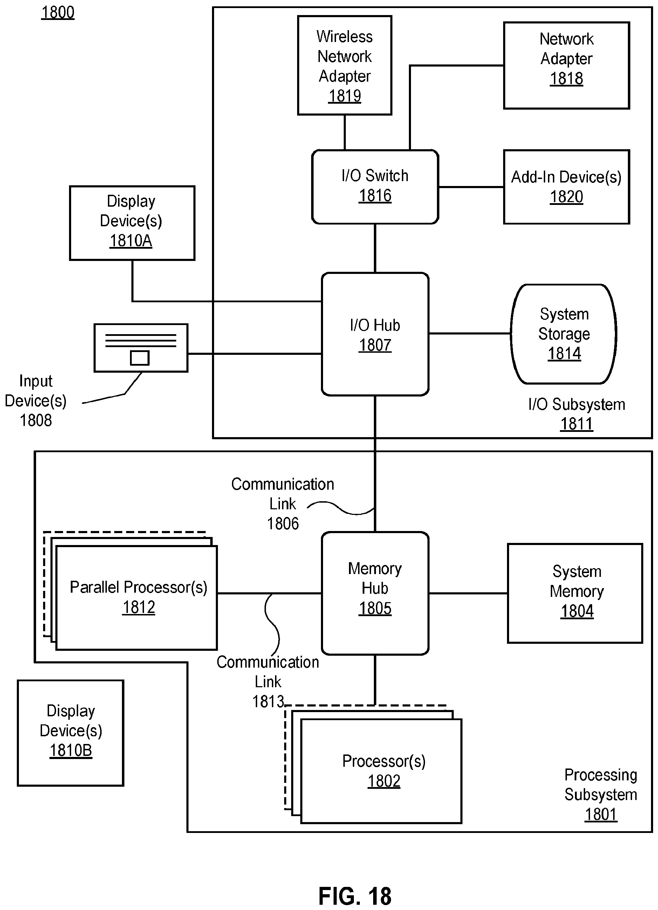

FIG. 18 is a block diagram illustrating a computing system 1800 configured to implement one or more aspects of the examples described herein. The computing system 1800 includes a processing subsystem 1801 having one or more processor(s) 1802 and a system memory 1804 communicating via an interconnection path that may include a memory hub 1805. The memory hub 1805 may be a separate component within a chipset component or may be integrated within the one or more processor(s) 1802. The memory hub 1805 couples with an I/O subsystem 1811 via a communication link 1806. The I/O subsystem 1811 includes an I/O hub 1807 that can enable the computing system 1800 to receive input from one or more input device(s) 1808. Additionally, the I/O hub 1807 can enable a display controller, which may be included in the one or more processor(s) 1802, to provide outputs to one or more display device(s) 1810A. In some examples the one or more display device(s) 1810A coupled with the I/O hub 1807 can include a local, internal, or embedded display device.

The processing subsystem 1801, for example, includes one or more parallel processor(s) 1812 coupled to memory hub 1805 via a bus or other communication link 1813. The communication link 1813 may be one of any number of standards-based communication link technologies or protocols, such as, but not limited to PCI Express, or may be a vendor specific communications interface or communications fabric. The one or more parallel processor(s) 1812 may form a computationally focused parallel or vector processing system that can include a large number of processing cores and/or processing clusters, such as a many integrated core (MIC) processor. For example, the one or more parallel processor(s) 1812 form a graphics processing subsystem that can output pixels to one of the one or more display device(s) 1810A coupled via the I/O hub 1807. The one or more parallel processor(s) 1812 can also include a display controller and display interface (not shown) to enable a direct connection to one or more display device(s) 1810B.

Within the I/O subsystem 1811, a system storage unit 1814 can connect to the I/O hub 1807 to provide a storage mechanism for the computing system 1800. An I/O switch 1816 can be used to provide an interface mechanism to enable connections between the I/O hub 1807 and other components, such as a network adapter 1818 and/or wireless network adapter 1819 that may be integrated into the platform, and various other devices that can be added via one or more add-in device(s) 1820. The add-in device(s) 1820 may also include, for example, one or more external graphics processor devices, graphics cards, and/or compute accelerators. The network adapter 1818 can be an Ethernet adapter or another wired network adapter. The wireless network adapter 1819 can include one or more of a Wi-Fi, Bluetooth, near field communication (NFC), or other network device that includes one or more wireless radios.

The computing system 1800 can include other components not explicitly shown, including USB or other port connections, optical storage drives, video capture devices, and the like, which may also be connected to the I/O hub 1807. Communication paths interconnecting the various components in FIG. 18 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link^{™} (CXL^{™}) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 1812 may incorporate circuitry optimized for graphics and video processing, including, for example, video output circuitry, and constitutes a graphics processing unit (GPU). Alternatively or additionally, the one or more parallel processor(s) 1812 can incorporate circuitry optimized for general purpose processing, while preserving the underlying computational architecture, described in greater detail herein. Components of the computing system 1800 may be integrated with one or more other system elements on a single integrated circuit. For example, the one or more parallel processor(s) 1812, memory hub 1805, processor(s) 1802, and I/O hub 1807 can be integrated into a system on chip (SoC) integrated circuit. Alternatively, the components of the computing system 1800 can be integrated into a single package to form a system in package (SIP) configuration. In some examples at least a portion of the components of the computing system 1800 can be integrated into a multi-chip module (MCM), which can be interconnected with other multi-chip modules into a modular computing system.

It will be appreciated that the computing system 1800 shown herein is illustrative and that variations and modifications are possible. The connection topology, including the number and arrangement of bridges, the number of processor(s) 1802, and the number of parallel processor(s) 1812, may be modified as desired. For instance, system memory 1804 can be connected to the processor(s) 1802 directly rather than through a bridge, while other devices communicate with system memory 1804 via the memory hub 1805 and the processor(s) 1802. In other alternative topologies, the parallel processor(s) 1812 are connected to the I/O hub 1807 or directly to one of the one or more processor(s) 1802, rather than to the memory hub 1805. In other examples, the I/O hub 1807 and memory hub 1805 may be integrated into a single chip. It is also possible that two or more sets of processor(s) 1802 are attached via multiple sockets, which can couple with two or more instances of the parallel processor(s) 1812.

Some of the particular components shown herein are optional and may not be included in all implementations of the computing system 1800. For example, any number of add-in cards or peripherals may be supported, or some components may be eliminated. Furthermore, some architectures may use different terminology for components similar to those illustrated in FIG. 18. For example, the memory hub 1805 may be referred to as a Northbridge in some architectures, while the I/O hub 1807 may be referred to as a Southbridge.

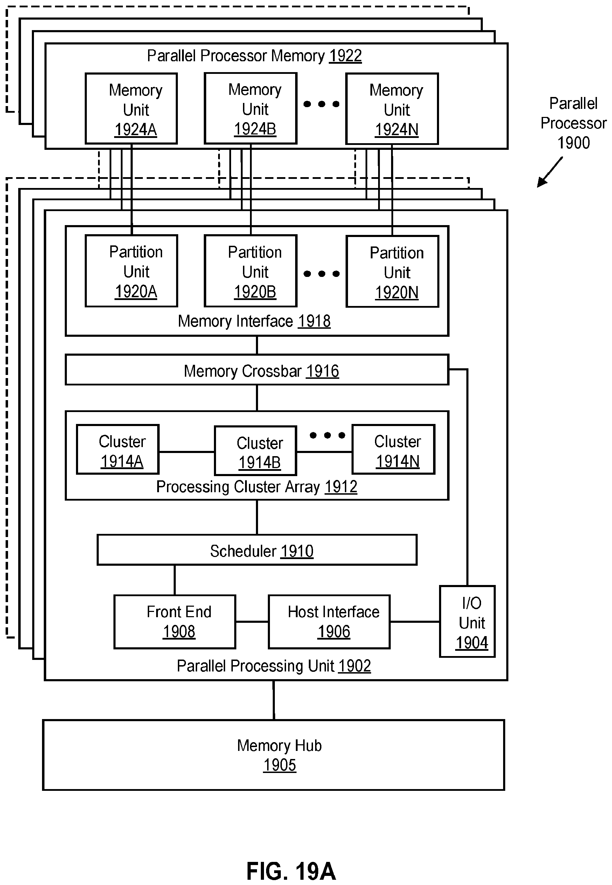

FIG. 19A illustrates examples of a parallel processor 1900. The parallel processor 1900 may be a GPU, GPGPU or the like as described herein. The various components of the parallel processor 1900 may be implemented using one or more integrated circuit devices, such as programmable processors, application specific integrated circuits (ASICs), or field programmable gate arrays (FPGA). The illustrated parallel processor 1900 may be one or more of the parallel processor(s) 1812 shown in FIG. 18.

The parallel processor 1900 includes a parallel processing unit 1902. The parallel processing unit includes an I/O unit 1904 that enables communication with other devices, including other instances of the parallel processing unit 1902. The I/O unit 1904 may be directly connected to other devices. For instance, the I/O unit 1904 connects with other devices via the use of a hub or switch interface, such as memory hub 1805. The connections between the memory hub 1805 and the I/O unit 1904 form a communication link 1813. Within the parallel processing unit 1902, the I/O unit 1904 connects with a host interface 1906 and a memory crossbar 1916, where the host interface 1906 receives commands directed to performing processing operations and the memory crossbar 1916 receives commands directed to performing memory operations.

When the host interface 1906 receives a command buffer via the I/O unit 1904, the host interface 1906 can direct work operations to perform those commands to a front end 1908. In some examples the front end 1908 couples with a scheduler 1910, which is configured to distribute commands or other work items to a processing cluster array 1912. The scheduler 1910 ensures that the processing cluster array 1912 is properly configured and in a valid state before tasks are distributed to the processing clusters of the processing cluster array 1912. The scheduler 1910 may be implemented via firmware logic executing on a microcontroller. The microcontroller implemented scheduler 1910 is configurable to perform complex scheduling and work distribution operations at coarse and fine granularity, enabling rapid preemption and context switching of threads executing on the processing cluster array 1912. Preferably, the host software can prove workloads for scheduling on the processing cluster array 1912 via one of multiple graphics processing doorbells. In other examples, polling for new workloads or interrupts can be used to identify or indicate availability of work to perform. The workloads can then be automatically distributed across the processing cluster array 1912 by the scheduler 1910 logic within the scheduler microcontroller.

The processing cluster array 1912 can include up to "N" processing clusters (e.g., cluster 1914A, cluster 1914B, through cluster 1914N). Each cluster 1914A-1914N of the processing cluster array 1912 can execute a large number of concurrent threads. The scheduler 1910 can allocate work to the clusters 1914A-1914N of the processing cluster array 1912 using various scheduling and/or work distribution algorithms, which may vary depending on the workload arising for each type of program or computation. The scheduling can be handled dynamically by the scheduler 1910 or can be assisted in part by compiler logic during compilation of program logic configured for execution by the processing cluster array 1912. Optionally, different clusters 1914A-1914N of the processing cluster array 1912 can be allocated for processing different types of programs or for performing different types of computations.

The processing cluster array 1912 can be configured to perform various types of parallel processing operations. For example, the processing cluster array 1912 is configured to perform general-purpose parallel compute operations. For example, the processing cluster array 1912 can include logic to execute processing tasks including filtering of video and/or audio data, performing modeling operations, including physics operations, and performing data transformations.

The processing cluster array 1912 is configured to perform parallel graphics processing operations. In such examples in which the parallel processor 1900 is configured to perform graphics processing operations, the processing cluster array 1912 can include additional logic to support the execution of such graphics processing operations, including, but not limited to texture sampling logic to perform texture operations, as well as tessellation logic and other vertex processing logic. Additionally, the processing cluster array 1912 can be configured to execute graphics processing related shader programs such as, but not limited to vertex shaders, tessellation shaders, geometry shaders, and pixel shaders. The parallel processing unit 1902 can transfer data from system memory via the I/O unit 1904 for processing. During processing the transferred data can be stored to on-chip memory (e.g., parallel processor memory 1922) during processing, then written back to system memory.

In examples in which the parallel processing unit 1902 is used to perform graphics processing, the scheduler 1910 may be configured to divide the processing workload into approximately equal sized tasks, to better enable distribution of the graphics processing operations to multiple clusters 1914A-1914N of the processing cluster array 1912. In some of these examples, portions of the processing cluster array 1912 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of the clusters 1914A-1914N may be stored in buffers to allow the intermediate data to be transmitted between clusters 1914A-1914N for further processing.

During operation, the processing cluster array 1912 can receive processing tasks to be executed via the scheduler 1910, which receives commands defining processing tasks from front end 1908. For graphics processing operations, processing tasks can include indices of data to be processed, e.g., surface (patch) data, primitive data, vertex data, and/or pixel data, as well as state parameters and commands defining how the data is to be processed (e.g., what program is to be executed). The scheduler 1910 may be configured to fetch the indices corresponding to the tasks or may receive the indices from the front end 1908. The front end 1908 can be configured to ensure the processing cluster array 1912 is configured to a valid state before the workload specified by incoming command buffers (e.g., batch-buffers, push buffers, etc.) is initiated.

Each of the one or more instances of the parallel processing unit 1902 can couple with parallel processor memory 1922. The parallel processor memory 1922 can be accessed via the memory crossbar 1916, which can receive memory requests from the processing cluster array 1912 as well as the I/O unit 1904. The memory crossbar 1916 can access the parallel processor memory 1922 via a memory interface 1918. The memory interface 1918 can include multiple partition units (e.g., partition unit 1920A, partition unit 1920B, through partition unit 1920N) that can each couple to a portion (e.g., memory unit) of parallel processor memory 1922. The number of partition units 1920A-1920N may be configured to be equal to the number of memory units, such that a first partition unit 1920A has a corresponding first memory unit 1924A, a second partition unit 1920B has a corresponding second memory unit 1924B, and an Nth partition unit 1920N has a corresponding Nth memory unit 1924N. In other examples, the number of partition units 1920A-1920N may not be equal to the number of memory devices.

The memory units 1924A-1924N can include various types of memory devices, including dynamic random-access memory (DRAM) or graphics random access memory, such as synchronous graphics random access memory (SGRAM), including graphics double data rate (GDDR) memory. Optionally, the memory units 1924A-1924N may also include 3D stacked memory, including but not limited to high bandwidth memory (HBM). Persons skilled in the art will appreciate that the specific implementation of the memory units 1924A-1924N can vary and can be selected from one of various conventional designs. Render targets, such as frame buffers or texture maps may be stored across the memory units 1924A-1924N, allowing partition units 1920A-1920N to write portions of each render target in parallel to efficiently use the available bandwidth of parallel processor memory 1922. In some examples, a local instance of the parallel processor memory 1922 may be excluded in favor of a unified memory design that utilizes system memory in conjunction with local cache memory.

Optionally, any one of the clusters 1914A-1914N of the processing cluster array 1912 has the ability to process data that will be written to any of the memory units 1924A-1924N within parallel processor memory 1922. The memory crossbar 1916 can be configured to transfer the output of each cluster 1914A-1914N to any partition unit 1920A-1920N or to another cluster 1914A-1914N, which can perform additional processing operations on the output. Each cluster 1914A-1914N can communicate with the memory interface 1918 through the memory crossbar 1916 to read from or write to various external memory devices. In one of the examples with the memory crossbar 1916 the memory crossbar 1916 has a connection to the memory interface 1918 to communicate with the I/O unit 1904, as well as a connection to a local instance of the parallel processor memory 1922, enabling the processing units within the different processing clusters 1914A-1914N to communicate with system memory or other memory that is not local to the parallel processing unit 1902. Generally, the memory crossbar 1916 may, for example, be able to use virtual channels to separate traffic streams between the clusters 1914A-1914N and the partition units 1920A-1920N.

While a single instance of the parallel processing unit 1902 is illustrated within the parallel processor 1900, any number of instances of the parallel processing unit 1902 can be included. For example, multiple instances of the parallel processing unit 1902 can be provided on a single add-in card, or multiple add-in cards can be interconnected. For example, the parallel processor 1900 can be an add-in device, such as add-in device 1820 of FIG. 18, which may be a graphics card such as a discrete graphics card that includes one or more GPUs, one or more memory devices, and device-to-device or network or fabric interfaces. The different instances of the parallel processing unit 1902 can be configured to inter-operate even if the different instances have different numbers of processing cores, different amounts of local parallel processor memory, and/or other configuration differences. Optionally, some instances of the parallel processing unit 1902 can include higher precision floating point units relative to other instances. Systems incorporating one or more instances of the parallel processing unit 1902 or the parallel processor 1900 can be implemented in a variety of configurations and form factors, including but not limited to desktop, laptop, or handheld personal computers, servers, workstations, game consoles, and/or embedded systems. An orchestrator can form composite nodes for workload performance using one or more of: disaggregated processor resources, cache resources, memory resources, storage resources, and networking resources.

In some examples, the parallel processing unit 1902 can be partitioned into multiple instances. Those multiple instances can be configured to execute workloads associated with different clients in an isolated manner, enabling a pre-determined quality of service to be provided for each client. For example, each cluster 1914A-1914N can be compartmentalized and isolated from other clusters, allowing the processing cluster array 1912 to be divided into multiple compute partitions or instances. In such configuration, workloads that execute on an isolated partition are protected from faults or errors associated with a different workload that executes on a different partition. The partition units 1920A-1920N can be configured to enable a dedicated and/or isolated path to memory for the clusters 1914A-1914N associated with the respective compute partitions. This datapath isolation enables the compute resources within a partition can communicate with one or more assigned memory units 1924A-1924N without being subjected to inference by the activities of other partitions.

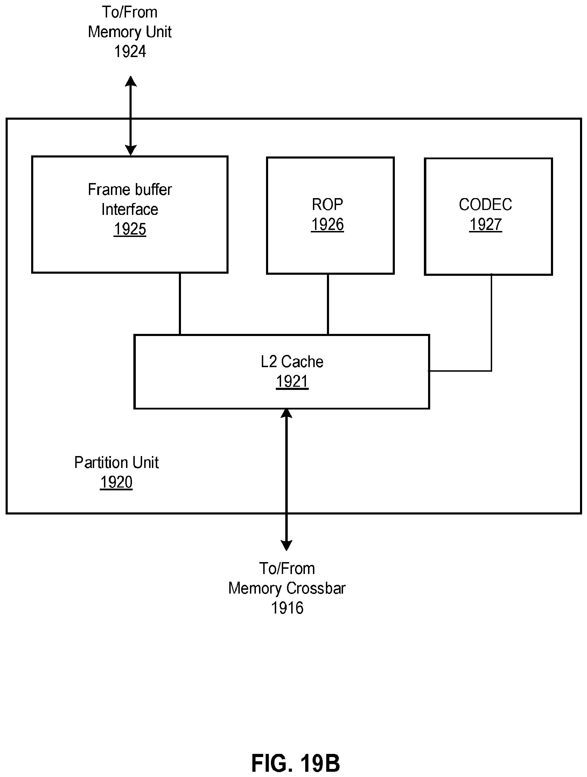

FIG. 19B is a block diagram of a partition unit 1920. The partition unit 1920 may be an instance of one of the partition units 1920A-1920N of FIG. 19A. As illustrated, the partition unit 1920 includes an L2 cache 1921, a frame buffer interface 1925, and a ROP 1926 (raster operations unit). The L2 cache 1921 is a read/write cache that is configured to perform load and store operations received from the memory crossbar 1916 and ROP 1926. Read misses and urgent write-back requests are output by L2 cache 1921 to frame buffer interface 1925 for processing. Updates can also be sent to the frame buffer via the frame buffer interface 1925 for processing. In some examples the frame buffer interface 1925 interfaces with one of the memory units in parallel processor memory, such as the memory units 1924A-1924N of FIG. 19A (e.g., within parallel processor memory 1922). The partition unit 1920 may additionally or alternatively also interface with one of the memory units in parallel processor memory via a memory controller (not shown).

In graphics applications, the ROP 1926 is a processing unit that performs raster operations such as stencil, z test, blending, and the like. The ROP 1926 then outputs processed graphics data that is stored in graphics memory. In some examples the ROP 1926 includes or couples with a CODEC 1927 that includes compression logic to compress depth or color data that is written to memory or the L2 cache 1921 and decompress depth or color data that is read from memory or the L2 cache 1921. The compression logic can be lossless compression logic that makes use of one or more of multiple compression algorithms. The type of compression that is performed by the CODEC 1927 can vary based on the statistical characteristics of the data to be compressed. For example, in some examples, delta color compression is performed on depth and color data on a per-tile basis. In some examples the CODEC 1927 includes compression and decompression logic that can compress and decompress compute data associated with machine learning operations. The CODEC 1927 can, for example, compress sparse matrix data for sparse machine learning operations. The CODEC 1927 can also compress sparse matrix data that is encoded in a sparse matrix format (e.g., coordinate list encoding (COO), compressed sparse row (CSR), compress sparse column (CSC), etc.) to generate compressed and encoded sparse matrix data. The compressed and encoded sparse matrix data can be decompressed and/or decoded before being processed by processing elements or the processing elements can be configured to consume compressed, encoded, or compressed and encoded data for processing.

The ROP 1926 may be included within each processing cluster (e.g., cluster 1914A-1914N of FIG. 19A) instead of within the partition unit 1920. In such example, read and write requests for pixel data are transmitted over the memory crossbar 1916 instead of pixel fragment data. The processed graphics data may be displayed on a display device, such as one of the one or more display device(s) 1810A-1810B of FIG. 18, routed for further processing by the processor(s) 1802, or routed for further processing by one of the processing entities within the parallel processor 1900 of FIG. 19A.

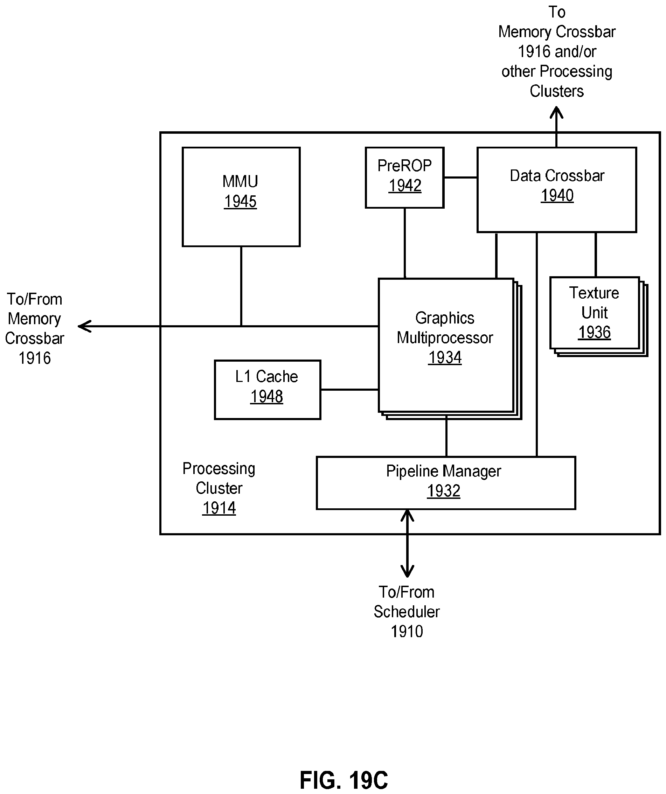

FIG. 19C is a block diagram of a processing cluster 1914 within a parallel processing unit. For example, the processing cluster is an instance of one of the processing clusters 1914A-1914N of FIG. 19A. The processing cluster 1914 can be configured to execute many threads in parallel, where the term "thread" refers to an instance of a particular program executing on a particular set of input data. Optionally, single-instruction, multiple-data (SIMD) instruction issue techniques may be used to support parallel execution of a large number of threads without providing multiple independent instruction units. Alternatively, single-instruction, multiple-thread (SIMT) techniques may be used to support parallel execution of a large number of generally synchronized threads, using a common instruction unit configured to issue instructions to a set of processing engines within each one of the processing clusters. Unlike a SIMD execution regime, where all processing engines typically execute identical instructions, SIMT execution allows different threads to more readily follow divergent execution paths through a given thread program. Persons skilled in the art will understand that a SIMD processing regime represents a functional subset of a SIMT processing regime.

Operation of the processing cluster 1914 can be controlled via a pipeline manager 1932 that distributes processing tasks to SIMT parallel processors. The pipeline manager 1932 receives instructions from the scheduler 1910 of FIG. 19A and manages execution of those instructions via a graphics multiprocessor 1934 and/or a texture unit 1936. The illustrated graphics multiprocessor 1934 is an exemplary instance of a SIMT parallel processor. However, various types of SIMT parallel processors of differing architectures may be included within the processing cluster 1914. One or more instances of the graphics multiprocessor 1934 can be included within a processing cluster 1914. The graphics multiprocessor 1934 can process data and a data crossbar 1940 can be used to distribute the processed data to one of multiple possible destinations, including other shader units. The pipeline manager 1932 can facilitate the distribution of processed data by specifying destinations for processed data to be distributed via the data crossbar 1940.

Each graphics multiprocessor 1934 within the processing cluster 1914 can include an identical set of functional execution logic (e.g., arithmetic logic units, load-store units, etc.). The functional execution logic can be configured in a pipelined manner in which new instructions can be issued before previous instructions are complete. The functional execution logic supports a variety of operations including integer and floating-point arithmetic, comparison operations, Boolean operations, bit-shifting, and computation of various algebraic functions. The same functional-unit hardware could be leveraged to perform different operations and any combination of functional units may be present.

The instructions transmitted to the processing cluster 1914 constitute a thread. A set of threads executing across the set of parallel processing engines is a thread group. A thread group executes the same program on different input data. Each thread within a thread group can be assigned to a different processing engine within a graphics multiprocessor 1934. A thread group may include fewer threads than the number of processing engines within the graphics multiprocessor 1934. When a thread group includes fewer threads than the number of processing engines, one or more of the processing engines may be idle during cycles in which that thread group is being processed. A thread group may also include more threads than the number of processing engines within the graphics multiprocessor 1934. When the thread group includes more threads than the number of processing engines within the graphics multiprocessor 1934, processing can be performed over consecutive clock cycles. Optionally, multiple thread groups can be executed concurrently on the graphics multiprocessor 1934.

The graphics multiprocessor 1934 may include an internal cache memory to perform load and store operations. Optionally, the graphics multiprocessor 1934 can forego an internal cache and use a cache memory (e.g., level 1 (L1) cache 1948) within the processing cluster 1914. Each graphics multiprocessor 1934 also has access to level 2 (L2) caches within the partition units (e.g., partition units 1920A-1920N of FIG. 19A) that are shared among all processing clusters 1914 and may be used to transfer data between threads. The graphics multiprocessor 1934 may also access off-chip global memory, which can include one or more of local parallel processor memory and/or system memory. Any memory external to the parallel processing unit 1902 may be used as global memory. Embodiments in which the processing cluster 1914 includes multiple instances of the graphics multiprocessor 1934 can share common instructions and data, which may be stored in the L1 cache 1948.

Each processing cluster 1914 may include an MMU 1945 (memory management unit) that is configured to map virtual addresses into physical addresses. In other examples, one or more instances of the MMU 1945 may reside within the memory interface 1918 of FIG. 19A. The MMU 1945 includes a set of page table entries (PTEs) used to map a virtual address to a physical address of a tile and optionally a cache line index. The MMU 1945 may include address translation lookaside buffers (TLB) or caches that may reside within the graphics multiprocessor 1934 or the L1 cache 1948 of processing cluster 1914. The physical address is processed to distribute surface data access locality to allow efficient request interleaving among partition units. The cache line index may be used to determine whether a request for a cache line is a hit or miss.

In graphics and computing applications, a processing cluster 1914 may be configured such that each graphics multiprocessor 1934 is coupled to a texture unit 1936 for performing texture mapping operations, e.g., determining texture sample positions, reading texture data, and filtering the texture data. Texture data is read from an internal texture L1 cache (not shown) or in some examples from the L1 cache within graphics multiprocessor 1934 and is fetched from an L2 cache, local parallel processor memory, or system memory, as needed. Each graphics multiprocessor 1934 outputs processed tasks to the data crossbar 1940 to provide the processed task to another processing cluster 1914 for further processing or to store the processed task in an L2 cache, local parallel processor memory, or system memory via the memory crossbar 1916. A preROP 1942 (pre-raster operations unit) is configured to receive data from graphics multiprocessor 1934, direct data to ROP units, which may be located with partition units as described herein (e.g., partition units 1920A-1920N of FIG. 19A). The preROP 1942 unit can perform optimizations for color blending, organize pixel color data, and perform address translations.

It will be appreciated that the core architecture described herein is illustrative and that variations and modifications are possible. Any number of processing units, e.g., graphics multiprocessor 1934, texture units 1936, preROPs 1942, etc., may be included within a processing cluster 1914. Further, while only one processing cluster 1914 is shown, a parallel processing unit as described herein may include any number of instances of the processing cluster 1914. Optionally, each processing cluster 1914 can be configured to operate independently of other processing clusters 1914 using separate and distinct processing units, L1 caches, L2 caches, etc.

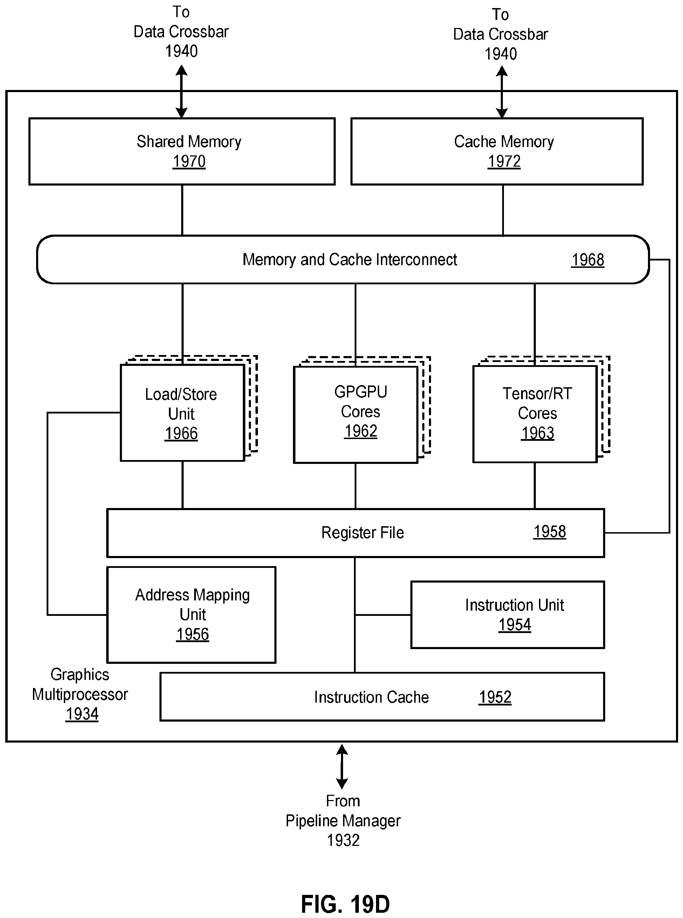

FIG. 19D shows an example of the graphics multiprocessor 1934 in which the graphics multiprocessor 1934 couples with the pipeline manager 1932 of the processing cluster 1914. The graphics multiprocessor 1934 has an execution pipeline including but not limited to an instruction cache 1952, an instruction unit 1954, an address mapping unit 1956, a register file 1958, one or more general purpose graphics processing unit (GPGPU) cores 1962, and one or more load/store units 1966. The GPGPU cores 1962 and load/store units 1966 are coupled with cache memory 1972 and shared memory 1970 via a memory and cache interconnect 1968. The graphics multiprocessor 1934 may additionally include tensor and/or ray-tracing cores 1963 that include hardware logic to accelerate matrix and/or ray-tracing operations.

The instruction cache 1952 may receive a stream of instructions to execute from the pipeline manager 1932. The instructions are cached in the instruction cache 1952 and dispatched for execution by the instruction unit 1954. The instruction unit 1954 can dispatch instructions as thread groups (e.g., warps), with each thread of the thread group assigned to a different execution unit within GPGPU core 1962. An instruction can access any of a local, shared, or global address space by specifying an address within a unified address space. The address mapping unit 1956 can be used to translate addresses in the unified address space into a distinct memory address that can be accessed by the load/store units 1966.

The register file 1958 provides a set of registers for the functional units of the graphics multiprocessor 1934. The register file 1958 provides temporary storage for operands connected to the data paths of the functional units (e.g., GPGPU cores 1962, load/store units 1966) of the graphics multiprocessor 1934. The register file 1958 may be divided between each of the functional units such that each functional unit is allocated a dedicated portion of the register file 1958. For example, the register file 1958 may be divided between the different warps being executed by the graphics multiprocessor 1934.

The GPGPU cores 1962 can each include floating point units (FPUs) and/or integer arithmetic logic units (ALUs) that are used to execute instructions of the graphics multiprocessor 1934. In some implementations, the GPGPU cores 1962 can include hardware logic that may otherwise reside within the tensor and/or ray-tracing cores 1963. The GPGPU cores 1962 can be similar in architecture or can differ in architecture. For example and in some examples, a first portion of the GPGPU cores 1962 include a single precision FPU and an integer ALU while a second portion of the GPGPU cores include a double precision FPU. Optionally, the FPUs can implement the IEEE 754-2008 standard for floating point arithmetic or enable variable precision floating point arithmetic. The graphics multiprocessor 1934 can additionally include one or more fixed function or special function units to perform specific functions such as copy rectangle or pixel blending operations. One or more of the GPGPU cores can also include fixed or special function logic.

The GPGPU cores 1962 may include SIMD logic capable of performing a single instruction on multiple sets of data. Optionally, GPGPU cores 1962 can physically execute SIMD4, SIMD8, and SIMD16 instructions and logically execute SIMD1, SIMD2, and SIMD32 instructions. The SIMD instructions for the GPGPU cores can be generated at compile time by a shader compiler or automatically generated when executing programs written and compiled for single program multiple data (SPMD) or SIMT architectures. Multiple threads of a program configured for the SIMT execution model can be executed via a single SIMD instruction. For example and in some examples, eight SIMT threads that perform the same or similar operations can be executed in parallel via a single SIMD8 logic unit.

The memory and cache interconnect 1968 is an interconnect network that connects each of the functional units of the graphics multiprocessor 1934 to the register file 1958 and to the shared memory 1970. For example, the memory and cache interconnect 1968 is a crossbar interconnect that allows the load/store unit 1966 to implement load and store operations between the shared memory 1970 and the register file 1958. The register file 1958 can operate at the same frequency as the GPGPU cores 1962, thus data transfer between the GPGPU cores 1962 and the register file 1958 is very low latency. The shared memory 1970 can be used to enable communication between threads that execute on the functional units within the graphics multiprocessor 1934. The cache memory 1972 can be used as a data cache for example, to cache texture data communicated between the functional units and the texture unit 1936. The shared memory 1970 can also be used as a program managed cached. The shared memory 1970 and the cache memory 1972 can couple with the data crossbar 1940 to enable communication with other components of the processing cluster. Threads executing on the GPGPU cores 1962 can programmatically store data within the shared memory in addition to the automatically cached data that is stored within the cache memory 1972.

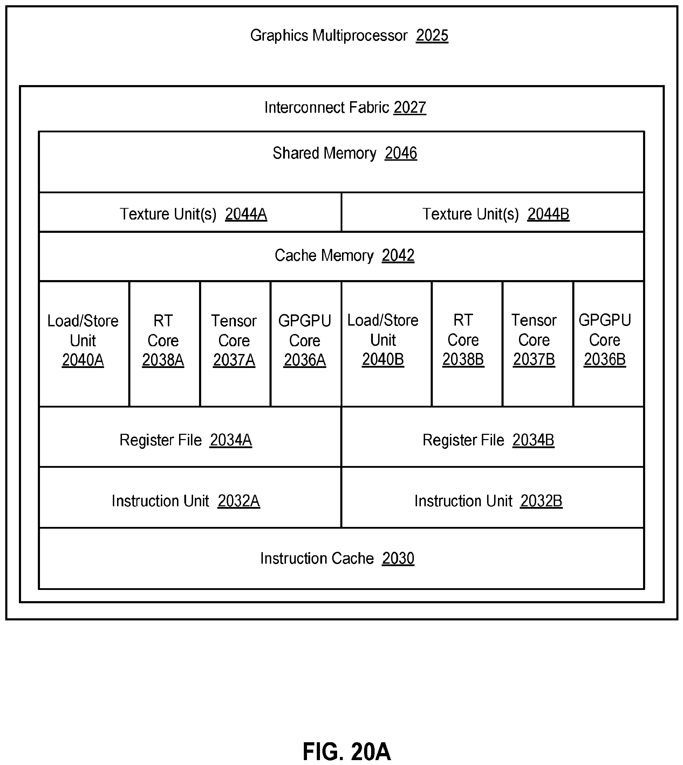

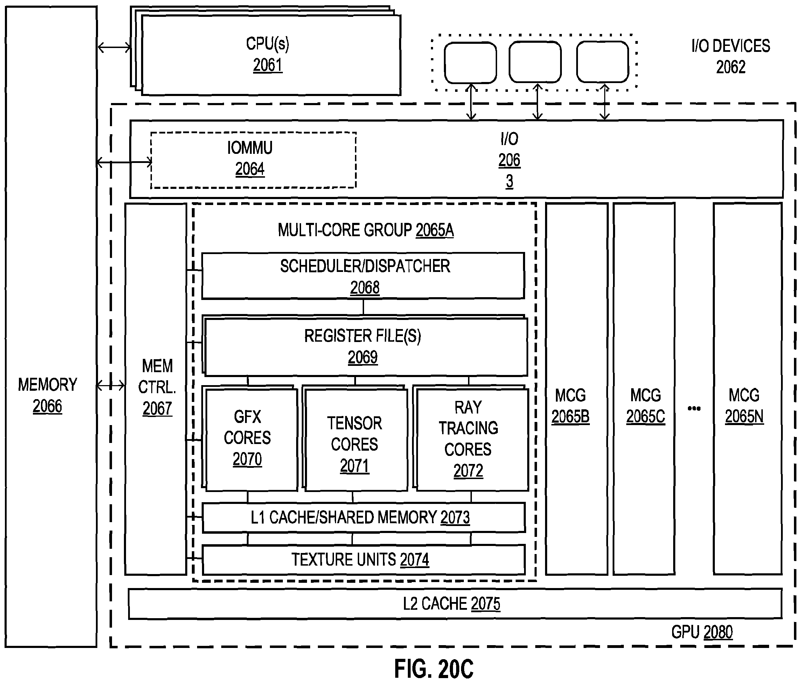

FIGS. 20A-20C illustrate additional graphics multiprocessors, according to examples. FIG. 20A-20B illustrate graphics multiprocessors 2025, 2050, which are related to the graphics multiprocessor 1934 of FIG. 19C and may be used in place of one of those. Therefore, the disclosure of any features in combination with the graphics multiprocessor 1934 herein also discloses a corresponding combination with the graphics multiprocessor(s) 2025, 2050, but is not limited to such. FIG. 20C illustrates a graphics processing unit (GPU) 2080 which includes dedicated sets of graphics processing resources arranged into multi-core groups 2065A-2065N, which correspond to the graphics multiprocessors 2025, 2050. The illustrated graphics multiprocessors 2025, 2050 and the multi-core groups 2065A-2065N can be streaming multiprocessors (SM) capable of simultaneous execution of a large number of execution threads.

The graphics multiprocessor 2025 of FIG. 20A includes multiple additional instances of execution resource units relative to the graphics multiprocessor 1934 of FIG. 19D. For example, the graphics multiprocessor 2025 can include multiple instances of the instruction unit 2032A-2032B, register file 2034A-2034B, and texture unit(s) 2044A-2044B. The graphics multiprocessor 2025 also includes multiple sets of graphics or compute execution units (e.g., GPGPU core 2036A-2036B, tensor core 2037A-2037B, ray-tracing core 2038A-2038B) and multiple sets of load/store units 2040A-2040B. The execution resource units have a common instruction cache 2030, texture and/or data cache memory 2042, and shared memory 2046.

The various components can communicate via an interconnect fabric 2027. The interconnect fabric 2027 may include one or more crossbar switches to enable communication between the various components of the graphics multiprocessor 2025. The interconnect fabric 2027 may be a separate, high-speed network fabric layer upon which each component of the graphics multiprocessor 2025 is stacked. The components of the graphics multiprocessor 2025 communicate with remote components via the interconnect fabric 2027. For example, the cores 2036A-2036B, 2037A-2037B, and 2038A-2038B can each communicate with shared memory 2046 via the interconnect fabric 2027. The interconnect fabric 2027 can arbitrate communication within the graphics multiprocessor 2025 to ensure a fair bandwidth allocation between components.

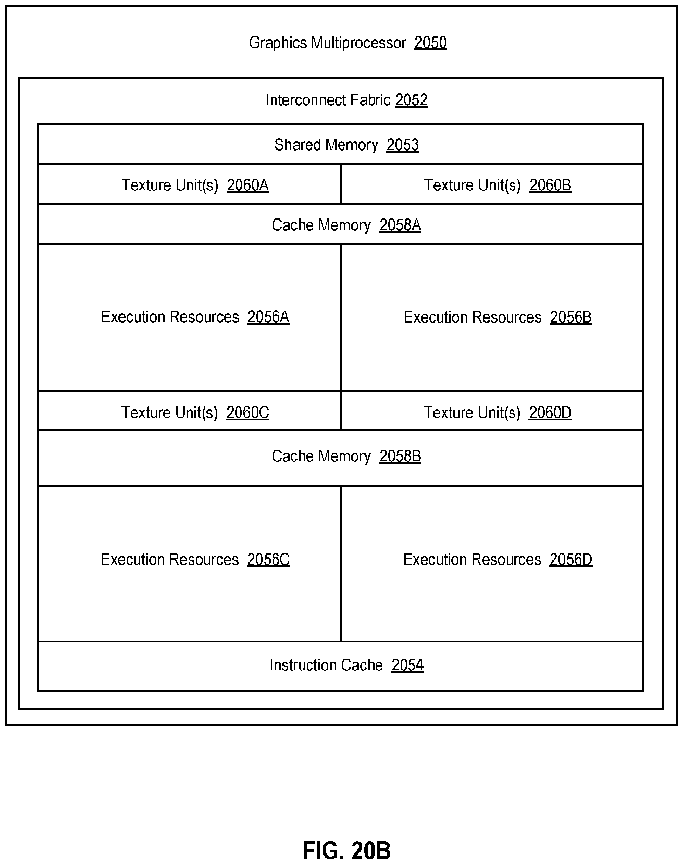

The graphics multiprocessor 2050 of FIG. 20B includes multiple sets of execution resources 2056A-2056D, where each set of execution resource includes multiple instruction units, register files, GPGPU cores, and load store units, as illustrated in FIG. 19D and FIG. 20A. The execution resources 2056A-2056D can work in concert with texture unit(s) 2060A-2060D for texture operations, while sharing an instruction cache 2054, and shared memory 2053. For example, the execution resources 2056A-2056D can share an instruction cache 2054 and shared memory 2053, as well as multiple instances of a texture and/or data cache memory 2058A-2058B. The various components can communicate via an interconnect fabric 2052 similar to the interconnect fabric 2027 of FIG. 20A.

Persons skilled in the art will understand that the architecture described in FIG. 1, 19A-19D, and 20A-20B are descriptive and not limiting as to the scope of the present examples. Thus, the techniques described herein may be implemented on any properly configured processing unit, including, without limitation, one or more mobile application processors, one or more desktop or server central processing units (CPUs) including multi-core CPUs, one or more parallel processing units, such as the parallel processing unit 1902 of FIG. 19A, as well as one or more graphics processors or special purpose processing units, without departure from the scope of the examples described herein.

The parallel processor or GPGPU as described herein may be communicatively coupled to host/processor cores to accelerate graphics operations, machine-learning operations, pattern analysis operations, and various general-purpose GPU (GPGPU) functions. The GPU may be communicatively coupled to the host processor/cores over a bus or other interconnect (e.g., a high-speed interconnect such as PCIe, NVLink, or other known protocols, standardized protocols, or proprietary protocols). In other examples, the GPU may be integrated on the same package or chip as the cores and communicatively coupled to the cores over an internal processor bus/interconnect (i.e., internal to the package or chip). Regardless of the manner in which the GPU is connected, the processor cores may allocate work to the GPU in the form of sequences of commands/instructions contained in a work descriptor. The GPU then uses dedicated circuitry/logic for efficiently processing these commands/instructions.

FIG. 20C illustrates a graphics processing unit (GPU) 2080 which includes dedicated sets of graphics processing resources arranged into multi-core groups 2065A-2065N. While the details of only a single multi-core group 2065A are provided, it will be appreciated that the other multi-core groups 2065B-2065N may be equipped with the same or similar sets of graphics processing resources. Details described with respect to the multi-core groups 2065A-2065N may also apply to any graphics multiprocessor 1934, 2025, 2050 described herein.

As illustrated, a multi-core group 2065A may include a set of graphics cores 2070, a set of tensor cores 2071, and a set of ray tracing cores 2072. A scheduler/dispatcher 2068 schedules and dispatches the graphics threads for execution on the various cores 2070, 2071, 2072. A set of register files 2069 store operand values used by the cores 2070, 2071, 2072 when executing the graphics threads. These may include, for example, integer registers for storing integer values, floating point registers for storing floating point values, vector registers for storing packed data elements (integer and/or floating-point data elements) and tile registers for storing tensor/matrix values. The tile registers may be implemented as combined sets of vector registers.

One or more combined level 1 (L1) caches and shared memory units 2073 store graphics data such as texture data, vertex data, pixel data, ray data, bounding volume data, etc., locally within each multi-core group 2065A. One or more texture units 2074 can also be used to perform texturing operations, such as texture mapping and sampling. A Level 2 (L2) cache 2075 shared by all or a subset of the multi-core groups 2065A-2065N stores graphics data and/or instructions for multiple concurrent graphics threads. As illustrated, the L2 cache 2075 may be shared across a plurality of multi-core groups 2065A-2065N. One or more memory controllers 2067 couple the GPU 2080 to a memory 2066 which may be a system memory (e.g., DRAM) and/or a dedicated graphics memory (e.g., GDDR6 memory).

Input/output (I/O) circuitry 2063 couples the GPU 2080 to one or more I/O devices 2062 such as digital signal processors (DSPs), network controllers, or user input devices. An on-chip interconnect may be used to couple the I/O devices 2062 to the GPU 2080 and memory 2066. One or more I/O memory management units (IOMMUs) 2064 of the I/O circuitry 2063 couple the I/O devices 2062 directly to the system memory 2066. Optionally, the IOMMU 2064 manages multiple sets of page tables to map virtual addresses to physical addresses in system memory 2066. The I/O devices 2062, CPU(s) 2061, and GPU(s) 2080 may then share the same virtual address space.

In one implementation of the IOMMU 2064, the IOMMU 2064 supports virtualization. In this case, it may manage a first set of page tables to map guest/graphics virtual addresses to guest/graphics physical addresses and a second set of page tables to map the guest/graphics physical addresses to system/host physical addresses (e.g., within system memory 2066). The base addresses of each of the first and second sets of page tables may be stored in control registers and swapped out on a context switch (e.g., so that the new context is provided with access to the relevant set of page tables). While not illustrated in FIG. 20C, each of the cores 2070, 2071, 2072 and/or multi-core groups 2065A-2065N may include translation lookaside buffers (TLBs) to cache guest virtual to guest physical translations, guest physical to host physical translations, and guest virtual to host physical translations.

The CPU(s) 2061, GPUs 2080, and I/O devices 2062 may be integrated on a single semiconductor chip and/or chip package. The illustrated memory 2066 may be integrated on the same chip or may be coupled to the memory controllers 2067 via an off-chip interface. In one implementation, the memory 2066 comprises GDDR6 memory which shares the same virtual address space as other physical system-level memories, although the underlying principles described herein are not limited to this specific implementation.

The tensor cores 2071 may include a plurality of execution units specifically designed to perform matrix operations, which are the fundamental compute operation used to perform deep learning operations. For example, simultaneous matrix multiplication operations may be used for neural network training and inferencing. The tensor cores 2071 may perform matrix processing using a variety of operand precisions including single precision floating-point (e.g., 32 bits), half-precision floating point (e.g., 16 bits), integer words (16 bits), bytes (8 bits), and half-bytes (4 bits). For example, a neural network implementation extracts features of each rendered scene, potentially combining details from multiple frames, to construct a high-quality final image.

In deep learning implementations, parallel matrix multiplication work may be scheduled for execution on the tensor cores 2071. The training of neural networks, in particular, requires a significant number of matrix dot product operations. In order to process an inner-product formulation of an N × N × N matrix multiply, the tensor cores 2071 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 2071 to ensure that the most efficient precision is used for different workloads (e.g., such as inferencing workloads which can tolerate quantization to bytes and half-bytes). Supported formats additionally include 64-bit floating point (FP64) and non-IEEE floating point formats such as the bfloat16 format (e.g., Brain floating point), a 16-bit floating point format with one sign bit, eight exponent bits, and eight significand bits, of which seven are explicitly stored. One example includes support for a reduced precision tensor-float (TF32) mode, which performs computations using the range of FP32 (8-bits) and the precision of FP16 (10-bits). Reduced precision TF32 operations can be performed on FP32 inputs and produce FP32 outputs at higher performance relative to FP32 and increased precision relative to FP16. In some examples, one or more 8-bit floating point formats (FP8) are supported.

In some examples the tensor cores 2071 support a sparse mode of operation for matrices in which the vast majority of values are zero. The tensor cores 2071 include support for sparse input matrices that are encoded in a sparse matrix representation (e.g., coordinate list encoding (COO), compressed sparse row (CSR), compress sparse column (CSC), etc.). The tensor cores 2071 also include support for compressed sparse matrix representations in the event that the sparse matrix representation may be further compressed. Compressed, encoded, and/or compressed and encoded matrix data, along with associated compression and/or encoding metadata, can be read by the tensor cores 2071 and the non-zero values can be extracted. For example, for a given input matrix A, a non-zero value can be loaded from the compressed and/or encoded representation of at least a portion of matrix A. Based on the location in matrix A for the non-zero value, which may be determined from index or coordinate metadata associated with the non-zero value, a corresponding value in input matrix B may be loaded. Depending on the operation to be performed (e.g., multiply), the load of the value from input matrix B may be bypassed if the corresponding value is a zero value. In some examples, the pairings of values for certain operations, such as multiply operations, may be pre-scanned by scheduler logic and only operations between non-zero inputs are scheduled. Depending on the dimensions of matrix A and matrix B and the operation to be performed, output matrix C may be dense or sparse. Where output matrix C is sparse and depending on the configuration of the tensor cores 2071, output matrix C may be output in a compressed format, a sparse encoding, or a compressed sparse encoding.

The ray tracing cores 2072 may accelerate ray tracing operations for both real-time ray tracing and non-real-time ray tracing implementations. In particular, the ray tracing cores 2072 may include ray traversal/intersection circuitry for performing raytraversal using bounding volume hierarchies (BVHs) and identifying intersections between rays and primitives enclosed within the BVH volumes. The ray tracing cores 2072 may also include circuitry for performing depth testing and culling (e.g., using a Z buffer or similar arrangement). In one implementation, the ray tracing cores 2072 perform traversal and intersection operations in concert with the image denoising techniques described herein, at least a portion of which may be executed on the tensor cores 2071. For example, the tensor cores 2071 may implement a deep learning neural network to perform denoising of frames generated by the ray tracing cores 2072. However, the CPU(s) 2061, graphics cores 2070, and/or ray tracing cores 2072 may also implement all or a portion of the denoising and/or deep learning algorithms.

In addition, as described above, a distributed approach to denoising may be employed in which the GPU 2080 is in a computing device coupled to other computing devices over a network or high-speed interconnect. In this distributed approach, the interconnected computing devices may share neural network learning/training data to improve the speed with which the overall system learns to perform denoising for different types of image frames and/or different graphics applications.

The ray tracing cores 2072 may process all BVH traversal and/or ray-primitive intersections, saving the graphics cores 2070 from being overloaded with thousands of instructions per ray. For example, each ray tracing core 2072 includes a first set of specialized circuitry for performing bounding box tests (e.g., for traversal operations) and/or a second set of specialized circuitry for performing the ray-triangle intersection tests (e.g., intersecting rays which have been traversed). Thus, for example, the multi-core group 2065A can simply launch a ray probe, and the ray tracing cores 2072 independently perform ray traversal and intersection and return hit data (e.g., a hit, no hit, multiple hits, etc.) to the thread context. The other cores 2070, 2071 are freed to perform other graphics or compute work while the ray tracing cores 2072 perform the traversal and intersection operations.

Optionally, each ray tracing core 2072 may include a traversal unit to perform BVH testing operations and/or an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 2070 and tensor cores 2071) are freed to perform other forms of graphics work.

In some examples described below, a hybrid rasterization/ray tracing approach is used in which work is distributed between the graphics cores 2070 and ray tracing cores 2072.

The ray tracing cores 2072 (and/or other cores 2070, 2071) may include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 2072, graphics cores 2070 and tensor cores 2071 is Vulkan API (e.g., Vulkan version 1.1.85 and later). Note, however, that the underlying principles described herein are not limited to any particular ray tracing ISA.

In general, the various cores 2072, 2071, 2070 may support a ray tracing instruction set that includes instructions/functions for one or more of ray generation, closest hit, any hit, ray-primitive intersection, per-primitive and hierarchical bounding box construction, miss, visit, and exceptions. More specifically, some examples includes ray tracing instructions to perform one or more of the following functions:
- Ray Generation - Ray generation instructions may be executed for each pixel, sample, or other user-defined work assignment.
- Closest Hit - A closest hit instruction may be executed to locate the closest intersection point of a ray with primitives within a scene.
- Any Hit - An any hit instruction identifies multiple intersections between a ray and primitives within a scene, potentially to identify a new closest intersection point.
- Intersection - An intersection instruction performs a ray-primitive intersection test and outputs a result.
- Per-primitive Bounding box Construction -This instruction builds a bounding box around a given primitive or group of primitives (e.g., when building a new BVH or other acceleration data structure).
- Miss - Indicates that a ray misses all geometry within a scene, or specified region of a scene.
- Visit - Indicates the child volumes a ray will traverse.
- Exceptions - Includes various types of exception handlers (e.g., invoked for various error conditions).

In some examples the ray tracing cores 2072 may be adapted to accelerate general-purpose compute operations that can be accelerated using computational techniques that are analogous to ray intersection tests. A compute framework can be provided that enables shader programs to be compiled into low level instructions and/or primitives that perform general-purpose compute operations via the ray tracing cores. Exemplary computational problems that can benefit from compute operations performed on the ray tracing cores 2072 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 2072 can also be used to perform computations that are not directly analogous to ray tracing. For example, mesh projection, mesh refinement, and volume sampling computations can be accelerated using the ray tracing cores 2072. Generic coordinate space calculations, such as nearest neighbor calculations can also be performed. For example, the set of points near a given point can be discovered by defining a bounding box in the coordinate space around the point. BVH and ray probe logic within the ray tracing cores 2072 can then be used to determine the set of point intersections within the bounding box. The intersections constitute the origin point and the nearest neighbors to that origin point. Computations that are performed using the ray tracing cores 2072 can be performed in parallel with computations performed on the graphics cores 2072 and tensor cores 2071. A shader compiler can be configured to compile a compute shader or other general-purpose graphics processing program into low level primitives that can be parallelized across the graphics cores 2070, tensor cores 2071, and ray tracing cores 2072.

Building larger and larger silicon dies is challenging for a variety of reasons. As silicon dies become larger, manufacturing yields become smaller and process technology requirements for different components may diverge. On the other hand, in order to have a high-performance system, key components should be interconnected by high speed, high bandwidth, low latency interfaces. These contradicting needs pose a challenge to high performance chip development.

Embodiments described herein provide techniques to disaggregate an architecture of a system on a chip integrated circuit into multiple distinct chiplets that can be packaged onto a common chassis. In some examples, a graphics processing unit or parallel processor is composed from diverse silicon chiplets that are separately manufactured. A chiplet is an at least partially packaged integrated circuit that includes distinct units of logic that can be assembled with other chiplets into a larger package. A diverse set of chiplets with different IP core logic can be assembled into a single device. Additionally the chiplets can be integrated into a base die or base chiplet using active interposer technology. The concepts described herein enable the interconnection and communication between the different forms of IP within the GPU. The development of IPs on different process may be mixed. This avoids the complexity of converging multiple IPs, especially on a large SoC with several flavors IPs, to the same process.

Enabling the use of multiple process technologies improves the time to market and provides a cost-effective way to create multiple product SKUs. For customers, this means getting products that are more tailored to their requirements in a cost effective and timely manner. Additionally, the disaggregated IPs are more amenable to being power gated independently, components that are not in use on a given workload can be powered off, reducing overall power consumption.

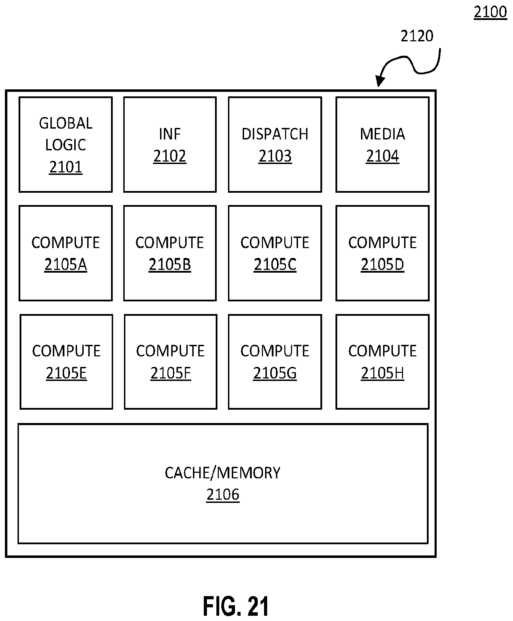

FIG. 21 shows a parallel compute system 2100, according to some examples. In some examples the parallel compute system 2100 includes a parallel processor 2120, which can be a graphics processor or compute accelerator as described herein. The parallel processor 2120 includes a global logic unit 2101, an interface 2102, a thread dispatcher 2103, a media unit 2104, a set of compute units 2105A-2105H, and a cache/memory units 2106. The global logic unit 2101, in some examples, includes global functionality for the parallel processor 2120, including device configuration registers, global schedulers, power management logic, and the like. The interface 2102 can include a front-end interface for the parallel processor 2120. The thread dispatcher 2103 can receive workloads from the interface 2102 and dispatch threads for the workload to the compute units 2105A-2105H. If the workload includes any media operations, at least a portion of those operations can be performed by the media unit 2104. The media unit can also offload some operations to the compute units 2105A-2105H. The cache/memory units 2106 can include cache memory (e.g., L3 cache) and local memory (e.g., HBM, GDDR) for the parallel processor 2120.

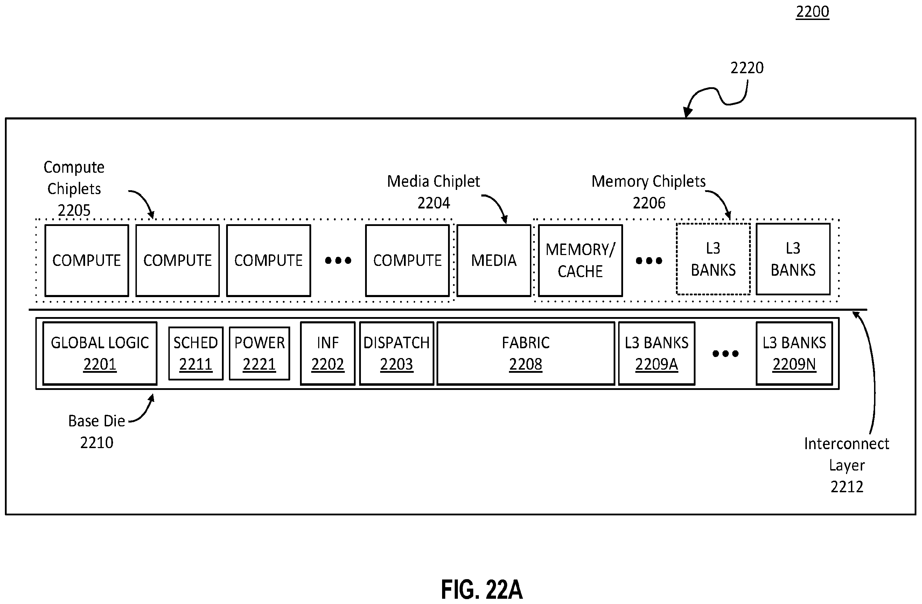

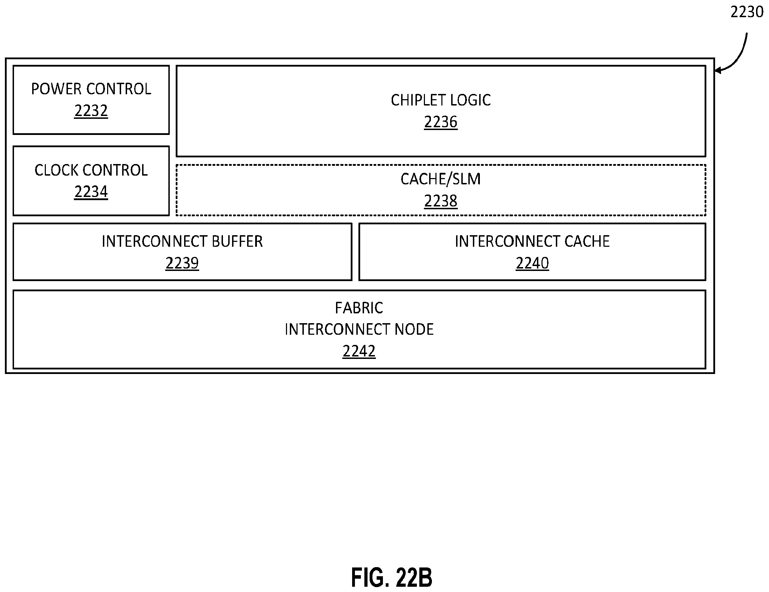

FIGS. 22A-22B illustrate a hybrid logical/physical view of a disaggregated parallel processor, according to examples described herein. FIG. 22A illustrates a disaggregated parallel compute system 2200. FIG. 22B illustrates a chiplet 2230 of the disaggregated parallel compute system 2200.

As shown in FIG. 22A, a disaggregated compute system 2200 can include a parallel processor 2220 in which the various components of the parallel processor SOC are distributed across multiple chiplets. Each chiplet can be a distinct IP core that is independently designed and configured to communicate with other chiplets via one or more common interfaces. The chiplets include but are not limited to compute chiplets 2205, a media chiplet 2204, and memory chiplets 2206. Each chiplet can be separately manufactured using different process technologies. For example, compute chiplets 2205 may be manufactured using the smallest or most advanced process technology available at the time of fabrication, while memory chiplets 2206 or other chiplets (e.g., I/O, networking, etc.) may be manufactured using a larger or less advanced process technologies.

The various chiplets can be bonded to a base die 2210 and configured to communicate with each other and logic within the base die 2210 via an interconnect layer 2212. In some examples, the base die 2210 can include global logic 2201, which can include scheduler 2211 and power management 2221 logic units, an interface 2202, a dispatch unit 2203, and an interconnect fabric module 2208 coupled with or integrated with one or more L3 cache banks 2209A-2209N. The interconnect fabric 2208 can be an inter-chiplet fabric that is integrated into the base die 2210. Logic chiplets can use the fabric 2208 to relay messages between the various chiplets. Additionally, L3 cache banks 2209A-2209N in the base die and/or L3 cache banks within the memory chiplets 2206 can cache data read from and transmitted to DRAM chiplets within the memory chiplets 2206 and to system memory of a host.

In some examples the global logic 2201 is a microcontroller that can execute firmware to perform scheduler 2211 and power management 2221 functionality for the parallel processor 2220. The microcontroller that executes the global logic can be tailored for the target use case of the parallel processor 2220. The scheduler 2211 can perform global scheduling operations for the parallel processor 2220. The power management 2221 functionality can be used to enable or disable individual chiplets within the parallel processor when those chiplets are not in use.

The various chiplets of the parallel processor 2220 can be designed to perform specific functionality that, in existing designs, would be integrated into a single die. A set of compute chiplets 2205 can include clusters of compute units (e.g., execution units, streaming multiprocessors, etc.) that include programmable logic to execute compute or graphics shader instructions. A media chiplet 2204 can include hardware logic to accelerate media encode and decode operations. Memory chiplets 2206 can include volatile memory (e.g., DRAM) and one or more SRAM cache memory banks (e.g., L3 banks).

As shown in FIG. 22B, each chiplet 2230 can include common components and application specific components. Chiplet logic 2236 within the chiplet 2230 can include the specific components of the chiplet, such as an array of streaming multiprocessors, compute units, or execution units described herein. The chiplet logic 2236 can couple with an optional cache or shared local memory 2238 or can include a cache or shared local memory within the chiplet logic 2236. The chiplet 2230 can include a fabric interconnect node 2242 that receives commands via the inter-chiplet fabric. Commands and data received via the fabric interconnect node 2242 can be stored temporarily within an interconnect buffer 2239. Data transmitted to and received from the fabric interconnect node 2242 can be stored in an interconnect cache 2240. Power control 2232 and clock control 2234 logic can also be included within the chiplet. The power control 2232 and clock control 2234 logic can receive configuration commands via the fabric can configure dynamic voltage and frequency scaling for the chiplet 2230. In some examples, each chiplet can have an independent clock domain and power domain and can be clock gated and power gated independently of other chiplets.

At least a portion of the components within the illustrated chiplet 2230 can also be included within logic embedded within the base die 2210 of FIG. 22A. For example, logic within the base die that communicates with the fabric can include a version of the fabric interconnect node 2242. Base die logic that can be independently clock or power gated can include a version of the power control 2232 and/or clock control 2234 logic.

Thus, while various examples described herein use the term SOC to describe a device or system having a processor and associated circuitry (e.g., Input/Output ("I/O") circuitry, power delivery circuitry, memory circuitry, etc.) integrated monolithically into a single Integrated Circuit

("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

Example Core Architectures - In-order and out-of-order core block diagram.

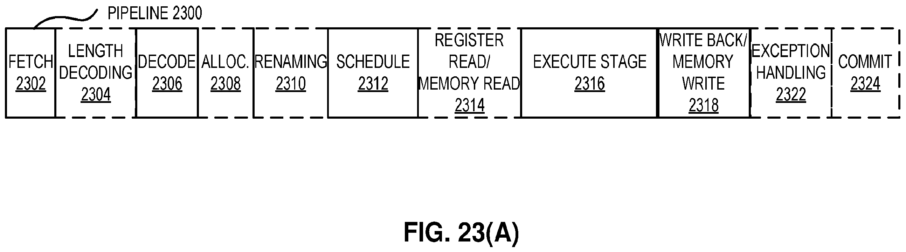

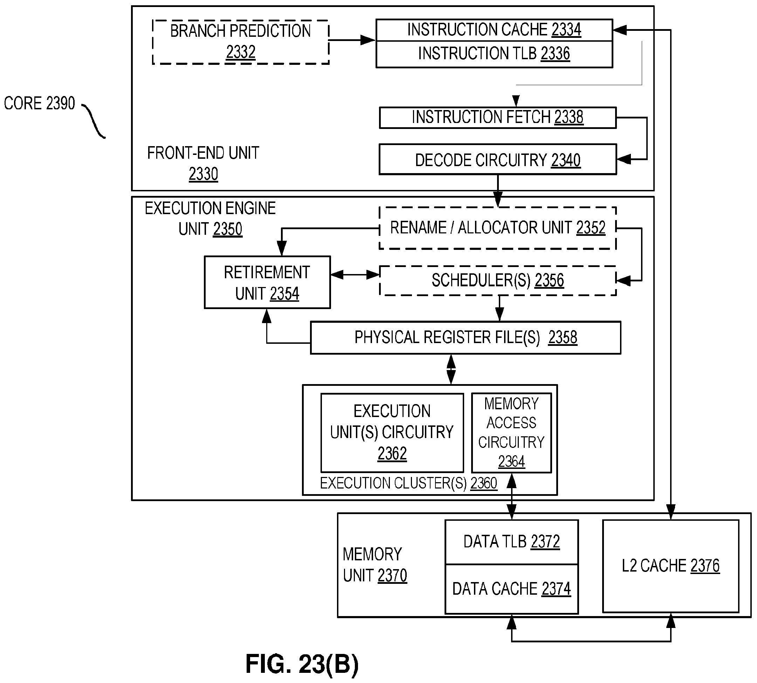

FIG. 23(A) is a block diagram illustrating both an example in-order pipeline and an example register renaming, out-of-order issue/execution pipeline according to examples. FIG. 23(B) is a block diagram illustrating both an example in-order architecture core and an example register renaming, out-of-order issue/execution architecture core to be included in a processor according to examples. The solid lined boxes in FIGS. 23(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 23(A), a processor pipeline 2300 includes a fetch stage 2302, an optional length decoding stage 2304, a decode stage 2306, an optional allocation (Alloc) stage 2308, an optional renaming stage 2310, a schedule (also known as a dispatch or issue) stage 2312, an optional register read/memory read stage 2314, an execute stage 2316, a write back/memory write stage 2318, an optional exception handling stage 2322, and an optional commit stage 2324. One or more operations can be performed in each of these processor pipeline stages. For example, during the fetch stage 2302, one or more instructions are fetched from instruction memory, and during the decode stage 2306, the one or more fetched instructions may be decoded, addresses (e.g., load store unit (LSU) addresses) using forwarded register ports may be generated, and branch forwarding (e.g., immediate offset or a link register (LR)) may be performed. In some examples, the decode stage 2306 and the register read/memory read stage 2314 may be combined into one pipeline stage. In some examples, during the execute stage 2316, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 23(B) may implement the pipeline 2300 as follows: 1) the instruction fetch circuitry 2338 performs the fetch and length decoding stages 2302 and 2304; 2) the decode circuitry 2340 performs the decode stage 2306; 3) the rename/allocator unit circuitry 2352 performs the allocation stage 2308 and renaming stage 2310; 4) the scheduler(s) circuitry 2356 performs the schedule stage 2312; 5) the physical register file(s) circuitry 2358 and the memory unit circuitry 2370 perform the register read/memory read stage 2314; the execution cluster(s) 2360 perform the execute stage 2316; 6) the memory unit circuitry 2370 and the physical register file(s) circuitry 2358 perform the write back/memory write stage 2318; 7) various circuitry may be involved in the exception handling stage 2322; and 8) the retirement unit circuitry 2354 and the physical register file(s) circuitry 2358 perform the commit stage 2324.

FIG. 23(B) shows a processor core 2390 including front-end unit circuitry 2330 coupled to execution engine unit circuitry 2350, and both are coupled to memory unit circuitry 2370. The core 2390 may be a reduced instruction set architecture computing (RISC) core, a complex instruction set architecture computing (CISC) core, a very long instruction word (VLIW) core, or a hybrid or alternative core type. As yet another option, the core 2390 may be a special-purpose core, such as, for example, a network or communication core, compression engine, coprocessor core, general purpose computing graphics processing unit (GPGPU) core, graphics core, or the like.

The front-end unit circuitry 2330 may include branch prediction circuitry 2332 coupled to instruction cache circuitry 2334, which is coupled to an instruction translation lookaside buffer (TLB) 2336, which is coupled to instruction fetch circuitry 2338, which is coupled to decode circuitry 2340. In some examples, the instruction cache circuitry 2334 is included in the memory unit circuitry 2370 rather than the front-end circuitry 2330. The decode circuitry 2340 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 2340 may further include address generation unit (AGU, not shown) circuitry. In some examples, the AGU generates an LSU address using forwarded register ports, and may further perform branch forwarding (e.g., immediate offset branch forwarding, LR register branch forwarding, etc.). The decode circuitry 2340 may be implemented using various different mechanisms. Examples of suitable mechanisms include, but are not limited to, look-up tables, hardware implementations, programmable logic arrays (PLAs), microcode read only memories (ROMs), etc. In some examples, the core 2390 includes a microcode ROM (not shown) or other medium that stores microcode for certain macroinstructions (e.g., in decode circuitry 2340 or otherwise within the front-end circuitry 2330). In some examples, the decode circuitry 2340 includes a micro-operation (micro-op) or operation cache (not shown) to hold/cache decoded operations, micro-tags, or micro-operations generated during the decode or other stages of the processor pipeline 2300. The decode circuitry 2340 may be coupled to rename/allocator unit circuitry 2352 in the execution engine circuitry 2350.

The execution engine circuitry 2350 includes the rename/allocator unit circuitry 2352 coupled to retirement unit circuitry 2354 and a set of one or more scheduler(s) circuitry 2356. The scheduler(s) circuitry 2356 represents any number of different schedulers, including reservations stations, central instruction window, etc. In some examples, the scheduler(s) circuitry 2356 can include arithmetic logic unit (ALU) scheduler/scheduling circuitry, ALU queues, address generation unit (AGU) scheduler/scheduling circuitry, AGU queues, etc. The scheduler(s) circuitry 2356 is coupled to the physical register file(s) circuitry 2358. Each of the physical register file(s) circuitry 2358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In some examples, the physical register file(s) circuitry 2358 includes vector registers unit circuitry, writemask registers unit circuitry, and scalar register unit circuitry. These register units may provide architectural vector registers, vector mask registers, general-purpose registers, etc. The physical register file(s) circuitry 2358 is coupled to the retirement unit circuitry 2354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 2354 and the physical register file(s) circuitry 2358 are coupled to the execution cluster(s) 2360. The execution cluster(s) 2360 includes a set of one or more execution unit(s) circuitry 2362 and a set of one or more memory access circuitry 2364. The execution unit(s) circuitry 2362 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 2356, physical register file(s) circuitry 2358, and execution cluster(s) 2360 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 2364). It should also be understood that where separate pipelines are used, one or more of these pipelines may be out-of-order issue/execution and the rest in-order.

In some examples, the execution engine unit circuitry 2350 may perform load store unit (LSU) address/data pipelining to an Advanced Microcontroller Bus (AMB) interface (not shown), and address phase and writeback, data phase load, store, and branches.

The set of memory access circuitry 2364 is coupled to the memory unit circuitry 2370, which includes data TLB circuitry 2372 coupled to data cache circuitry 2374 coupled to level 2 (L2) cache circuitry 2376. In some examples, the memory access circuitry 2364 may include load unit circuitry, store address unit circuitry, and store data unit circuitry, each of which is coupled to the data TLB circuitry 2372 in the memory unit circuitry 2370. The instruction cache circuitry 2334 is further coupled to the level 2 (L2) cache circuitry 2376 in the memory unit circuitry 2370. In some examples, the instruction cache 2334 and the data cache 2374 are combined into a single instruction and data cache (not shown) in L2 cache circuitry 2376, level 3 (L3) cache circuitry (not shown), and/or main memory. The L2 cache circuitry 2376 is coupled to one or more other levels of cache and eventually to a main memory.

The core 2390 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In some examples, the core 2390 includes logic to support a packed data instruction set architecture extension (e.g., AVX1, AVX2), thereby allowing the operations used by many multimedia applications to be performed using packed data.

### Example Execution Unit(s) Circuitry.

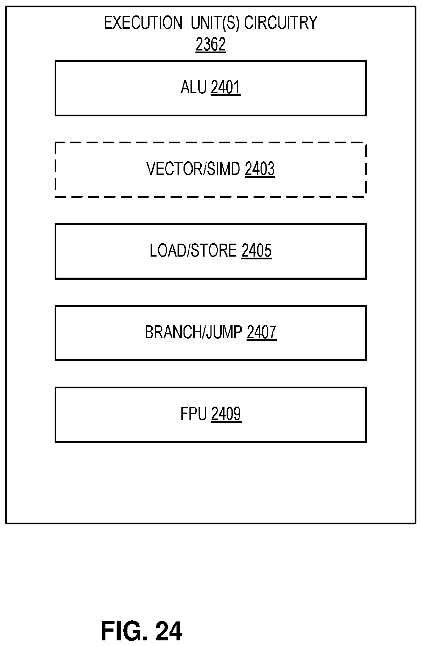

FIG. 24 illustrates examples of execution unit(s) circuitry, such as execution unit(s) circuitry 2362 of FIG. 23(B). As illustrated, execution unit(s) circuity 2362 may include one or more ALU circuits 2401, optional vector/single instruction multiple data (SIMD) circuits 2403, load/store circuits 2405, branch/jump circuits 2407, and/or Floating-point unit (FPU) circuits 2409. ALU circuits 2401 perform integer arithmetic and/or Boolean operations. Vector/SIMD circuits 2403 perform vector/SIMD operations on packed data (such as SIMD/vector registers). Load/store circuits 2405 execute load and store instructions to load data from memory into registers or store from registers to memory. Load/store circuits 2405 may also generate addresses. Branch/jump circuits 2407 cause a branch or jump to a memory address depending on the instruction. FPU circuits 2409 perform floating-point arithmetic. The width of the execution unit(s) circuitry 2362 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

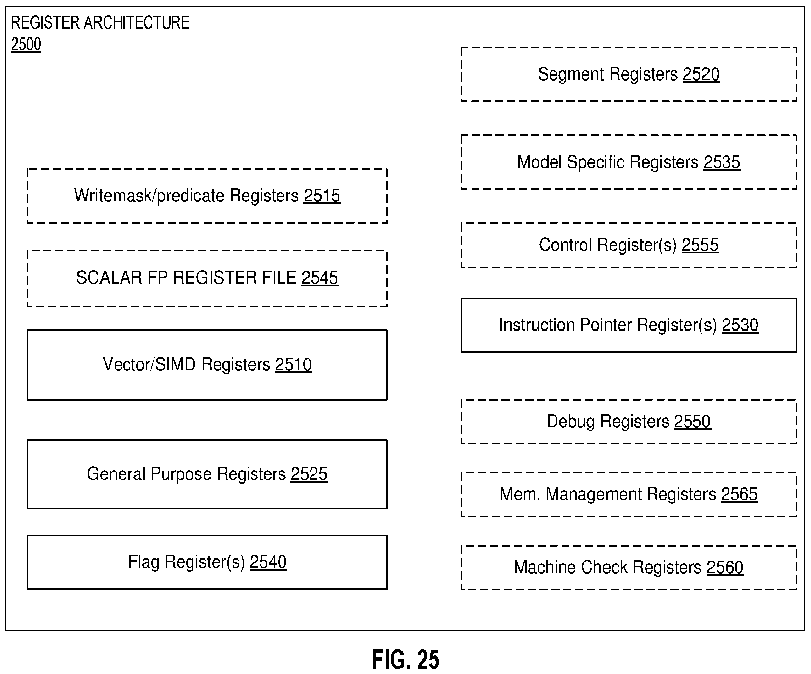

FIG. 25 is a block diagram of a register architecture 2500 according to some examples. As illustrated, the register architecture 2500 includes vector/SIMD registers 2510 that vary from 128-bit to 1,024 bits width. In some examples, the vector/SIMD registers 2510 are physically 512-bits and, depending upon the mapping, only some of the lower bits are used. For example, in some examples, the vector/SIMD registers 2510 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 2500 includes writemask/predicate registers 2515. For example, in some examples, there are 8 writemask/predicate registers (sometimes called k0 through k7) that are each 16-bit, 32-bit, 64-bit, or 128-bit in size. Writemask/predicate registers 2515 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 2515 corresponds to a data element position of the destination. In other examples, the writemask/predicate registers 2515 are scalable and consists of a set number of enable bits for a given vector element (e.g., 8 enable bits per 64-bit vector element).

The register architecture 2500 includes a plurality of general-purpose registers 2525. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 2500 includes scalar floating-point (FP) register file 2545 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 2540 (e.g., EFLAGS, RFLAGS, etc.) store status and control information for arithmetic, compare, and system operations. For example, the one or more flag registers 2540 may store condition code information such as carry, parity, auxiliary carry, zero, sign, and overflow. In some examples, the one or more flag registers 2540 are called program status and control registers.

Segment registers 2520 contain segment points for use in accessing memory. In some examples, these registers are referenced by the names CS, DS, SS, ES, FS, and GS.

Model specific registers or machine specific registers (MSRs) 2535 control and report on processor performance. Most MSRs 2535 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 2560 consist of control, status, and error reporting MSRs that are used to detect and report on hardware errors. Control register(s) 2555 (e.g., CR0-CR4) determine the operating mode of a processor (e.g., processor 1670, 1680, 1638, 1615, and/or 1700) and the characteristics of a currently executing task. In some examples, MSRs 2535 are a subset of control registers 2555.

One or more instruction pointer register(s) 2530 store an instruction pointer value. Debug registers 2550 control and allow for the monitoring of a processor or core's debugging operations.

Memory (mem) management registers 2565 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 2500 may, for example, be used in register file / memory 'ISAB08, or physical register file(s) circuitry 23 58.

### Graphics Execution Units

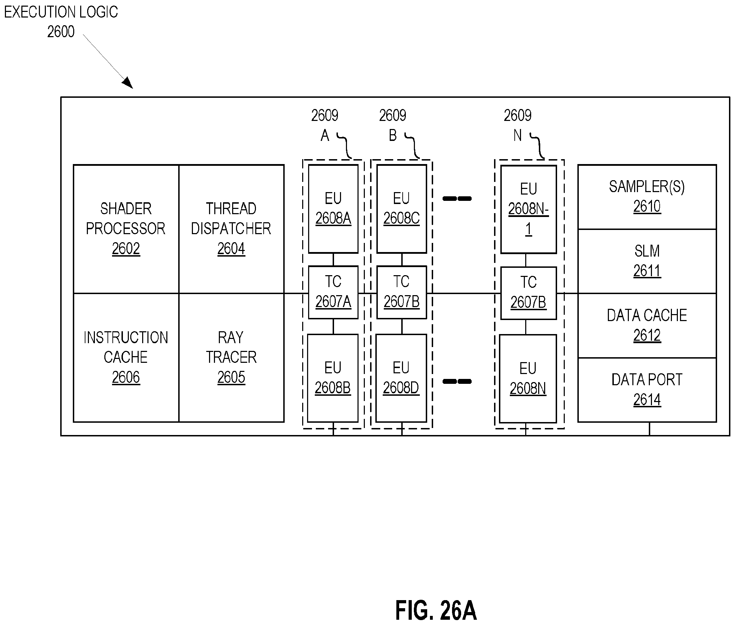

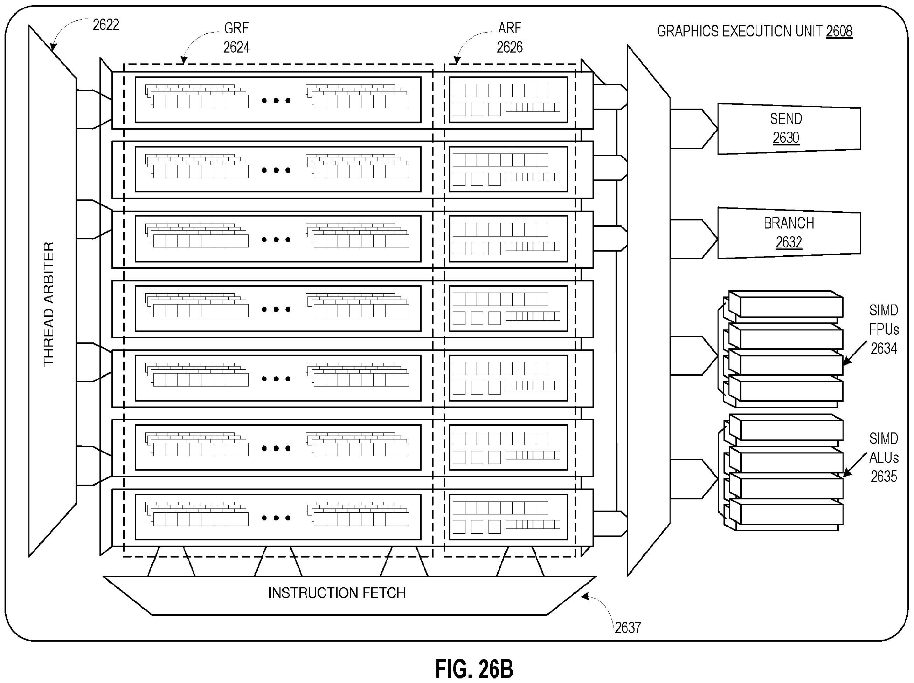

FIGS. 26A-26B illustrate thread execution logic 2600 including an array of processing elements employed in a graphics processor core according to examples described herein. Elements of FIG.s 26A-26B having the same reference numbers (or names) as the elements of any other figure herein can operate or function in any manner similar to that described elsewhere herein, but are not limited to such. FIG. 26A is representative of an execution unit within a general-purpose graphics processor, while FIG. 26B is representative of an execution unit that may be used within a compute accelerator.

As illustrated in FIG. 26A, in some examples thread execution logic 2600 includes a shader processor 2602, a thread dispatcher 2604, instruction cache 2606, a scalable execution unit array including a plurality of execution units 2608A-2608N, a sampler 2610, shared local memory 2611, a data cache 2612, and a data port 2614. In some examples the scalable execution unit array can dynamically scale by enabling or disabling one or more execution units (e.g., any of execution units 2608A, 2608B, 2608C, 2608D, through 2608N-1 and 2608N) based on the computational requirements of a workload. In some examples the included components are interconnected via an interconnect fabric that links to each of the components. In some examples, thread execution logic 2600 includes one or more connections to memory, such as system memory or cache memory, through one or more of instruction cache 2606, data port 2614, sampler 2610, and execution units 2608A-2608N. In some examples, each execution unit (e.g. 2608A) is a stand-alone programmable general-purpose computational unit that is capable of executing multiple simultaneous hardware threads while processing multiple data elements in parallel for each thread. In various examples, the array of execution units 2608A-2608N is scalable to include any number individual execution units.

In some examples, the execution units 2608A-2608N are primarily used to execute shader programs. A shader processor 2602 can process the various shader programs and dispatch execution threads associated with the shader programs via a thread dispatcher 2604. In some examples the thread dispatcher includes logic to arbitrate thread initiation requests from the graphics and media pipelines and instantiate the requested threads on one or more execution unit in the execution units 2608A-2608N. For example, a geometry pipeline can dispatch vertex, tessellation, or geometry shaders to the thread execution logic for processing. In some examples, thread dispatcher 2604 can also process runtime thread spawning requests from the executing shader programs.

In some examples, the execution units 2608A-2608N support an instruction set that includes native support for many standard 3D graphics shader instructions, such that shader programs from graphics libraries (e.g., Direct 3D and OpenGL) are executed with a minimal translation. The execution units support vertex and geometry processing (e.g., vertex programs, geometry programs, vertex shaders), pixel processing (e.g., pixel shaders, fragment shaders) and general-purpose processing (e.g., compute and media shaders). Each of the execution units 2608A-2608N is capable of multi-issue single instruction multiple data (SIMD) execution and multi-threaded operation enables an efficient execution environment in the face of higher latency memory accesses. Each hardware thread within each execution unit has a dedicated high-bandwidth register file and associated independent thread-state. Execution is multi-issue per clock to pipelines capable of integer, single and double precision floating point operations, SIMD branch capability, logical operations, transcendental operations, and other miscellaneous operations. While waiting for data from memory or one of the shared functions, dependency logic within the execution units 2608A-2608N causes a waiting thread to sleep until the requested data has been returned. While the waiting thread is sleeping, hardware resources may be devoted to processing other threads. For example, during a delay associated with a vertex shader operation, an execution unit can perform operations for a pixel shader, fragment shader, or another type of shader program, including a different vertex shader. Various examples can apply to use execution by use of Single Instruction Multiple Thread (SIMT) as an alternate to use of SIMD or in addition to use of SIMD. Reference to a SIMD core or operation can apply also to SIMT or apply to SIMD in combination with SIMT.

Each execution unit in execution units 2608A-2608N operates on arrays of data elements. The number of data elements is the "execution size," or the number of channels for the instruction. An execution channel is a logical unit of execution for data element access, masking, and flow control within instructions. The number of channels may be independent of the number of physical Arithmetic Logic Units (ALUs) or Floating Point Units (FPUs) for a particular graphics processor. In some examples, execution units 2608A-2608N support integer and floating-point data types.

The execution unit instruction set includes SIMD instructions. The various data elements can be stored as a packed data type in a register and the execution unit will process the various elements based on the data size of the elements. For example, when operating on a 256-bit wide vector, the 256 bits of the vector are stored in a register and the execution unit operates on the vector as four separate 64-bit packed data elements (Quad-Word (QW) size data elements), eight separate 32-bit packed data elements (Double Word (DW) size data elements), sixteen separate 16-bit packed data elements (Word (W) size data elements), or thirty-two separate 8-bit data elements (byte (B) size data elements). However, different vector widths and register sizes are possible.

In some examples one or more execution units can be combined into a fused execution unit 2609A-2609N having thread control logic (2607A-2607N) that is common to the fused EUs. Multiple EUs can be fused into an EU group. Each EU in the fused EU group can be configured to execute a separate SIMD hardware thread. The number of EUs in a fused EU group can vary according to examples. Additionally, various SIMD widths can be performed per-EU, including but not limited to SIMD8, SIMD16, and SIMD32. Each fused graphics execution unit 2609A-2609N includes at least two execution units. For example, fused execution unit 2609A includes a first EU 2608A, second EU 2608B, and thread control logic 2607A that is common to the first EU 2608A and the second EU 2608B. The thread control logic 2607A controls threads executed on the fused graphics execution unit 2609A, allowing each EU within the fused execution units 2609A-2609N to execute using a common instruction pointer register.

One or more internal instruction caches (e.g., 2606) are included in the thread execution logic 2600 to cache thread instructions for the execution units. In some examples, one or more data caches (e.g., 2612) are included to cache thread data during thread execution. Threads executing on the execution logic 2600 can also store explicitly managed data in the shared local memory 2611. In some examples, a sampler 2610 is included to provide texture sampling for 3D operations and media sampling for media operations. In some examples, sampler 2610 includes specialized texture or media sampling functionality to process texture or media data during the sampling process before providing the sampled data to an execution unit.

During execution, the graphics and media pipelines send thread initiation requests to thread execution logic 2600 via thread spawning and dispatch logic. Once a group of geometric objects has been processed and rasterized into pixel data, pixel processor logic (e.g., pixel shader logic, fragment shader logic, etc.) within the shader processor 2602 is invoked to further compute output information and cause results to be written to output surfaces (e.g., color buffers, depth buffers, stencil buffers, etc.). In some examples, a pixel shader orfragment shader calculates the values of the various vertex attributes that are to be interpolated across the rasterized object. In some examples, pixel processor logic within the shader processor 2602 then executes an application programming interface (API)-supplied pixel orfragment shader program. To execute the shader program, the shader processor 2602 dispatches threads to an execution unit (e.g., 2608A) via thread dispatcher 2604. In some examples, shader processor 2602 uses texture sampling logic in the sampler 2610 to access texture data in texture maps stored in memory. Arithmetic operations on the texture data and the input geometry data compute pixel color data for each geometric fragment, or discards one or more pixels from further processing.

In some examples, the data port 2614 provides a memory access mechanism for the thread execution logic 2600 to output processed data to memory for further processing on a graphics processor output pipeline. In some examples, the data port 2614 includes or couples to one or more cache memories (e.g., data cache 2612) to cache data for memory access via the data port.

In some examples, the execution logic 2600 can also include a ray tracer 2605 that can provide ray tracing acceleration functionality. The ray tracer 2605 can support a ray tracing instruction set that includes instructions/functions for ray generation.

FIG. 26B illustrates exemplary internal details of an execution unit 2608, according to examples. A graphics execution unit 2608 can include an instruction fetch unit 2637, a general register file array (GRF) 2624, an architectural register file array (ARF) 2626, a thread arbiter 2622, a send unit 2630, a branch unit 2632, a set of SIMD floating point units (FPUs) 2634, and in some examples a set of dedicated integer SIMD ALUs 2635. The GRF 2624 and ARF 2626 includes the set of general register files and architecture register files associated with each simultaneous hardware thread that may be active in the graphics execution unit 2608. In some examples, per thread architectural state is maintained in the ARF 2626, while data used during thread execution is stored in the GRF 2624. The execution state of each thread, including the instruction pointers for each thread, can be held in thread-specific registers in the ARF 2626.

In some examples the graphics execution unit 2608 has an architecture that is a combination of Simultaneous Multi-Threading (SMT) and fine-grained Interleaved Multi-Threading (IMT). The architecture has a modular configuration that can be fine-tuned at design time based on a target number of simultaneous threads and number of registers per execution unit, where execution unit resources are divided across logic used to execute multiple simultaneous threads. The number of logical threads that may be executed by the graphics execution unit 2608 is not limited to the number of hardware threads, and multiple logical threads can be assigned to each hardware thread.

In some examples, the graphics execution unit 2608 can co-issue multiple instructions, which may each be different instructions. The thread arbiter 2622 of the graphics execution unit thread 2608 can dispatch the instructions to one of the send unit 2630, branch unit 2632, or SIMD FPU(s) 2634 for execution. Each execution thread can access 128 general-purpose registers within the GRF 2624, where each register can store 32 bytes, accessible as a SIMD 8-element vector of 32-bit data elements. In some examples, each execution unit thread has access to 4 Kbytes within the GRF 2624, although examples are not so limited, and greater or fewer register resources may be provided in other examples. In some examples the graphics execution unit 2608 is partitioned into seven hardware threads that can independently perform computational operations, although the number of threads per execution unit can also vary according to examples. For example, in some examples up to 16 hardware threads are supported. In an example in which seven threads may access 4 Kbytes, the GRF 2624 can store a total of 28 Kbytes. Where 16 threads may access 4Kbytes, the GRF 2624 can store a total of 64Kbytes. Flexible addressing modes can permit registers to be addressed together to build effectively wider registers or to represent strided rectangular block data structures.

In some examples, memory operations, sampler operations, and other longer-latency system communications are dispatched via "send" instructions that are executed by the message passing send unit 2630. In some examples, branch instructions are dispatched to a dedicated branch unit 2632 to facilitate SIMD divergence and eventual convergence.

In some examples the graphics execution unit 2608 includes one or more SIMD floating point units (FPU(s)) 2634 to perform floating-point operations. In some examples, the FPU(s) 2634 also support integer computation. In some examples the FPU(s) 2634 can SIMD execute up to M number of 32-bit floating-point (or integer) operations, or SIMD execute up to 2M 16-bit integer or 16-bit floating-point operations. In some examples, at least one of the FPU(s) provides extended math capability to support high-throughput transcendental math functions and double precision 64-bit floating-point. In some examples, a set of 8-bit integer SIMD ALUs 2635 are also present, and may be specifically optimized to perform operations associated with machine learning computations.

In some examples, arrays of multiple instances of the graphics execution unit 2608 can be instantiated in a graphics sub-core grouping (e.g., a sub-slice). For scalability, product architects can choose the exact number of execution units per sub-core grouping. In some examples the execution unit 2608 can execute instructions across a plurality of execution channels. In a further example, each thread executed on the graphics execution unit 2608 is executed on a different channel.

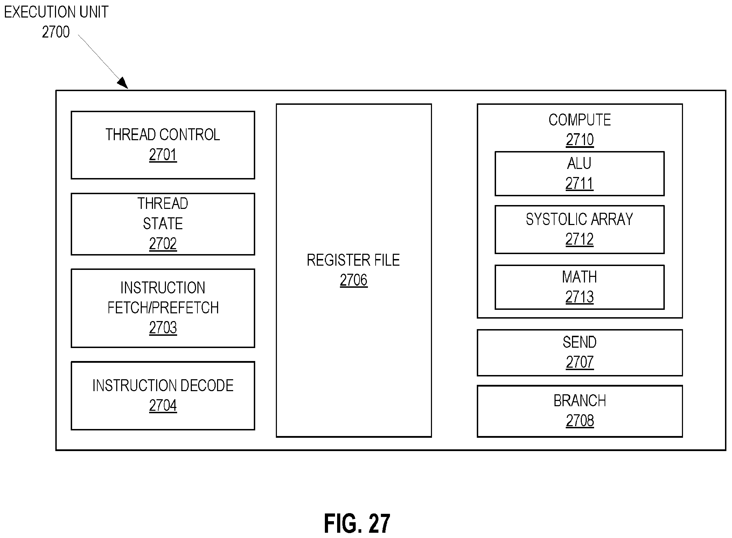

FIG. 27 illustrates an additional execution unit 2700, according to an example. In some examples, the execution unit 2700 includes a thread control unit 2701, a thread state unit 2702, an instruction fetch/prefetch unit 2703, and an instruction decode unit 2704. The execution unit 2700 additionally includes a register file 2706 that stores registers that can be assigned to hardware threads within the execution unit. The execution unit 2700 additionally includes a send unit 2707 and a branch unit 2708. In some examples, the send unit 2707 and branch unit 2708 can operate similarly as the send unit 2630 and a branch unit 2632 of the graphics execution unit 2608 of FIG. 26B.

The execution unit 2700 also includes a compute unit 2710 that includes multiple different types of functional units. In some examples the compute unit 2710 includes an ALU unit 2711 that includes an array of arithmetic logic units. The ALU unit 2711 can be configured to perform 64-bit, 32-bit, and 16-bit integer and floating point operations. Integer and floating point operations may be performed simultaneously. The compute unit 2710 can also include a systolic array 2712, and a math unit 2713. The systolic array 2712 includes a *W* wide and *D* deep network of data processing units that can be used to perform vector or other data-parallel operations in a systolic manner. In some examples the systolic array 2712 can be configured to perform matrix operations, such as matrix dot product operations. In some examples the systolic array 2712 support 16-bit floating point operations, as well as 8-bit and 4-bit integer operations. In some examples the systolic array 2712 can be configured to accelerate machine learning operations. In such examples, the systolic array 2712 can be configured with support for the bfloat 16-bit floating point format. In some examples, a math unit 2713 can be included to perform a specific subset of mathematical operations in an efficient and lower-power manner than then ALU unit 2711. The math unit 2713 can include a variant of math logic that may be found in shared function logic of a graphics processing engine provided by other examples (e.g., math logic 422 of the shared function logic 420 of FIG. 4). In some examples the math unit 2713 can be configured to perform 32-bit and 64-bit floating point operations.

The thread control unit 2701 includes logic to control the execution of threads within the execution unit. The thread control unit 2701 can include thread arbitration logic to start, stop, and preempt execution of threads within the execution unit 2700. The thread state unit 2702 can be used to store thread state for threads assigned to execute on the execution unit 2700. Storing the thread state within the execution unit 2700 enables the rapid pre-emption of threads when those threads become blocked or idle. The instruction fetch/prefetch unit 2703 can fetch instructions from an instruction cache of higher level execution logic (e.g., instruction cache 2606 as in FIG. 26A). The instruction fetch/prefetch unit 2703 can also issue prefetch requests for instructions to be loaded into the instruction cache based on an analysis of currently executing threads. The instruction decode unit 2704 can be used to decode instructions to be executed by the compute units. In some examples, the instruction decode unit 2704 can be used as a secondary decoder to decode complex instructions into constituent micro-operations.

The execution unit 2700 additionally includes a register file 2706 that can be used by hardware threads executing on the execution unit 2700. Registers in the register file 2706 can be divided across the logic used to execute multiple simultaneous threads within the compute unit 2710 of the execution unit 2700. The number of logical threads that may be executed by the graphics execution unit 2700 is not limited to the number of hardware threads, and multiple logical threads can be assigned to each hardware thread. The size of the register file 2706 can vary across examples based on the number of supported hardware threads. In some examples, register renaming may be used to dynamically allocate registers to hardware threads.

### Graphics Pipeline

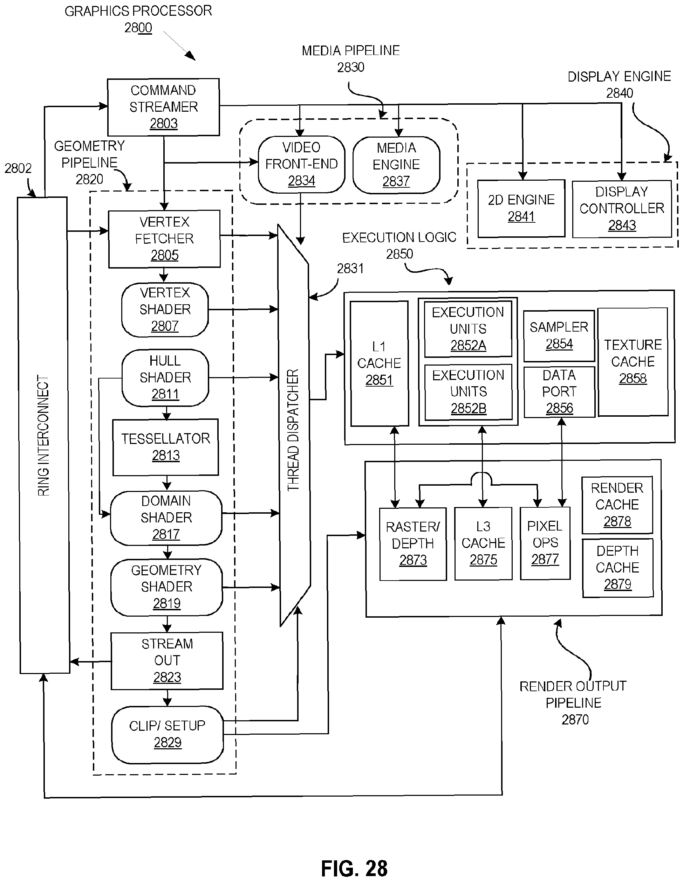

FIG. 28 is a block diagram of another example of a graphics processor 2800. Elements of FIG. 28 having the same reference numbers (or names) as the elements of any other figure herein can operate or function in any manner similar to that described elsewhere herein, but are not limited to such.

In some examples, graphics processor 2800 includes a geometry pipeline 2820, a media pipeline 2830, a display engine 2840, thread execution logic 2850, and a render output pipeline 2870. In some examples, graphics processor 2800 is a graphics processor within a multi-core processing system that includes one or more general-purpose processing cores. The graphics processor is controlled by register writes to one or more control registers (not shown) or via commands issued to graphics processor 2800 via a ring interconnect 2802. In some examples, ring interconnect 2802 couples graphics processor 2800 to other processing components, such as other graphics processors or general-purpose processors. Commands from ring interconnect 2802 are interpreted by a command streamer 2803, which supplies instructions to individual components of the geometry pipeline 2820 or the media pipeline 2830.

In some examples, command streamer 2803 directs the operation of a vertex fetcher 2805 that reads vertex data from memory and executes vertex-processing commands provided by command streamer 2803. In some examples, vertex fetcher 2805 provides vertex data to a vertex shader 2807, which performs coordinate space transformation and lighting operations to each vertex. In some examples, vertex fetcher 2805 and vertex shader 2807 execute vertex-processing instructions by dispatching execution threads to execution units 2852A-2852B via a thread dispatcher 2831.

In some examples, execution units 2852A-2852B are an array of vector processors having an instruction set for performing graphics and media operations. In some examples, execution units 2852A-2852B have an attached L1 cache 2851 that is specific for each array or shared between the arrays. The cache can be configured as a data cache, an instruction cache, or a single cache that is partitioned to contain data and instructions in different partitions.

In some examples, geometry pipeline 2820 includes tessellation components to perform hardware-accelerated tessellation of 3D objects. In some examples, a programmable hull shader 2811 configures the tessellation operations. A programmable domain shader 2817 provides back-end evaluation of tessellation output. A tessellator 2813 operates at the direction of hull shader 2811 and contains special purpose logic to generate a set of detailed geometric objects based on a coarse geometric model that is provided as input to geometry pipeline 2820. In some examples, if tessellation is not used, tessellation components (e.g., hull shader 2811, tessellator 2813, and domain shader 2817) can be bypassed.

In some examples, complete geometric objects can be processed by a geometry shader 2819 via one or more threads dispatched to execution units 2852A-2852B, or can proceed directly to the clipper 2829. In some examples, the geometry shader operates on entire geometric objects, rather than vertices or patches of vertices as in previous stages of the graphics pipeline. If the tessellation is disabled the geometry shader 2819 receives input from the vertex shader 2807. In some examples, geometry shader 2819 is programmable by a geometry shader program to perform geometry tessellation if the tessellation units are disabled.

Before rasterization, a clipper 2829 processes vertex data. The clipper 2829 may be a fixed function clipper or a programmable clipper having clipping and geometry shader functions. In some examples, a rasterizer and depth test component 2873 in the render output pipeline 2870 dispatches pixel shaders to convert the geometric objects into per pixel representations. In some examples, pixel shader logic is included in thread execution logic 2850. In some examples, an application can bypass the rasterizer and depth test component 2873 and access un-rasterized vertex data via a stream out unit 2823.

The graphics processor 2800 has an interconnect bus, interconnect fabric, or some other interconnect mechanism that allows data and message passing amongst the major components of the processor. In some examples, execution units 2852A-2852B and associated logic units (e.g., L1 cache 2851, sampler 2854, texture cache 2858, etc.) interconnect via a data port 2856 to perform memory access and communicate with render output pipeline components of the processor. In some examples, sampler 2854, caches 2851, 2858 and execution units 2852A-2852B each have separate memory access paths. In some examples the texture cache 2858 can also be configured as a sampler cache.

In some examples, render output pipeline 2870 contains a rasterizer and depth test component 2873 that converts vertex-based objects into an associated pixel-based representation. In some examples, the rasterizer logic includes a windower/masker unit to perform fixed function triangle and line rasterization. An associated render cache 2878 and depth cache 2879 are also available in some examples. A pixel operations component 2877 performs pixel-based operations on the data, though in some instances, pixel operations associated with 2D operations (e.g. bit block image transfers with blending) are performed by the 2D engine 2841, or substituted at display time by the display controller 2843 using overlay display planes. In some examples, a shared L3 cache 2875 is available to all graphics components, allowing the sharing of data without the use of main system memory.

In some examples, graphics processor media pipeline 2830 includes a media engine 2837 and a video front-end 2834. In some examples, video front-end 2834 receives pipeline commands from the command streamer 2803. In some examples, media pipeline 2830 includes a separate command streamer. In some examples, video front-end 2834 processes media commands before sending the command to the media engine 2837. In some examples, media engine 2837 includes thread spawning functionality to spawn threads for dispatch to thread execution logic 2850 via thread dispatcher 2831.

In some examples, graphics processor 2800 includes a display engine 2840. In some examples, display engine 2840 is external to processor 2800 and couples with the graphics processor via the ring interconnect 2802, or some other interconnect bus or fabric. In some examples, display engine 2840 includes a 2D engine 2841 and a display controller 2843. In some examples, display engine 2840 contains special purpose logic capable of operating independently of the 3D pipeline. In some examples, display controller 2843 couples with a display device (not shown), which may be a system integrated display device, as in a laptop computer, or an external display device attached via a display device connector.

In some examples, the geometry pipeline 2820 and media pipeline 2830 are configurable to perform operations based on multiple graphics and media programming interfaces and are not specific to any one application programming interface (API). In some examples, driver software for the graphics processor translates API calls that are specific to a particular graphics or media library into commands that can be processed by the graphics processor. In some examples, support is provided for the Open Graphics Library (OpenGL), Open Computing Language (OpenCL), and/or Vulkan graphics and compute API, all from the Khronos Group. In some examples, support may also be provided for the Direct3D library from the Microsoft Corporation. In some examples, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

### IP Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

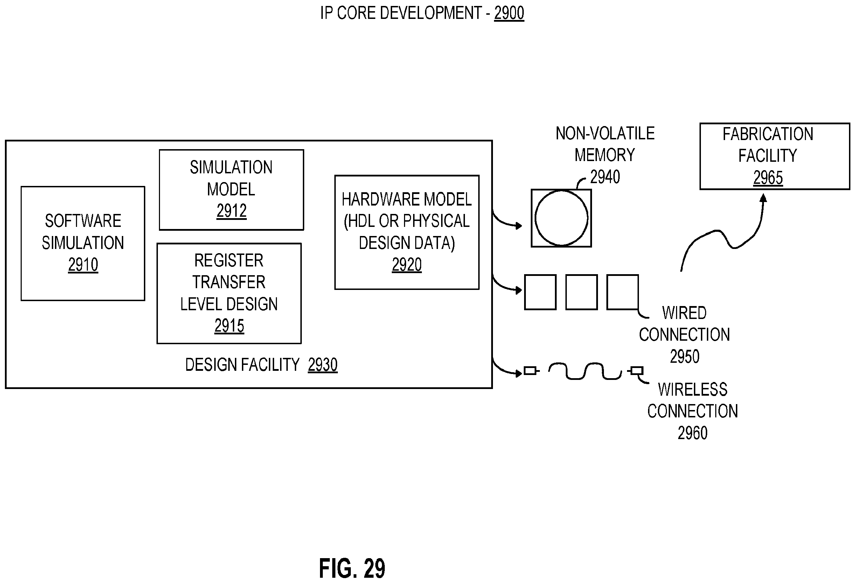

FIG. 29 is a block diagram illustrating an IP core development system 2900 that may be used to manufacture an integrated circuit to perform operations according to some examples. The IP core development system 2900 may be used to generate modular, re-usable designs that can be incorporated into a larger design or used to construct an entire integrated circuit (e.g., an SOC integrated circuit). A design facility 2930 can generate a software simulation 2910 of an IP core design in a high-level programming language (e.g., C/C++). The software simulation 2910 can be used to design, test, and verify the behavior of the IP core using a simulation model 2912. The simulation model 2912 may include functional, behavioral, and/or timing simulations. A register transfer level (RTL) design 2915 can then be created or synthesized from the simulation model 2912. The RTL design 2915 is an abstraction of the behavior of the integrated circuit that models the flow of digital signals between hardware registers, including the associated logic performed using the modeled digital signals. In addition to an RTL design 2915, lower-level designs at the logic level or transistor level may also be created, designed, or synthesized. Thus, the particular details of the initial design and simulation may vary.

The RTL design 2915 or equivalent may be further synthesized by the design facility into a hardware model 2920, which may be in a hardware description language (HDL), or some other representation of physical design data. The HDL may be further simulated or tested to verify the IP core design. The IP core design can be stored for delivery to a 3^{rd} party fabrication facility 2965 using non-volatile memory 2940 (e.g., hard disk, flash memory, or any non-volatile storage medium). Alternatively, the IP core design may be transmitted (e.g., via the Internet) over a wired connection 2950 or wireless connection 2960. The fabrication facility 2965 may then fabricate an integrated circuit that is based at least in part on the IP core design. The fabricated integrated circuit can be configured to perform operations in accordance with at least some examples described herein.

References to "some examples," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Examples include, but are not limited to:
1. An apparatus comprising:
   a first plurality of physical processing devices of a first type;
   a second plurality of physical processing devices of a second type;
   a power management unit to monitor telemetry data on the first plurality of processing devices and second plurality of processing devices and to update hardware feedback telemetry data based at least in part on the hardware telemetry data and thread runtime telemetry data to provide a hint to consolidate a task on at least one core of the second type; and
   thread runtime telemetry circuitry to maintain the hardware feedback telemetry data.
2. The apparatus of example 1, wherein hardware telemetry data of the first plurality of cores includes a number of cores of each type that are concurrently active and an operating frequency of the active cores and hardware telemetry data of the second plurality of cores is a maximum frequency, average frequency, and average concurrency.
3. The apparatus of any of examples 1-2, wherein the hint is to consolidate all energy efficiency oriented tasks on the cores for which an energy efficiency capability is a set value.
4. The apparatus of any of examples 1-2, wherein the hint is to consolidate all performance oriented tasks on the cores for which a performance capability is a set value.
5. The apparatus of any of examples 1-4, wherein the thread runtime telemetry data includes a compute type capability per class.
6. The apparatus of any of examples 1-5, wherein the thread runtime telemetry data includes a per class latency.
7. The apparatus of any of examples 1-6, wherein the thread runtime telemetry data includes a per class power value.
8. The apparatus of any of examples 1-7, wherein the hardware telemetry data includes system operating characteristics.
9. A system comprising:
   a first plurality of physical processing devices of a first type;
   a second plurality of physical processing devices of a second type;
   a power management unit to monitor thread and hardware telemetry data on the first plurality of processing devices and second plurality of processing devices and to update hardware feedback telemetry data based at least in part on the hardware telemetry data and thread runtime telemetry data to provide a hint consolidate a task on at least one core of the second type;
   thread runtime telemetry circuitry to maintain the hardware feedback telemetry data; and memory to store system software to receive the hardware feedback telemetry data.
10. The system of example 9, wherein hardware telemetry data of the first plurality of cores includes a number of cores of each type that are concurrently active and an operating frequency of the active cores and hardware telemetry data of the second plurality of cores is a maximum frequency, average frequency, and average concurrency.
11. The system of any of examples 9-10, wherein the hint is to consolidate all energy efficiency oriented tasks on the cores for which an energy efficiency capability is a set value.
12. The system of any of examples 9-10, wherein the hint is to consolidate all performance oriented tasks on the cores for which a performance capability is a set value.
13. The system of any of examples 9-12, wherein the thread runtime telemetry data includes a compute type capability per class.
14. The system of any of examples 9-13, wherein the thread runtime telemetry data includes a per class latency.
15. The system of any of examples 9-14, wherein the thread runtime telemetry data includes a per class power value.
16. A method comprising:
   monitoring hardware and thread telemetry data of cores a first plurality of physical processor cores of a first type and a second plurality of physical processor cores of a second type;
   determining to update hardware feedback telemetry data based at least in part on the monitored hardware and thread telemetry data; and
   providing a hint to an operating system using the hardware feedback telemetry data to consolidate tasks on one of core types.
17. The method of example 16, wherein the hint is to consolidate all energy efficiency oriented tasks on the cores for which an energy efficiency capability is a set value.
18. The method of example 16, wherein the hint is to consolidate all performance oriented tasks on the cores for which a performance capability is a set value.
19. The method of any of examples 16-18, wherein the thread runtime telemetry data includes a compute type capability per class.
20. The method of any of examples 16-19, wherein the thread runtime telemetry data includes a per class latency.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, Band C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
a first plurality of physical processing devices of a first type;
a second plurality of physical processing devices of a second type;
a power management unit to monitor telemetry data on the first plurality of processing devices and second plurality of processing devices and to update hardware feedback telemetry data based at least in part on the hardware telemetry data and thread runtime telemetry data to provide a hint to consolidate a task on at least one core of the second type; and
thread runtime telemetry circuitry to maintain the hardware feedback telemetry data.

2. The apparatus of claim 1, wherein the hardware telemetry data of the first plurality of cores includes a number of cores of each type that are concurrently active and an operating frequency of the active cores and hardware telemetry data of the second plurality of cores is a maximum frequency, average frequency, and average concurrency.

3. The apparatus of any of claims 1-2, wherein the hint is to consolidate all energy efficiency oriented tasks on the cores for which an energy efficiency capability is a set value.

4. The apparatus of any of claims 1-2, wherein the hint is to consolidate all performance oriented tasks on the cores for which a performance capability is a set value.

5. The apparatus of any of claims 1-4, wherein the thread runtime telemetry data includes a compute type capability per class.

6. The apparatus of any of claims 1-5, wherein the thread runtime telemetry data includes a per class latency.

7. The apparatus of any of claims 1-6, wherein the thread runtime telemetry data includes a per class power value.

8. The apparatus of any of claims 1-7, wherein the hardware telemetry data includes system operating characteristics.

9. A method comprising:
monitoring hardware and thread telemetry data of cores a first plurality of physical processor cores of a first type and a second plurality of physical processor cores of a second type;
determining to update hardware feedback telemetry data based at least in part on the monitored hardware and thread telemetry data; and
providing a hint to an operating system using the hardware feedback telemetry data to consolidate tasks on one of core types.

10. The method of claim 9, wherein the hint is to consolidate all energy efficiency oriented tasks on the cores for which an energy efficiency capability is a set value.

11. The method of claim 9, wherein the hint is to consolidate all performance oriented tasks on the cores for which a performance capability is a set value.

12. The method of any of claims 9-11, wherein the thread runtime telemetry data includes a compute type capability per class.

13. The method of any of claims 9-12, wherein the thread runtime telemetry data includes a per class latency.
